(19) Europäisches Patentamt
European Patent Office
Office européen des brevets

(11) EP 3 083 885 B1

# (12) EUROPÄISCHE PATENTSCHRIFT

(45) Veröffentlichungstag und Bekanntmachung des Hinweises auf die Patenterteilung:
**09.10.2019 Patentblatt 2019/41**

(21) Anmeldenummer: **14805180.8**

(22) Anmeldetag: **26.11.2014**

(51) Int Cl.:
***C09K 19/30*** *(2006.01)* ***C09K 19/34*** *(2006.01)*
***E06B 9/24*** *(2006.01)* ***G02F 1/1343*** *(2006.01)*
***G02F 1/1347*** *(2006.01)* ***C09K 19/60*** *(2006.01)*
***C09K 19/04*** *(2006.01)* ***G02F 1/137*** *(2006.01)*

(86) Internationale Anmeldenummer:
**PCT/EP2014/003153**

(87) Internationale Veröffentlichungsnummer:
**WO 2015/090506 (25.06.2015 Gazette 2015/25)**

## (54) FENSTER

WINDOW

FENÊTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2013 EP 13005935**
**15.01.2014 EP 14000141**

(43) Veröffentlichungstag der Anmeldung:
**26.10.2016 Patentblatt 2016/43**

(73) Patentinhaber: **Merck Patent GmbH**
**64293 Darmstadt (DE)**

(72) Erfinder:
- **JUNGE, Michael**
**64319 Pfungstadt (DE)**
- **BEYER, Andreas**
**63452 Hanau (DE)**
- **PATWAL, Ursula**
**64353 Reinheim (DE)**
- **KIRSCH, Peer**
**64342 Seeheim-Jugenheim (DE)**
- **BECK, Susann**
**64283 Darmstadt (DE)**

(56) Entgegenhaltungen:
**CN-A- 101 698 802** **CN-A- 102 344 815**
**DE-A1- 10 135 247** **US-A- 6 033 598**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 083 885 B1

## Beschreibung

Die vorliegende Erfindung betrifft ein Fenster, wie in Anspruch 1 und nachfolgend definiert, enthaltend eine Vorrichtung zur Regulierung des Lichtdurchtritts, wobei die Vorrichtung eine Schicht umfasst, die ein flüssigkristallines Material, enthaltend mindestens drei verschiedene Farbstoffverbindungen und eine Verbindung mit einem charakteristischen Strukturelement, enthält.

Unter dem Begriff Licht wird im Rahmen der vorliegenden Erfindung insbesondere elektromagnetische Strahlung im UV-A-, VIS-, sowie NIR-Bereich verstanden. Nochmals insbesondere wird darunter Licht einer Wellenlänge verstanden, welche von den üblicherweise in Fenstern verwendeten Materialien (z. B. Glas) nicht oder nur geringfügig absorbiert wird. Gemäß den üblicherweise verwendeten Definitionen wird unter dem UV-A-Bereich eine Wellenlänge von 320 bis 380 nm verstanden, unter dem VIS-Bereich eine Wellenlänge von 380 nm bis 780 nm verstanden und unter dem NIR-Bereich eine Wellenlänge von 780 nm bis 2000 nm verstanden.

Bevorzugt wird unter dem Licht, dessen Durchtritt von der erfindungsgemäßen Vorrichtung reguliert wird, Tageslicht verstanden. Tageslicht stellt Licht dar, welches von der Sonne ausgeht. Tageslicht geht bevorzugt direkt von der Sonne aus. Es kann jedoch auch über Spiegelung, Brechung, oder über Absorption und anschließende Emission durch beliebige Materialien indirekt von der Sonne ausgehen.

Unter einem flüssigkristallinen Material wird im Rahmen der vorliegenden Erfindung ein Material verstanden, das unter bestimmten Bedingungen flüssigkristalline Eigenschaften aufweist. Der Terminus flüssigkristalline Eigenschaften ist dem Fachmann geläufig und wird so verstanden wie auf dem Gebiet der physikalischen Chemie üblich. Im engeren Sinne wird darunter verstanden, dass das Material flüssig ist und richtungsabhängige Eigenschaften aufweist. Typischerweise sind die flüssigkristallinen Eigenschaften von der Temperatur abhängig. Im engeren Sinne wird daher unter einem flüssigkristallinen Material ein Material verstanden, das in einem Temperaturbereich, der die Raumtemperatur einschließt, flüssigkristalline Eigenschaften aufweist.

US 6,033,598 beschreibt farbstoffdotierte Flüssigkristallzusammensetzungen zur Verwendung in Gast-Wirt-Flüssigkristallanzeigen. Weitere farbstoffdotierte Flüssigkristallzusammensetzungen sind in CN 101698802 beschrieben.

Vorrichtungen zur Regulierung des Lichtdurchtritts sind Schaltvorrichtungen, welche eine Fläche bedecken und den Durchtritt von Licht durch diese Fläche abhängig von ihrem Schaltzustand mehr oder weniger hindern.

Derartige Vorrichtungen können auf verschiedenen Mechanismen beruhen und können beispielsweise thermisch oder elektrisch schaltbar sein. Ein Beispiel für eine elektrisch schaltbare Vorrichtung zur Regulierung des Lichtdurchtritts ist in WO 2009/141295 und in den Anmeldungen WO 2014/090367 und WO 2014/090373 offenbart.

Die dort beschriebenen Vorrichtungen weisen eine Schicht enthaltend ein flüssigkristallines Material auf, wobei das flüssigkristalline Material mindestens eine Farbstoffverbindung und mindestens ein Hostmaterial aufweist. Das Hostmaterial ist eine Mischung aus unterschiedlichen flüssigkristallinen Verbindungen.

Auch wenn die im oben genannten Stand der Technik offenbarten Vorrichtungen gut brauchbar sind und zufriedenstellende Eigenschaften aufweisen, besteht weiterhin Bedarf an alternativen Vorrichtungen. Insbesondere besteht Bedarf an Vorrichtungen, welche eine hohe Stabilität der Schicht enthaltend das flüssigkristalline Material und damit eine lange Lebensdauer haben. Insbesondere ist es erwünscht, dass das flüssigkristalline Material enthaltend den Farbstoff eine stabile Lösung darstellt, und/oder dass keine Kristallisation oder Bildung neuer Phasen im flüssigkristallinen Material, besonders bei tiefen Temperaturen, auftritt. Weiterhin ist es erwünscht, dass das flüssigkristalline Material der Vorrichtung eine hohe Anisotropie der Absorption aufweist.

Im Rahmen der vorliegenden Erfindung wurde nun überraschend gefunden, dass bei Verwendung eines flüssigkristallinen Materials in der Vorrichtung, das einen Klärpunkt von mindestens 95°C aufweist, und das die unten abgebildeten charakteristischen Strukturmerkmale aufweist, Vorrichtungen mit sehr langer Lebensdauer und hoher Stabilität gegenüber niedrigen Temperaturen erhalten werden.

Die erfindungsgemäßen flüssigkristallinen Materialien enthaltend mindestens drei verschiedene Farbstoffverbindungen zeichnen sich durch eine oder mehrere, bevorzugt alle der im folgenden genannten Eigenschaften aus: hohe Löslichkeit der Farbstoffverbindung, hohe Langzeitstabilität der Lösung bei Raumtemperatur und bei tiefen Temperaturen, und ein hoher Anisotropiegrad der Absorption.

Gegenstand der vorliegenden Erfindung ist daher ein Fenster, enthaltend eine Vorrichtung zur Regulierung des Lichtdurchtritts, die dadurch gekennzeichnet ist, dass sie eine Schicht enthaltend ein flüssigkristallines Material enthaltend mindestens drei verschiedene Farbstoffverbindungen aufweist, wobei das flüssigkristalline Material einen Klärpunkt von mindestens 95°C hat und mindestens eine Verbindung V enthält, die mindestens eine Einheit gewählt aus Einheiten der Formeln (E-1), (E-2) und (E-3) umfasst

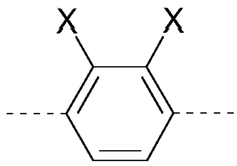

Formel (E-1)

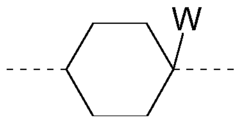

Formel (E-2)

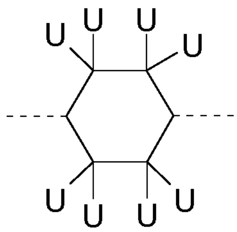

Formel (E-3),

wobei

X bei jedem Auftreten gleich oder verschieden gewählt ist aus F, Cl, Br, I,-CN, -NCO, -NCS, -SCN, -OCN, -NC, -CNO, -CNS und $N_3$;

W bei jedem Auftreten gleich oder verschieden gewählt ist aus F, Cl, Br, I, -CN, -NCO, -NCS, -SCN, -OCN, -NC, -CNO, -CNS und $N_3$;

U bei jedem Auftreten gleich oder verschieden gewählt ist aus H, F, Cl, Br, I, CN, -NCO, -NCS, -SCN, -OCN, -NC, -CNO, -CNS, $N_3$, und einer Alkyl-, Alkoxy- oder Alkylthiogruppe mit 1 bis 10 C-Atomen, wobei ein oder mehrere Wasserstoffatome in der Alkyl-, Alkoxy- oder Alkylthiogruppe durch F oder Cl ersetzt sein können, und wobei eine oder mehrere $CH_2$-Gruppen in der Alkyl-, Alkoxy- oder Alkylthiogruppe durch O oder S ersetzt sein können;

gestrichelte Linien Bindungen an den Rest der Verbindung symbolisieren,

und mindestens eine Gruppe U je Einheit der Formel (E-3) gewählt ist aus F, Cl, Br, I, CN, -NCO, -NCS, -SCN, -OCN, -NC, -CNO, -CNS und $N_3$,

und ferner eine oder mehrere Verbindungen der in Anspruch 1 und nachfolgend definierten Formel (F-1) enthält.

Bevorzugt ist X bei jedem Auftreten gleich oder verschieden gewählt aus F und -CN.

Bevorzugt ist W gleich -CN.

Bevorzugt sind höchstens vier Gruppen U je Einheit der Formel (E-3) gewählt aus F, Cl, Br, I, CN, -NCO, -NCS, -SCN, -OCN, -NC, -CNO, -CNS und $N_3$, besonders bevorzugt höchstens zwei. Ganz besonders bevorzugt ist genau eine Gruppe U je Einheit der Formel (E-3) gewählt aus F, Cl, Br, I, CN, -NCO, -NCS, -SCN, -OCN, -NC, -CNO, -CNS und $N_3$. Weiterhin und bevorzugt in Kombination mit dieser bevorzugten Ausführungsform sind die verbleibenden Gruppen U in der Einheit der Formel (E-3) gleich H.

Bevorzugt ist U bei jedem Auftreten gleich oder verschieden gewählt aus H, F und CN.

Weiterhin ist es bevorzugt, dass die Verbindung V mindestens eine Einheit der Formel (E-1) enthält, besonders bevorzugt genau eine Einheit der Formel (E-1).

Es ist bevorzugt, dass die Verbindung V mindestens eine Einheit der Formel (E-2) enthält, besonders bevorzugt

genau eine Einheit der Formel (E-2).

Weiterhin ist es bevorzugt, dass die Verbindung V genau eine Einheit gewählt aus Einheiten der Formel (E-1),(E-2) und (E-3) enthält. Besonders bevorzugt enthält die Verbindung V genau eine Einheit gewählt aus Einheiten der Formel (E-1) und (E-2).

Bevorzugte Ausführungsformen der Einheit der Formel (E-1) sind die im Folgenden genannten Einheiten der Formeln (E-1-1) bis (E-1-3)

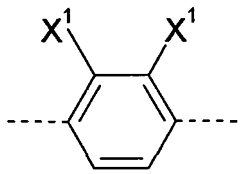

Formel (E-1-1)

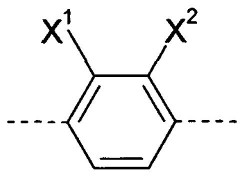

Formel (E-1-2)

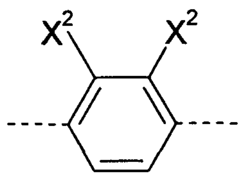

Formel (E-1-3),

wobei die gestrichelten Linien Bindungen an den Rest der Verbindung bezeichnen und weiterhin gilt:

$X^1$ ist bei jedem Auftreten gleich oder verschieden gewählt aus F, Cl, Br und I; und

$X^2$ ist bei jedem Auftreten gleich oder verschieden gewählt aus - CN, -NCO, -NCS, -SCN, -OCN, -NC, -CNO, -CNS und $N_3$.

$X^1$ ist bevorzugt gleich F.

$X^2$ ist bevorzugt gleich CN.

Besonders bevorzugte Ausführungsformen der Einheit der Formel (E-1) sind die im Folgenden genannten Einheiten der Formeln (E-1-1a) bis (E-1-3a)

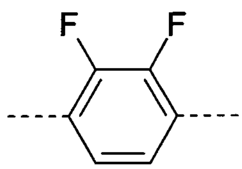

Formel (E-1-1a)

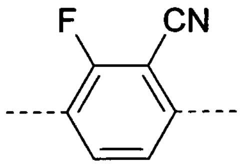

Formel (E-1-2a)

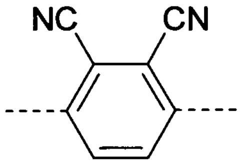

Formel (E-1-3a),

wobei die gestrichelten Linien Bindungen an den Rest der Verbindung bezeichnen.

Eine bevorzugte Ausführungsform der Einheit der Formel (E-2) ist die folgende Einheit der Formel (E-2-1)

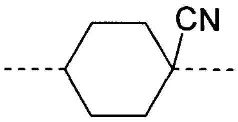

Formel (E-2-1),

wobei die gestrichelten Linien Bindungen an den Rest der Verbindung bezeichnen.

Eine bevorzugte Ausführungsform der Einheit der Formel (E-3) ist die folgende Einheit der Formel (E-3-1)

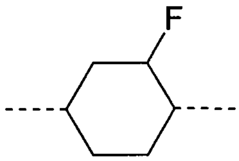

Formel (E-3-1),

wobei die gestrichelten Linien Bindungen an den Rest der Verbindung bezeichnen.

Die Verbindung V weist bevorzugt eine Struktur gemäß der folgenden Formel auf

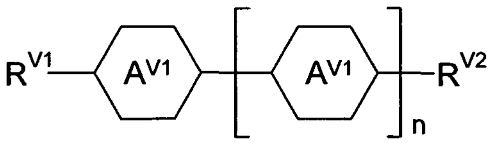

Formel (V),

wobei

$R^{V1}$,$R^{V2}$ bei jedem Auftreten gleich oder verschieden eine Alkyl- oder Alkoxygruppe mit 1 bis 10 C-Atomen oder eine

Alkenyl- oder Alkenyloxygruppe mit 2 bis 10 C-Atomen darstellt, wobei ein oder mehrere Wasserstoffatome in den oben genannten Gruppen durch F oder Cl ersetzt sein können, und eine oder mehrere $CH_2$-Gruppen durch O oder S ersetzt sein können;

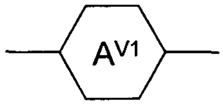

bei jedem Auftreten gleich oder verschieden ausgewählt ist aus den folgenden Gruppen

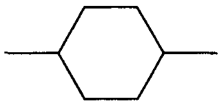 , 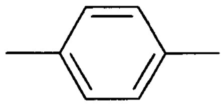 , 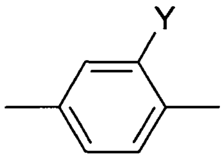 , 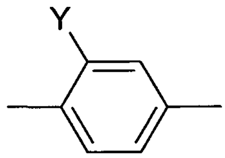 ,

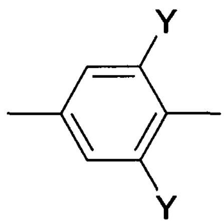 ,

oder Einheiten der Formel (E-1), (E-2) oder (E-3);

Y bei jedem Auftreten gleich oder verschieden gewählt ist aus F, Cl, CN, und Alkyl-, Alkoxy- oder Alkylthiogruppen mit 1 bis 10 C-Atomen, wobei ein oder mehrere Wasserstoffatome in den Alkyl-, Alkoxy- oder Alkylthiogruppen durch F oder Cl ersetzt sein können, und wobei eine oder mehrere $CH_2$-Gruppen in den Alkyl-, Alkoxy- oder Alkylthiogruppen durch O oder S ersetzt sein können;

n gleich 1, 2 oder 3 ist; und

wobei mindestens eine der Gruppen

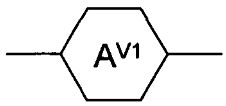

gewählt ist aus Einheiten der Formel (E-1), (E-2) oder (E-3).

Bevorzugt liegen die Einheiten der Formel (E-1) bzw. (E-2) bzw. (E-3) dabei in ihren bevorzugten Ausführungsformen vor, insbesondere in den Ausführungsformen entsprechend Formel (E-1-1a), (E-1-2a), (E-1-3a),(E-2-1) und (E-3-1).

Bevorzugt enthält die Verbindung der Formel (V) genau eine Einheit gewählt aus Einheiten der Formel (E-1),(E-2) und (E-3), besonders bevorzugt genau eine Einheit gewählt aus Einheiten der Formel (E-1) und (E-2).

In Formel (V) ist der Index n bevorzugt gleich 1 oder 2. Ringe

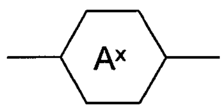 ,

beispielsweise

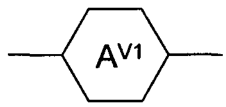

,

werden in der vorliegenden Anmeldung zur Verbesserung der Lesbarkeit im Fließtext als "$A^x$", beispielsweise "$A^{V1}$", abgekürzt.

Bevorzugt ist $A^{V1}$ bei jedem Auftreten gleich oder verschieden gewählt aus

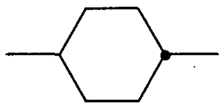

,

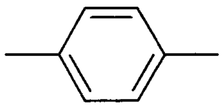

,

und Einheiten der Formel (E-1-1a), (E-1-2a), (E-1-3a), (E-2-1) und (E-3-1).

Bevorzugte Ausführungsformen der Verbindung V entsprechen den folgenden Formeln (V-1) bis (V-8)

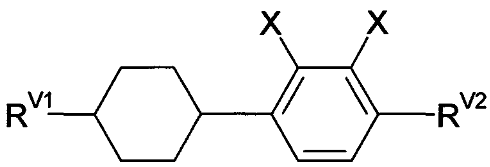

Formel (V-1)

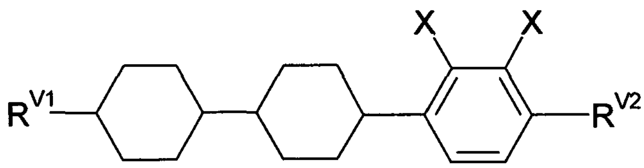

Formel (V-2)

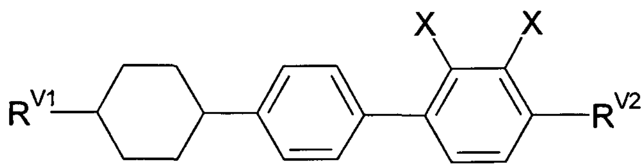

Formel (V-3)

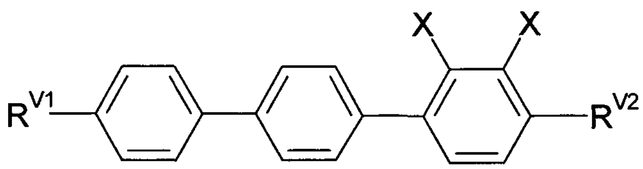

Formel (V-4)

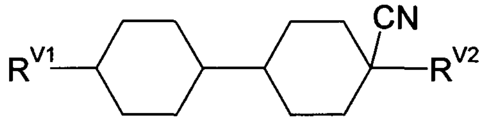

Formel (V-5)

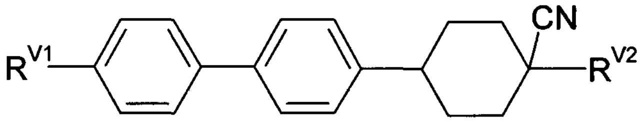

Formel (V-6)

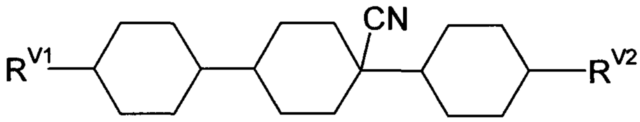

Formel (V-7)

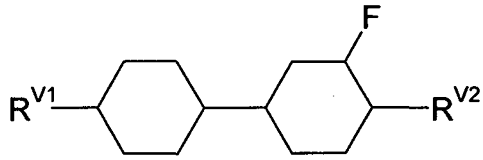

Formel (V-8),

wobei $R^{V1}$ und $R^{V2}$ und X definiert sind wie oben angegeben.

Bevorzugt sind für Verbindungen der Formeln (V-1) bis (V-8) die Gruppen $R^{V1}$ und $R^{V2}$ bei jedem Auftreten gleich oder verschieden gewählt aus Alkyl- oder Alkoxygruppen mit 1 bis 10 C-Atomen.

Bevorzugt ist für Verbindungen der Formeln (V-1) bis (V-4) die Gruppe X bei jedem Auftreten gleich oder verschieden gewählt aus F und CN. Besonders bevorzugt ist sie gleich F.

Das flüssigkristalline Material hat bevorzugt einen Klärpunkt von mindestens 100°C, besonders bevorzugt einen Klärpunkt von mindestens 105°C.

Weiterhin ist es bevorzugt, dass das flüssigkristalline Material mindestens in einem Temperaturbereich von -20°C bis 100°C, besonders bevorzugt mindestens in einem Temperaturbereich von -30°C bis 100°C, ganz besonders bevorzugt mindestens in einem Temperaturbereich von -40°C bis 105°C und am stärksten bevorzugt mindestens in einem Temperaturbereich von -50°C bis 105°C, nematisch flüssigkristallin ist.

Weiterhin ist es bevorzugt, dass das flüssigkristalline Material eine dielektrische Anisotropie $\Delta\varepsilon$ von -2 bis -10, bevorzugt von -3 bis -8, besonders bevorzugt von -4 bis -7 aufweist. Messverfahren für die dielektrische Anisotropie sind in den Ausführungsbeispielen angegeben.

Weiterhin bevorzugt hat das flüssigkristalline Material eine optische Anisotropie $\Delta n$ von 0.01 bis 0.3, besonders bevorzugt von 0.03 bis 0.20. Messverfahren für die optische Anisotropie sind in den Ausführungsbeispielen angegeben.

Weiterhin stellt das flüssigkristalline Material bevorzugt eine Mischung verschiedener organischer Verbindungen dar, die ihrerseits bevorzugt flüssigkristalline Eigenschaften aufweisen. Besonders bevorzugt enthält das flüssigkristalline Material 8 bis 30 verschiedene organische Verbindungen, ganz besonders bevorzugt 10 bis 25 verschiedene organische Verbindungen.

Die genannten organischen Verbindungen weisen bevorzugt eine langgestreckte Form auf, d.h. sie weisen in einer der drei Raumrichtungen eine deutlich größere Ausdehnung auf als in den beiden anderen Raumrichtungen.

Dem Fachmann sind eine Vielzahl von organischen Verbindungen bekannt, die diese Eigenschaften aufweisen. Besonders bevorzugt sind als Bestandteile des flüssigkristallinen Materials gemäß der vorliegenden Erfindung organische Verbindungen, die aus einer para-Verknüpfung von zwei oder mehr, bevorzugt zwei, drei oder vier Sechsringen, insbesondere Cyclohexanringen, Cyclohexenringen, Benzolringen, Pyridinringen, Pyrimidinringen und Tetrahydropyranringen, resultieren.

Die Verbindung V stellt bevorzugt eine solche, wie oben beschriebene organische Verbindung dar. Bevorzugt

enthält das flüssigkristalline Material eine bis zwanzig Verbindungen V mit jeweils unterschiedlicher Struktur, besonders bevorzugt 5 bis 15 Verbindungen V mit jeweils unterschiedlicher Struktur.

Bevorzugt sind im flüssigkristallinen Material eine oder mehrere Verbindungen der folgenden Formel (F) enthalten

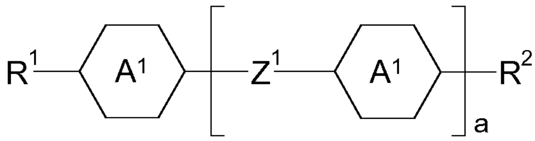

Formel (F)

wobei

$R^1$,$R^2$ bei jedem Auftreten gleich oder verschieden F, Cl, -CN, -NCS, -SCN, $R^3$-O-CO-, $R^3$-CO-O- oder eine Alkyl- oder Alkoxygruppe mit 1 bis 10 C-Atomen oder eine Alkenyl- oder Alkenyloxygruppe mit 2 bis 10 C-Atomen darstellt, wobei ein oder mehrere Wasserstoffatome in den oben genannten Gruppen durch F oder Cl ersetzt sein können, und eine oder mehrere $CH_2$-Gruppen durch O oder S ersetzt sein können; und

$R^3$ bei jedem Auftreten gleich oder verschieden eine Alkylgruppe mit 1 bis 10 C-Atomen darstellt, bei der ein oder mehrere Wasserstoffatome durch F oder Cl ersetzt sein können, und bei der eine oder mehrere $CH_2$-Gruppen durch O oder S ersetzt sein können; und

$A^1$ bei jedem Auftreten gleich oder verschieden ausgewählt ist aus einer der folgenden Gruppen

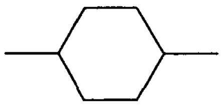 , 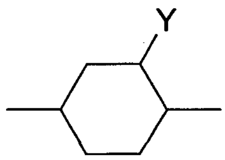 , 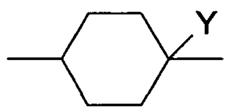 , 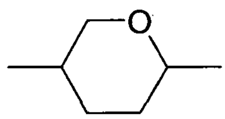 ,

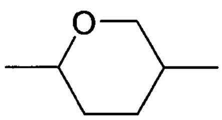 , 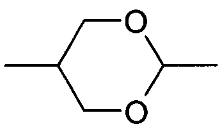 , 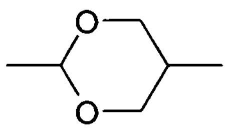 , 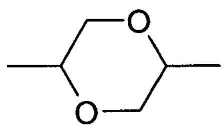 ,

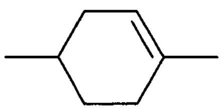 , 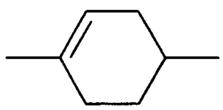 , 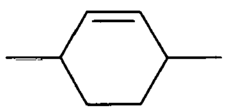 , 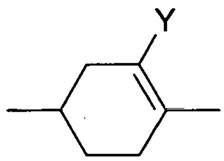 ,

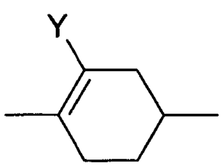 , 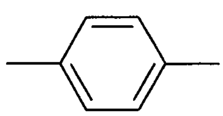 , 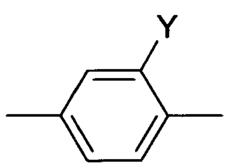 , 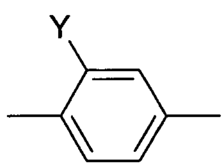 ,

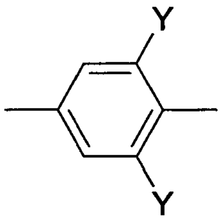 , 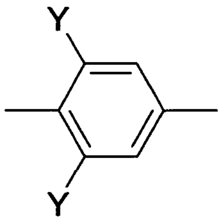 , 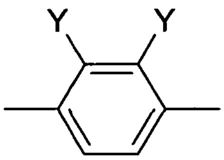 , 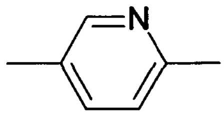 ,

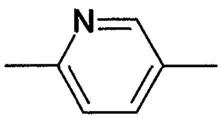 , 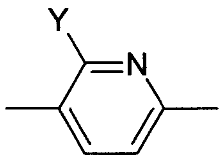 , 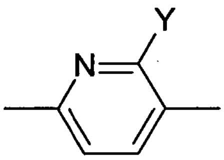 , 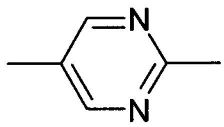 ,

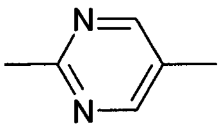 , 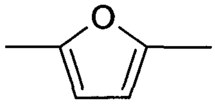 , 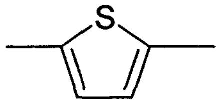 ,

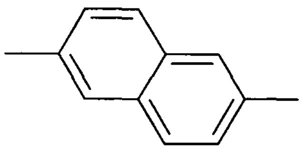 , 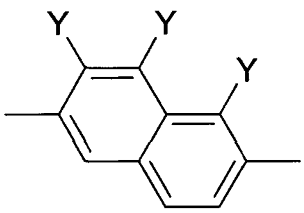 , 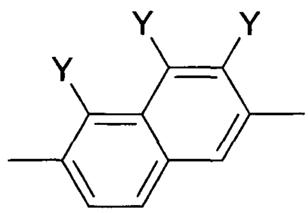 ,

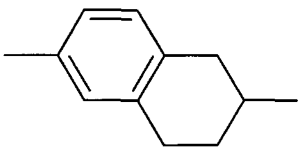 , 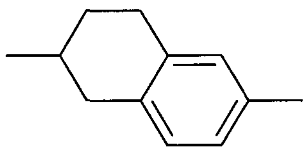 , 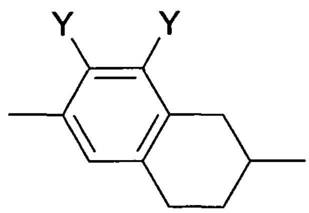 ,

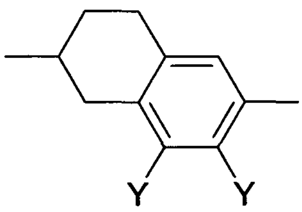 , 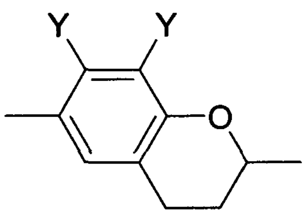 , 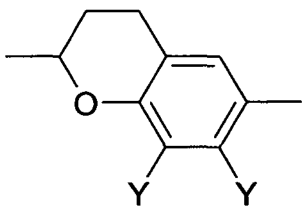 ,

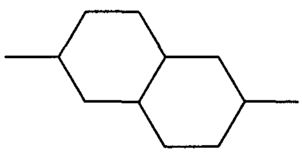 , 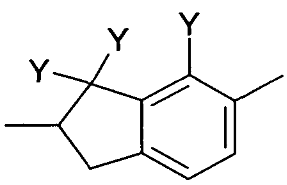 , 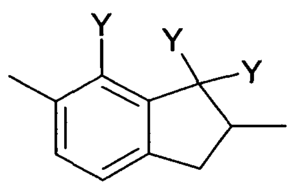 ,

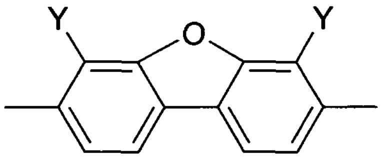 , und 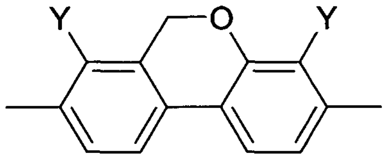 ,

wobei

Y bei jedem Auftreten gleich oder verschieden ausgewählt ist aus F, Cl, CN, und Alkyl-, Alkoxy- oder Alkylthiogruppen mit 1 bis 10 C-Atomen, wobei ein oder mehrere Wasserstoffatome in den Alkyl-, Alkoxy- oder Alkylthiogruppen durch F oder Cl ersetzt sein können, und wobei eine oder mehrere $CH_2$-Gruppen in den Alkyl-, Alkoxy- oder Alkylthiogruppen durch O oder S ersetzt sein können; und

$Z^1$ bei jedem Auftreten gleich oder verschieden ausgewählt ist aus -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$, $-CH_2O-$, und einer Einfachbindung; und

a einen Wert von 0, 1, 2, 3, 4, 5 oder 6 hat, bevorzugt 0, 1, 2 oder 3, besonders bevorzugt 1, 2 oder 3.

Bevorzugt enthält das flüssigkristalline Material keine Verbindungen enthaltend Siloxangruppen, besonders bevorzugt keine Verbindungen enthaltend Silizium.

Weiterhin ist es bevorzugt, dass das flüssigkristalline Material einen Gesamtanteil von Verbindungen V von mindestens 40 Gew.-% aufweist, besonders bevorzugt von mindestens 50 Gew.-%, ganz besonders bevorzugt von mindestens 60 Gew.-%, und am stärksten bevorzugt von mindestens 70 Gew.-%.

Erfindungsgemäß umfasst das flüssigkristalline Material eine oder mehrere Verbindungen, die der Formel (F-1)entsprechen

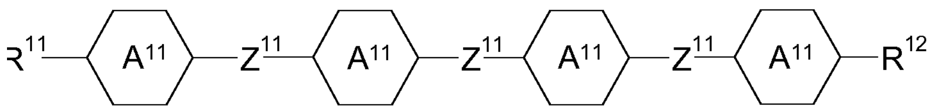 (F-1)

wobei

$R^{11}$, $R^{12}$ bei jedem Auftreten gleich oder verschieden F, Cl, -CN, -NCS, -SCN, $R^3$-O-CO-, $R^3$-CO-O- oder eine Alkyl- oder Alkoxygruppe mit 1 bis 10 C-Atomen oder eine Alkenyl- oder Alkenyloxygruppe mit 2 bis 10 C-Atomen darstellt, wobei ein oder mehrere Wasserstoffatome in den oben genannten Gruppen durch F oder Cl ersetzt sein können, und eine oder mehrere $CH_2$-Gruppen durch O oder S ersetzt sein können; und

$R^3$ bei jedem Auftreten gleich oder verschieden eine Alkylgruppe mit 1 bis 10 C-Atomen darstellt, bei der ein oder mehrere Wasserstoffatome durch F oder Cl ersetzt sein können, und bei der eine oder mehrere $CH_2$-Gruppen durch O oder S ersetzt sein können;

$Z^{11}$ bei jedem Auftreten gleich oder verschieden ausgewählt ist aus -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$, $-CH_2O-$, und einer Einfachbindung; und

$A^{11}$ bei jedem Auftreten gleich oder verschieden ausgewählt ist aus den folgenden Gruppen

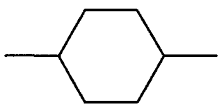 , 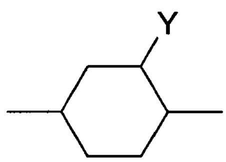 , 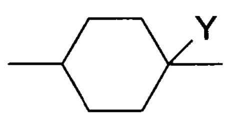 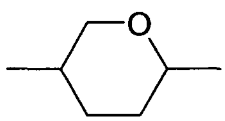 ,

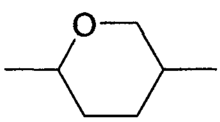 , 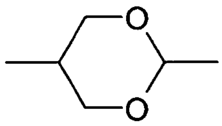 , 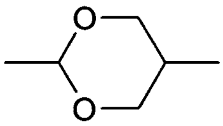 , 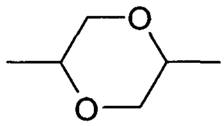 ,

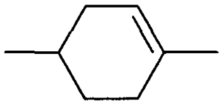 , 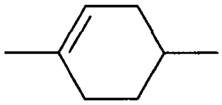 , 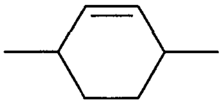 , 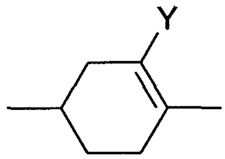 ,

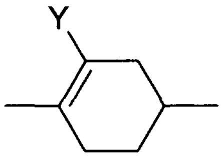 , 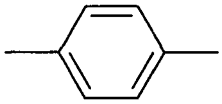 , 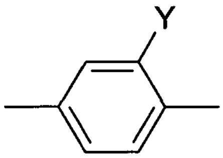 , 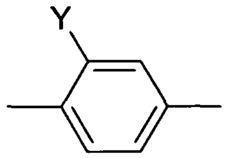 ,

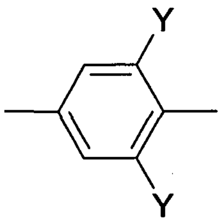 , 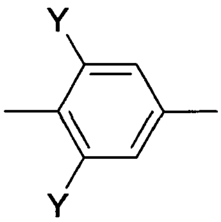 , 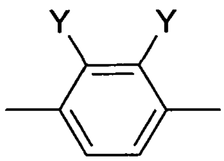 , 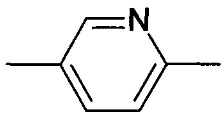 ,

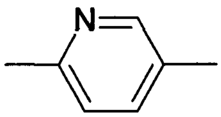 , 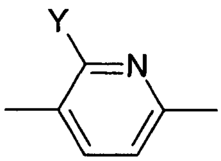 , 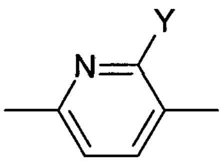 , 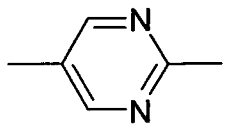 ,

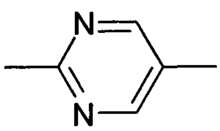 , 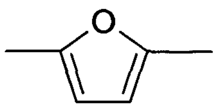 , 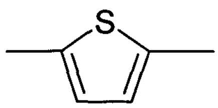 ,

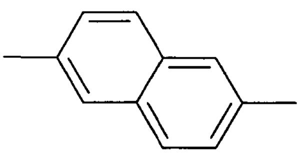 , 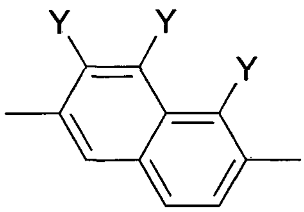 , 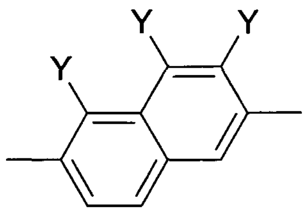 ,

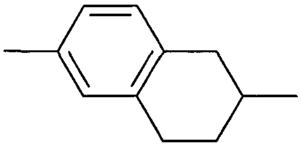 , 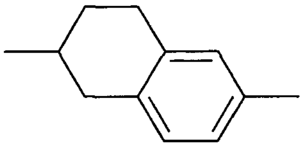 , 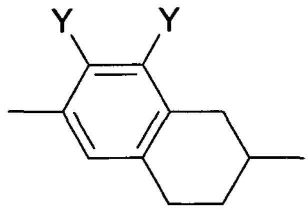 ,

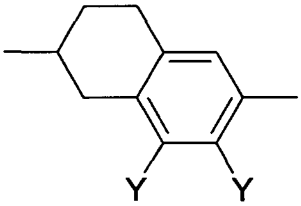 , 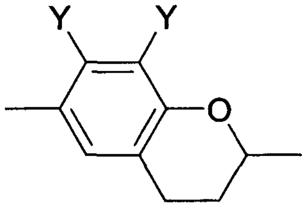 , 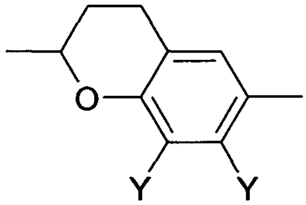 ,

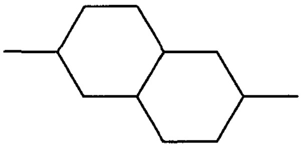 , 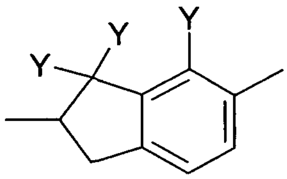 , 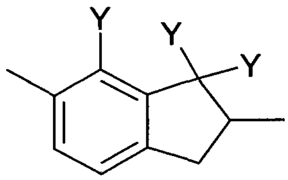 ,

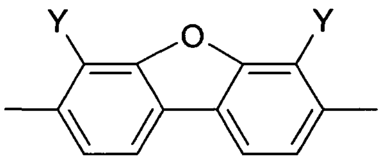 , und 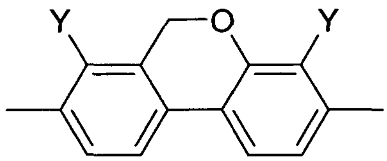 ,

wobei

Y bei jedem Auftreten gleich oder verschieden gewählt ist aus F, Cl, CN, und Alkyl-, Alkoxy- oder Alkylthiogruppen mit 1 bis 10 C-Atomen, wobei ein oder mehrere Wasserstoffatome in den Alkyl-, Alkoxy- oder Alkylthiogruppen durch F oder Cl ersetzt sein können, und wobei eine oder mehrere $CH_2$-Gruppen in den Alkyl-, Alkoxy- oder Alkylthiogruppen durch O oder S ersetzt sein können.

$R^{11}$, $R^{12}$ sind bevorzugt bei jedem Auftreten gleich oder verschieden Alkylgruppen mit 1 bis 10 C-Atomen.

$Z^{11}$ ist bevorzugt bei jedem Auftreten gleich oder verschieden ausgewählt aus -CO-O-, -O-CO- und einer Einfachbindung.

$A^{11}$ ist bevorzugt bei jedem Auftreten gleich oder verschieden gewählt aus

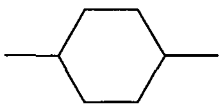 , 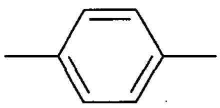 , 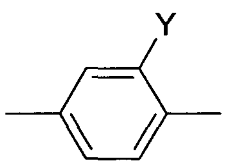 , und 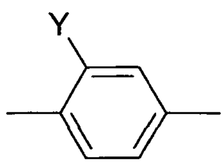

, wobei
Y definiert ist wie oben und bevorzugt gleich F oder CN ist.

Besonders bevorzugte Verbindungen der Formel (F-1) entsprechen den folgenden Formeln

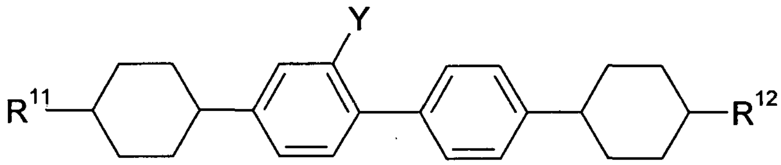

Formel (F-1-1)

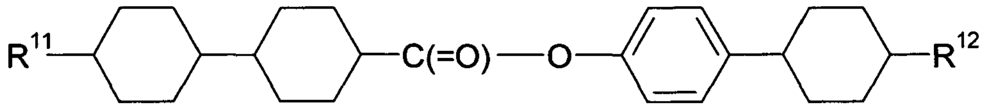

Formel (F-1-2)

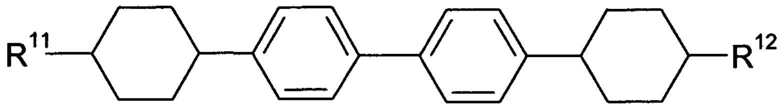

Formel (F-1-3)

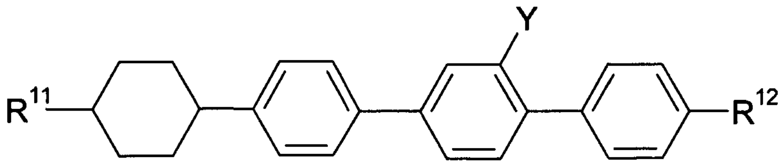

Formel (F-1-4),

wobei Y definiert ist wie oben und bevorzugt gleich F ist.

Das flüssigkristalline Material enthält bevorzugt in einem Gesamtanteil von 0 Gew.-% bis 30 Gew.-%, besonders bevorzugt 5 Gew.-% bis 25 Gew.-% und ganz besonders bevorzugt 10 Gew.-% bis 20 Gew.-% Verbindung(en) der Formel (F-1).

Bevorzugt enthält das flüssigkristalline Material mindestens eine Verbindung V, welche eine Einheit der Formel (E-2) umfasst, und mindestens eine Verbindung der Formel (F-1). Bevorzugt enthält das flüssigkristalline Material in einem Gesamtanteil von mindestens 10 Gew.-%, besonders bevorzugt von mindestens 20 Gew.-%, ganz besonders bevorzugt von mindestens 30 Gew.-%, stärker bevorzugt von mindestens 40 Gew.-% und am stärksten bevorzugt von mindestens 50 Gew.-%, Verbindungen, die gewählt sind aus Verbindung(en) V, welche mindestens eine Einheit der Formel (E-2) umfassen, und Verbindung(en) der Formel (F-1).

Weiterhin ist es bevorzugt, dass das flüssigkristalline Material eine oder mehrere Verbindungen umfasst, die der Formel (F-2) entsprechen

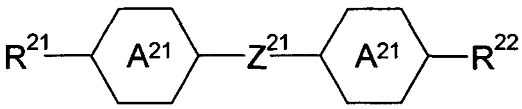

(F-2)

wobei

$R^{21}$ definiert ist wie $R^{11}$ oben;

$R^{22}$ definiert ist wie $R^{12}$ oben;

$Z^{21}$ definiert ist wie $Z^{11}$ oben; und

$A^{21}$ definiert ist wie $A^{11}$ oben.

$R^{21}$, $R^{22}$ sind bevorzugt bei jedem Auftreten gleich oder verschieden Alkylgruppen mit 1 bis 10 C-Atomen oder Alkoxygruppen mit 1 bis 10 C-Atomen.

$Z^{21}$ ist bevorzugt eine Einfachbindung.

$A^{21}$ ist bevorzugt bei jedem Auftreten gleich oder verschieden gewählt aus

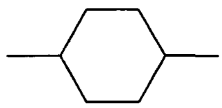 und 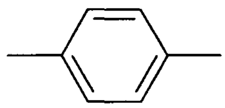 .

Besonders bevorzugte Verbindungen der Formel (F-2) entsprechen den folgenden Formeln (F-2-1) und (F-2-2)

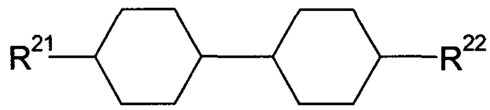

Formel (F-2-1)

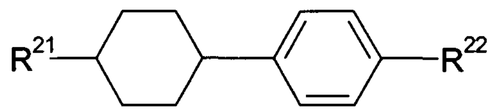

Formel (F-2-2)

Das flüssigkristalline Material enthält bevorzugt in einem Gesamtanteil von 0 Gew.-% bis 30 Gew.-%, besonders bevorzugt 3 Gew.-% bis 20 Gew.-% und ganz besonders bevorzugt 5 Gew.-% bis 15 Gew.-% Verbindung(en) der Formel (F-2).

Es ist erfindungsgemäß bevorzugt, dass das erfindungsgemäße flüssigkristalline Material einen oder mehrere chirale Dotierstoffe enthält. Bevorzugt liegen in diesem Fall die Moleküle des flüssigkristallinen Materials in der Schicht der erfindungsgemäßen Vorrichtung gegeneinander verdrillt vor, besonders bevorzugt wie aus dem TN-Modus von Displays bekannt.

Gemäß einer alternativen, ebenfalls bevorzugten Ausführungsform, enthält das erfindungsgemäße flüssigkristalline Material keine chiralen Dotierstoffe. Bevorzugt liegen in diesem Fall in der LC-Vorrichtung des Gast-Wirt-Typs die Moleküle des flüssigkristallinen Materials nicht gegeneinander verdrillt vor. Besonders bevorzugt liegt in diesem Fall die LC-Vorrichtung im antiparallelen Modus vor.

Chirale Dotierstoffe werden in dem erfindungsgemäßen flüssigkristallinen Material bevorzugt in einer Gesamtkonzentration von 0.01 Gew.-% bis 3 Gew.-%, besonders bevorzugt von 0.05 Gew.-% bis 1 Gew.-% verwendet. Um hohe Werte für die Verdrillung zu erhalten, kann die Gesamtkonzentration der chiralen Dotierstoffe auch höher als 3 Gew.-% gewählt werden, bevorzugt bis maximal 10 Gew.-%.

Die Anteile dieser Verbindungen und anderer Mindermengenkomponenten werden bei der Angabe der Anteile der flüssigkristallinen Verbindungen und der Farbstoffverbindungen vernachlässigt.

Bevorzugte Dotierstoffe sind die in der folgenden Tabelle abgebildeten Verbindungen:

| |
|---|
| 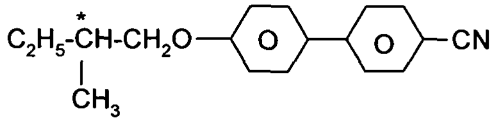 |
| |
| 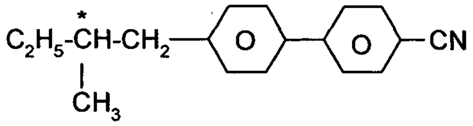 |
| |
| 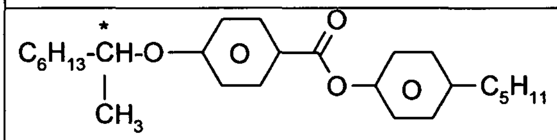 |
| |

| |
|---|
| 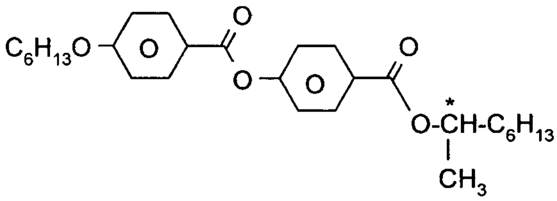 |
| |
| 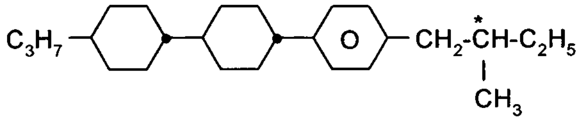 |
| |
| 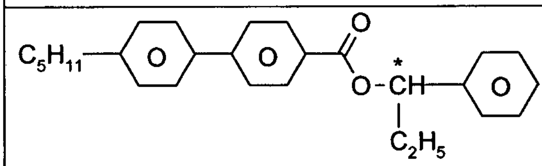 |
| |
| 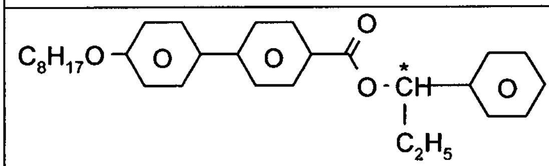 |
| |
| 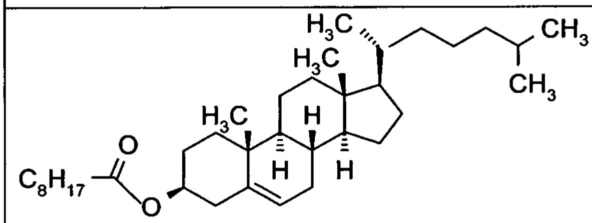 |
| |
| 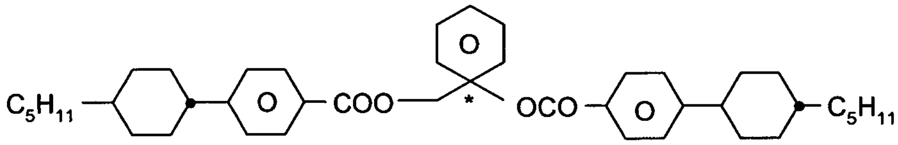 |
| |
| 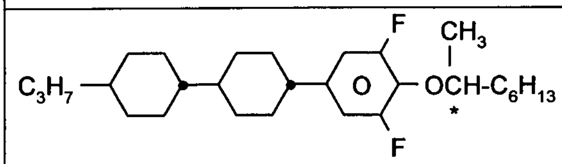 |
| |

| |
|---|
| 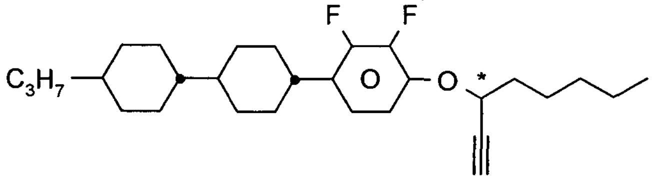 |
| |
| 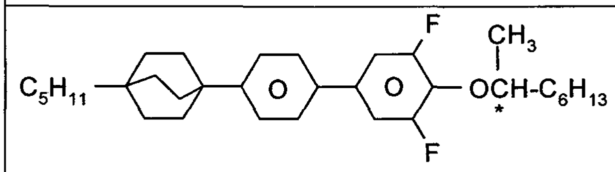 |
| |
| 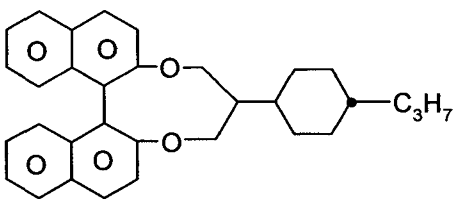 |

Das erfindungsgemäße flüssigkristalline Material enthält weiterhin bevorzugt einen oder mehrere Stabilisatoren. Die Gesamtkonzentration der Stabilisatoren liegt bevorzugt zwischen 0.00001 Gew.-% und 10 Gew.-%, besonders bevorzugt zwischen 0.0001 Gew.-% und 1 Gew.-% der Gesamtmischung.

Bevorzugte Stabilisatoren sind in der folgenden Tabelle gezeigt:

| | |
|---|---|
| 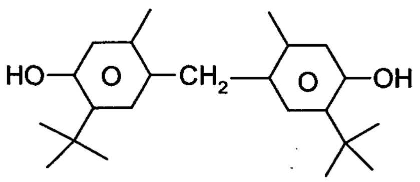 | 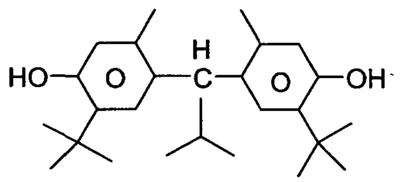 |
| 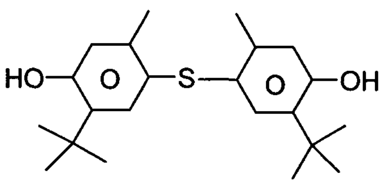 | 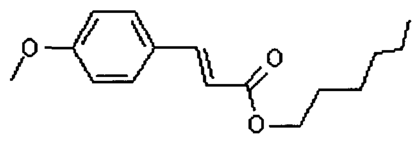 |
| 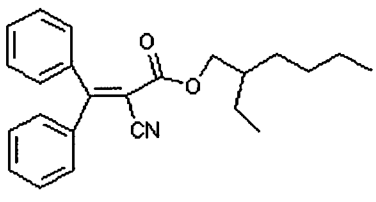 | 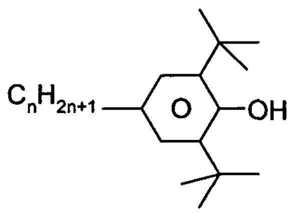 |

| | |
|---|---|
| 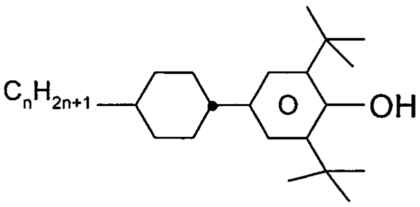 | 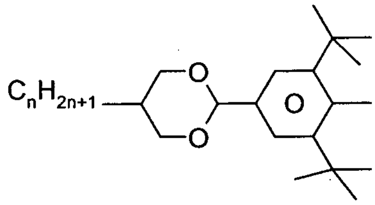 |
| 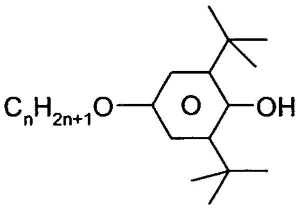 | 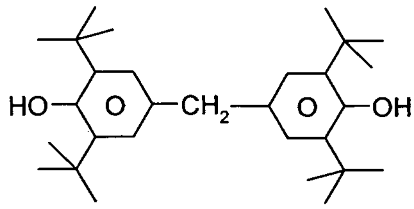 |
| 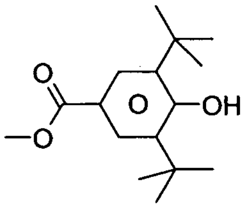 | 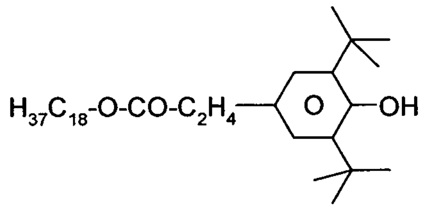 |
| 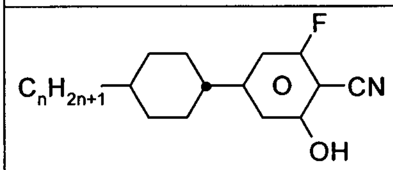 | 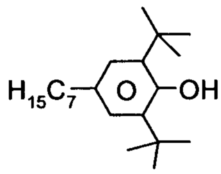 |
| 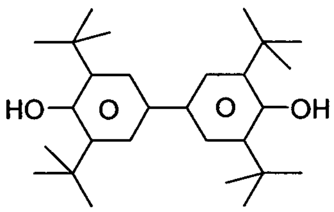 | 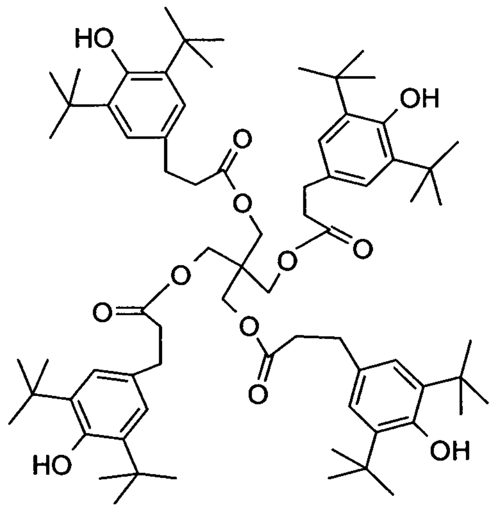 |
| 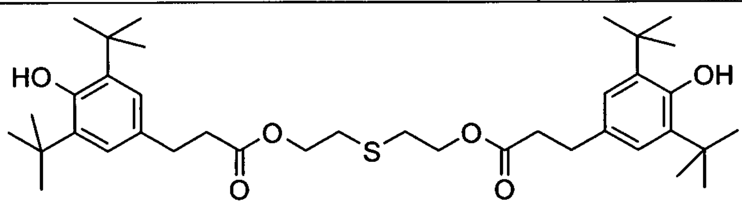 | |

| | |
|---|---|
| 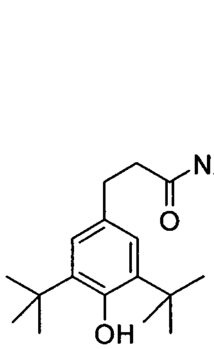 | 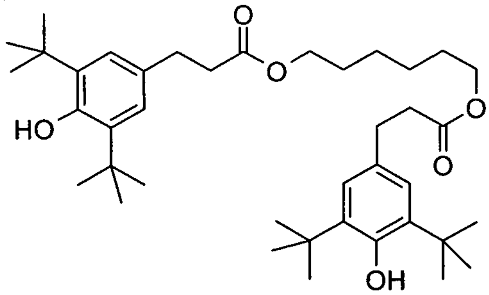 |
| 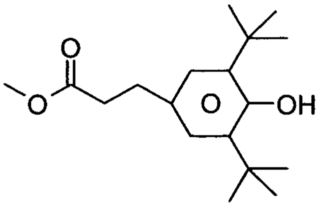 | 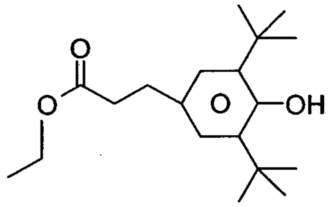 |
| 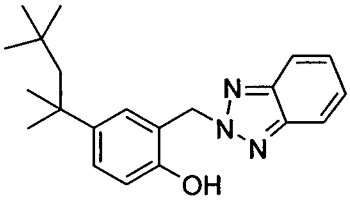 | 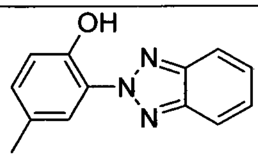 |
| 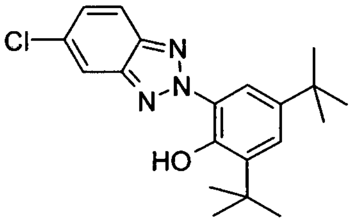 | 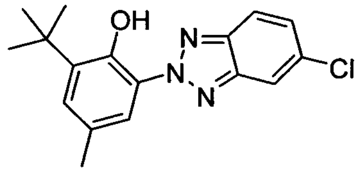 |
| 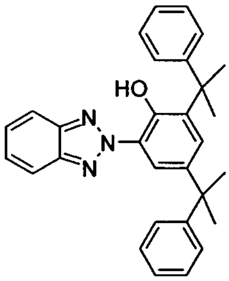 | 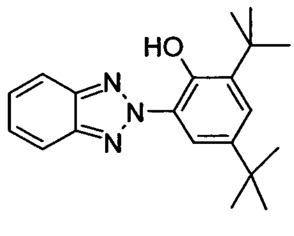 |
| 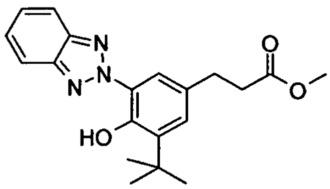 | 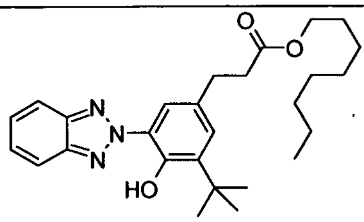 |

| | |
|---|---|
| 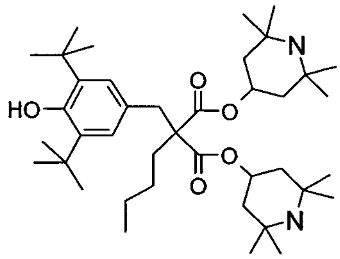 | 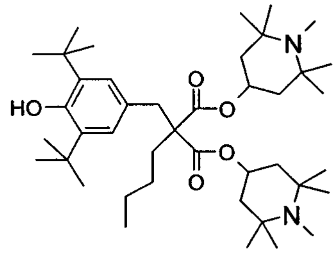 |
| 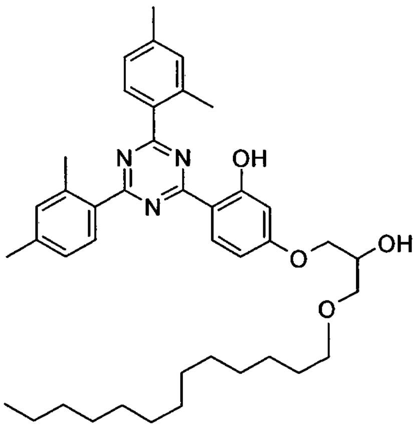 | 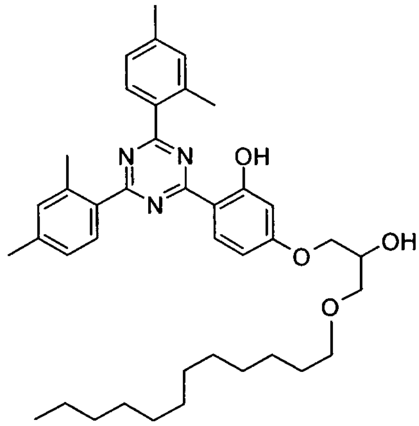 |
| 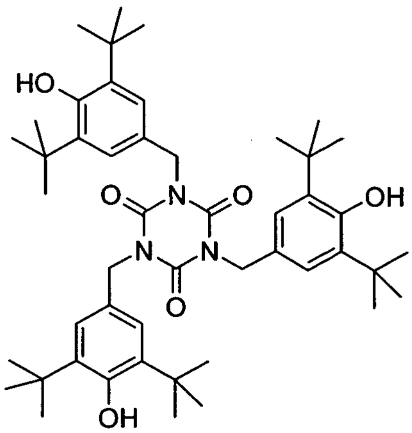 | 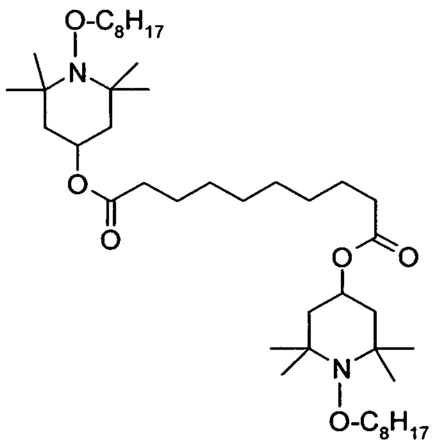 |
| 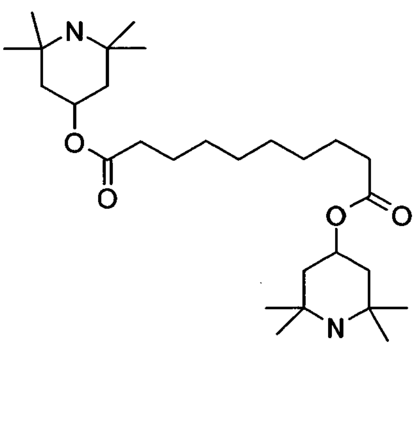 | 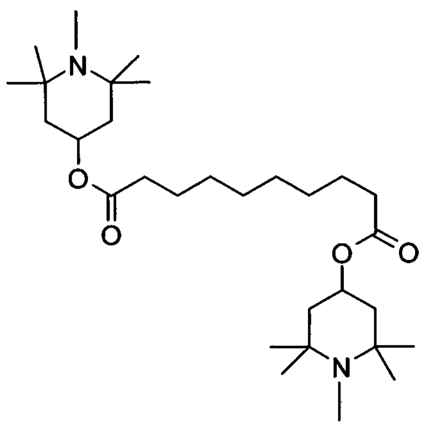 |

| | |
|---|---|
| 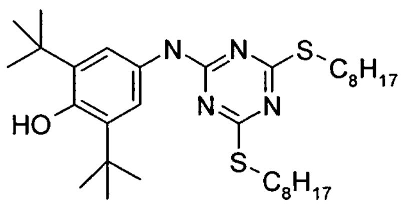 | 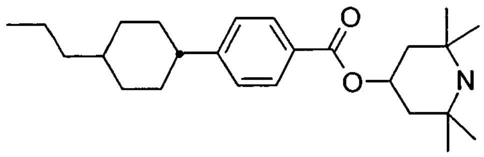 |
| 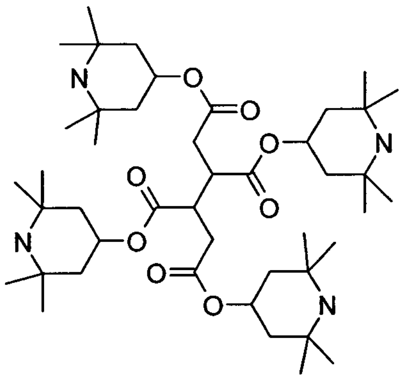 | 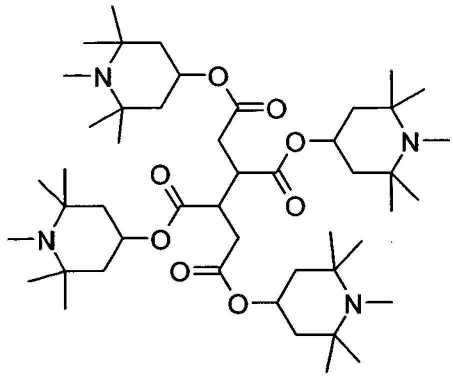 |
| 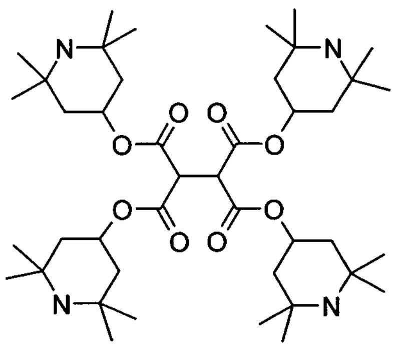 | 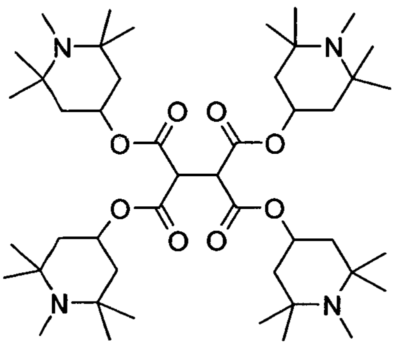 |

Das erfindungsgemäße flüssigkristalline Material enthält mindestens drei verschiedene Farbstoffverbindungen. Die Farbstoffverbindungen sind bevorzugt organische Verbindungen, besonders bevorzugt organische Verbindungen enthaltend mindestens eine kondensierte Aryl- oder Heteroarylgruppe. Bevorzugt enthält das erfindungsgemäße flüssigkristalline Material drei oder vier verschiedene Farbstoffverbindungen. Bevorzugt decken die Farbstoffverbindungen jeweils verschiedene Bereiche des Lichtspektrums ab.

Wenn drei oder mehr Farbstoffverbindungen im erfindungsgemäßen flüssigkristallinen Material vorliegen, ergänzen sich die Absorptionsspektren der Farbstoffverbindungen bevorzugt derart, dass im Wesentlichen das gesamte sichtbare Spektrum des Lichts absorbiert wird. Dadurch entsteht für das menschliche Auge der Eindruck von schwarzer Farbe. Dies wird dadurch erreicht, dass drei oder mehr Farbstoffverbindungen verwendet werden, von denen mindestens eine blaues Licht absorbiert, mindestens eine grünes bis gelbes Licht absorbiert, und mindestens eine rotes Licht absorbiert. Lichtfarbe ist dabei entsprechend B. Bahadur, Liquid Crystals - Applications and Uses, Vol. 3, 1992, World Scientific Publishing, Abschnitt 11.2.1. Es wird darauf hingewiesen, dass die wahrgenommene Farbe der Farbstoffverbindung jeweils die Komplementärfarbe zur absorbierten Farbe darstellt, dass also eine blaues Licht absorbierende Farbstoffverbindung eine gelbe Farbe aufweist.

Der Anteil der Farbstoffverbindung(en) im erfindungsgemäßen flüssigkristallinen Material beträgt bevorzugt insgesamt 0.01 bis 10 Gew.-%, besonders bevorzugt 0.1 bis 7 Gew.-% und ganz besonders bevorzugt 0.2 bis 7 Gew.-%. Der Anteil einer einzelnen Farbstoffverbindung beträgt bevorzugt 0.01 bis 10 Gew.-%, besonders bevorzugt 0.05 bis 7 Gew.-% und ganz besonders bevorzugt 0.1 bis 7 Gew.-%.

Die im flüssigkristallinen Material enthaltene Farbstoffverbindung ist bevorzugt in diesem gelöst. Die Farbstoffverbindung wird bevorzugt in ihrer Ausrichtung durch die Ausrichtung der Moleküle des flüssigkristallinen Materials beeinflusst.

Weiterhin bevorzugt sind die Farbstoffverbindungen dichroitische Farbstoffverbindungen, besonders bevorzugt

positiv dichroitische Farbstoffverbindungen. Unter positiv dichroitisch wird verstanden, dass die Farbstoffverbindung einen positiven Anisotropiegrad R, ermittelt wie in den Ausführungsbeispielen angegeben, aufweist. Besonders bevorzugt ist der Anisotropiegrad R größer als 0.4, ganz besonders bevorzugt größer als 0.5 und am stärksten bevorzugt größer als 0.6.

Bevorzugt erreicht die Absorption der Farbstoffverbindung ein Maximum, wenn die Polarisationsrichtung des Lichts parallel zur Richtung der längsten Ausdehnung des Moleküls der Farbstoffverbindung ist, und sie erreicht ein Minimum, wenn die Polarisationsrichtung des Lichts senkrecht zur Richtung der längsten Ausdehnung des Moleküls der Farbstoffverbindung ist.

Weiterhin bevorzugt absorbiert die Farbstoffverbindung gemäß der vorliegenden Anmeldung vorwiegend Licht im UV-VIS-NIR-Bereich, d. h. in einem Wellenlängenbereich von 320 bis 2000 nm.

Weiterhin bevorzugt ist die Farbstoffverbindung eine fluoreszierende Farbstoffverbindung. Unter Fluoreszenz wird dabei verstanden, dass eine Verbindung durch Absorption von Licht einer bestimmten Wellenlänge in einen elektronisch angeregten Zustand versetzt wird, wobei die Verbindung anschließend unter Emission von Licht in den Grundzustand übergeht. Bevorzugt hat das emittierte Licht längere Wellenlänge als das absorbierte Licht. Weiterhin bevorzugt ist der Übergang vom angeregten Zustand in den Grundzustand spin-erlaubt, erfolgt also ohne Änderung des Spins. Weiterhin bevorzugt ist die Lebensdauer des angeregten Zustands der fluoreszierenden Verbindung kürzer als $10^{-5}$ s, besonders bevorzugt kürzer als $10^{-6}$ s, ganz besonders bevorzugt zwischen $10^{-9}$ und $10^{-7}$ s.

Weiterhin bevorzugt ist die Farbstoffverbindung gewählt aus den in B. Bahadur, Liquid Crystals - Applications and Uses, Vol. 3, 1992, World Scientific Publishing, Abschnitt 11.2.1 angegebenen Farbstoffklassen und besonders bevorzugt aus den in der Tabelle aufgeführten expliziten Verbindungen.

Bevorzugt ist die Farbstoffverbindung gewählt aus Azoverbindungen, Anthrachinonen, Methinverbindungen, Azomethinverbindungen, Merocyaninverbindungen, Naphthochinonen, Tetrazinen, Perylenen, Terrylenen, Quaterrylenen, höheren Rylenen, Benzothiadiazolen, Pyrromethenen und Diketopyrrolopyrrolen. Besonders bevorzugt sind darunter Perylene, Benzothiadiazole und Diketopyrrolopyrrole.

Die genannten Farbstoffverbindungen sind vielfach in der Literatur beschrieben. So sind z.B. Anthrachinonfarbstoffe beschrieben in EP 34832, EP 44893, EP 48583, EP 54217, EP 56492, EP 59036, GB 2065158, GB 2065695, GB 2081736, GB 2082196, GB 2094822, GB 2094825, JP-OS 55-123673, DE 3017877, DE 3040102, DE 3115147, DE 3115762, DE 3150803 und DE 3201120, Naphthochinonfarbstoffe beschrieben in DE 3126108 und DE 3202761, Azofarbstoffe in EP 43904, DE 3123519, WO 82/2054, GB 2079770, JP-OS 56-57850, JP-OS 56-104984, US 4308161, US 4308162, US 4340973, T. Uchida, C. Shishido, H. Seki und M. Wada: Mol. Cryst. Lig. Cryst. 39, 39-52 (1977) und H. Seki, C. Shishido, S. Yasui und T. Uchida: Jpn. J. Appl. Phys. 21, 191-192 (1982), und Perylene beschrieben in EP 60895, EP 68427 und WO 82/1191.

Besonders bevorzugt sind Anthrachinon-Farbstoffe, Azofarbstoffe und Naphthochinon-Farbstoffe, wie beispielsweise im Detail in DE 3307238 offenbart, und Rylen-Farbstoffe, wie beispielsweise in EP 2166040, US 2011/0042651, EP 68427, EP 47027, EP 60895, DE 3110960 und EP 698649 offenbart, und Benzothiadiazol-Farbstoffe, wie beispielsweise in der noch nicht offengelegten Anmeldung EP13002711.3 offenbart.

Beispiele für bevorzugte Farbstoffverbindungen sind in der folgenden Tabelle abgebildet:

| |
|---|
| 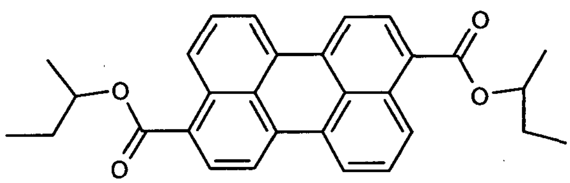 |
| |
| 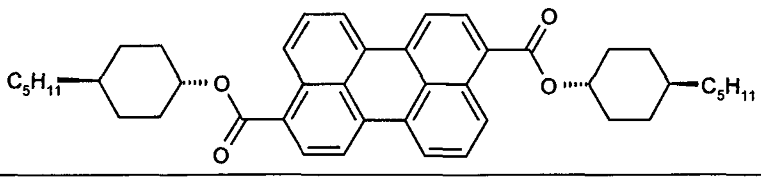 |
| |

| |
|---|
| 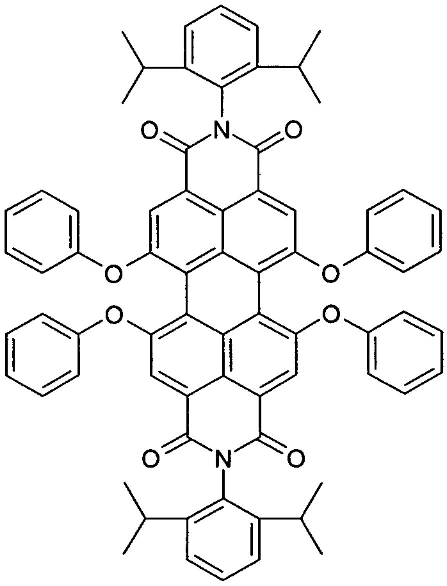 |
| |
| 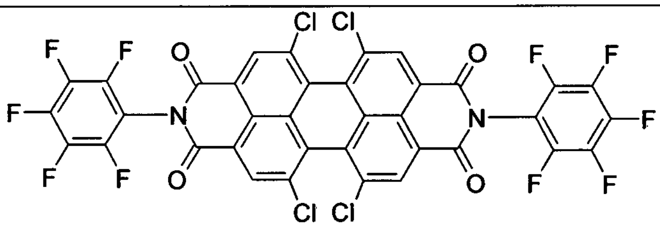 |
| |
| 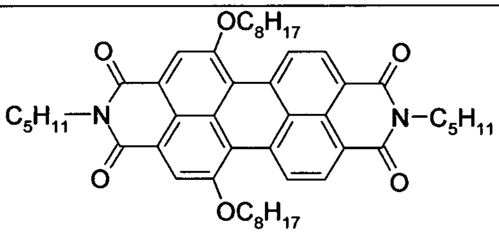 |
| |
| 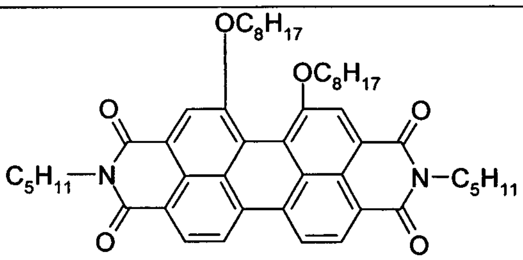 |
| |

| |
|---|
| 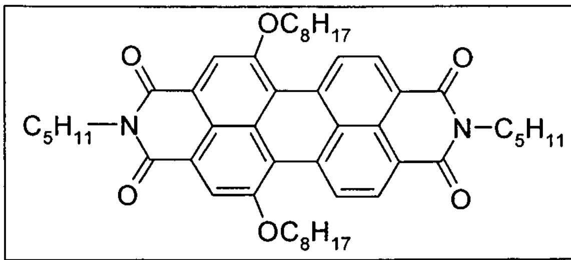 |
| |
| 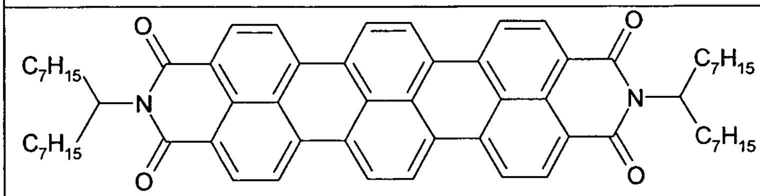 |
| |
| 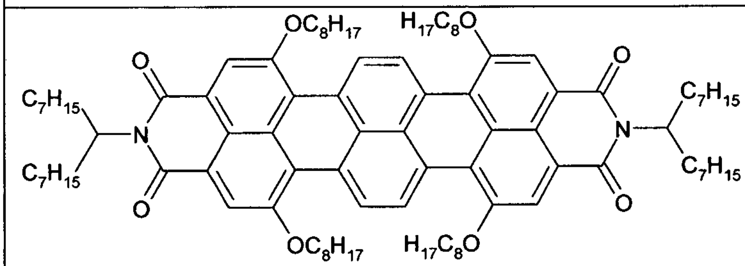 |
| |
| 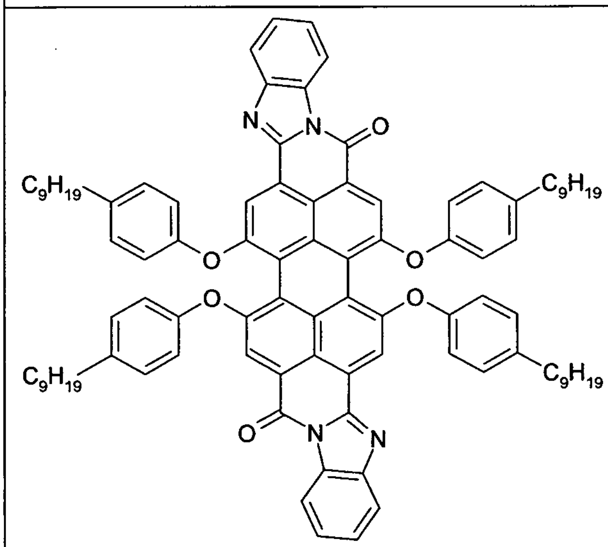 |
| |

| |
|---|
| 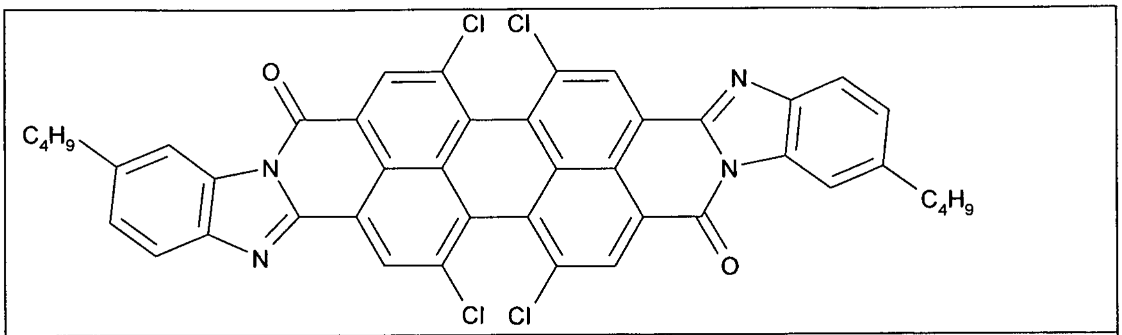 |
| |
| 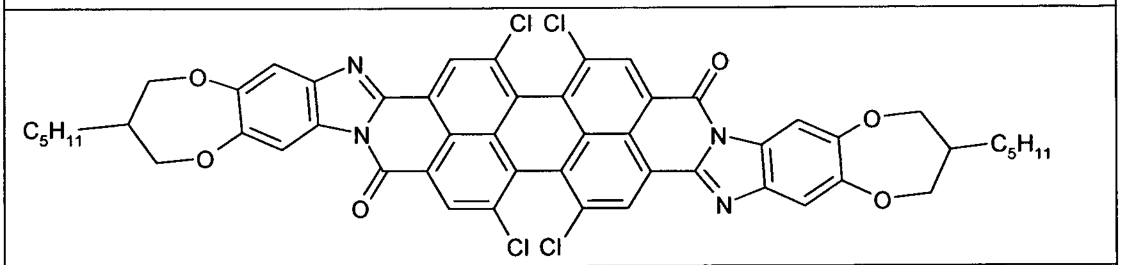 |
| |
| 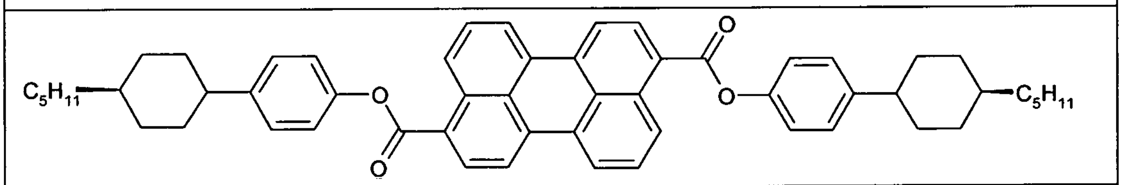 |
| |
| 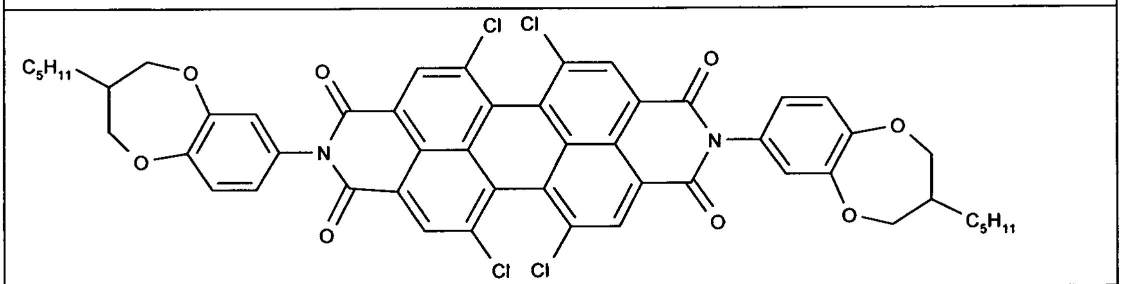 |
| |
| 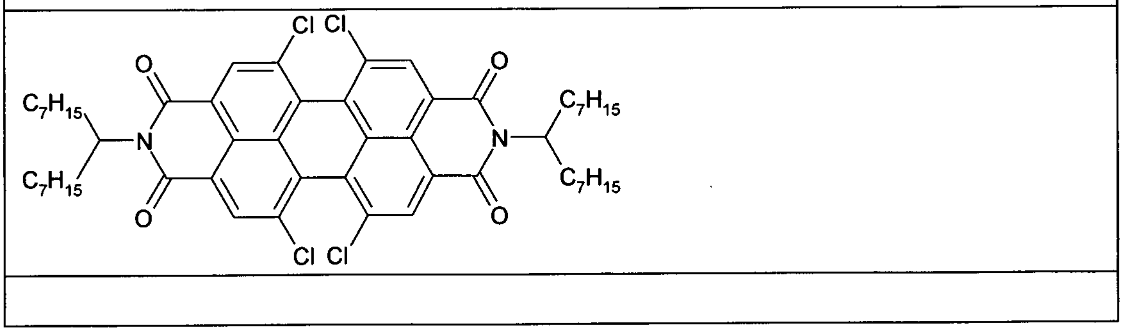 |
| |

| |
|---|
| 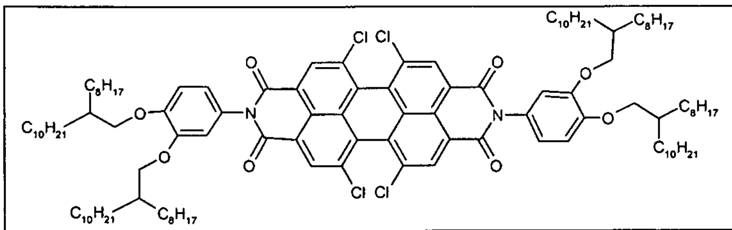 |
| |
| 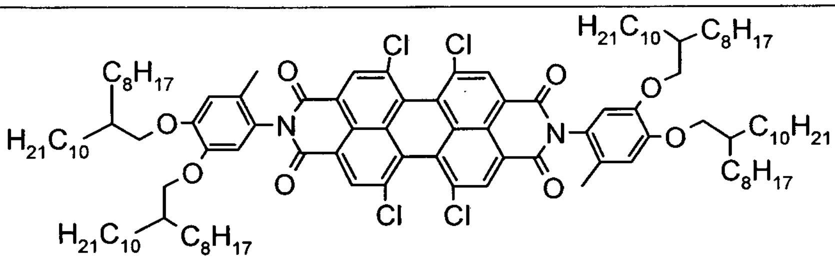 |
| |
| 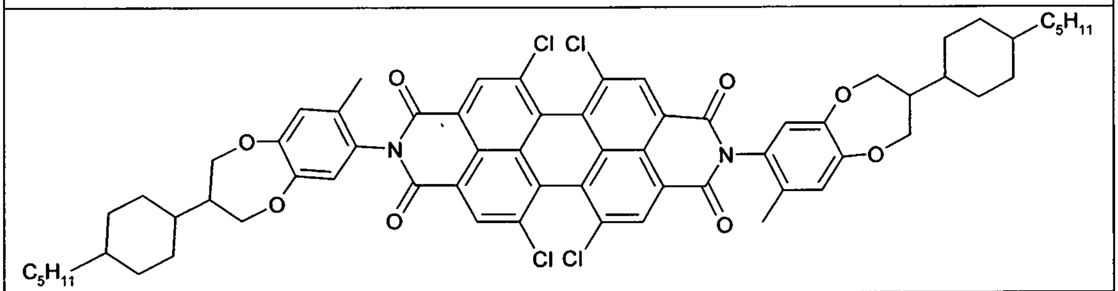 |
| |
| 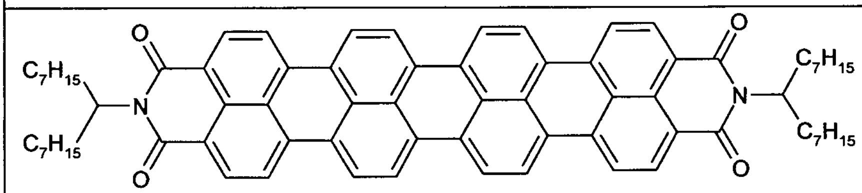 |
| |
| 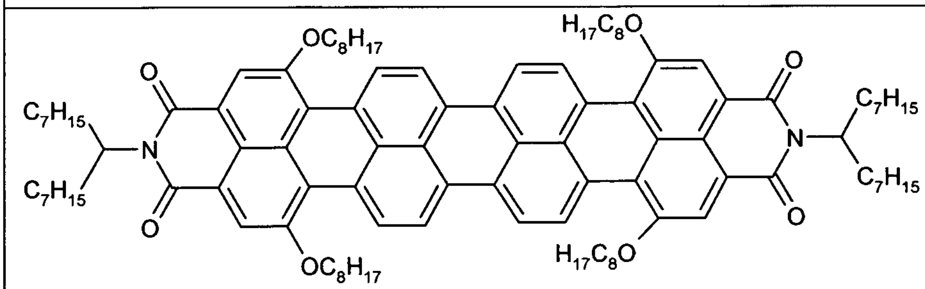 |
| |
| 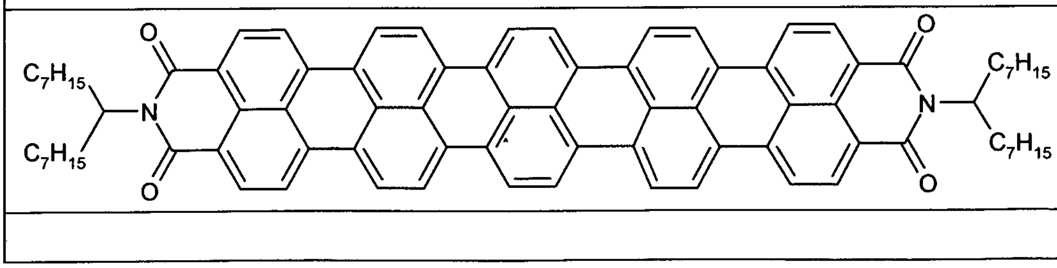 |
| |

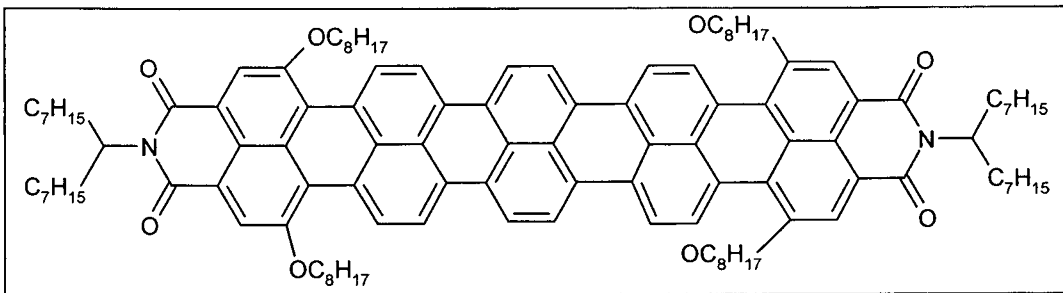

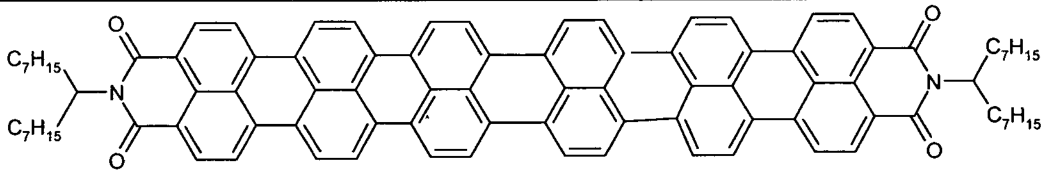

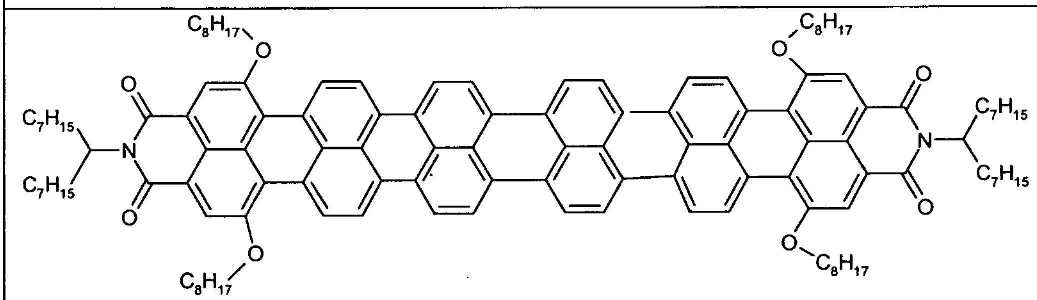

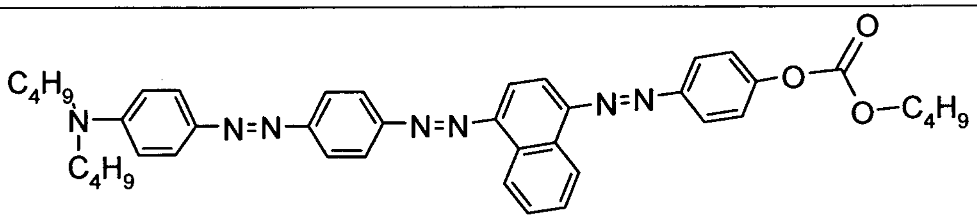

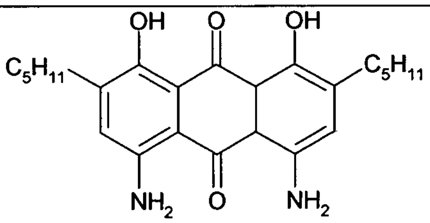

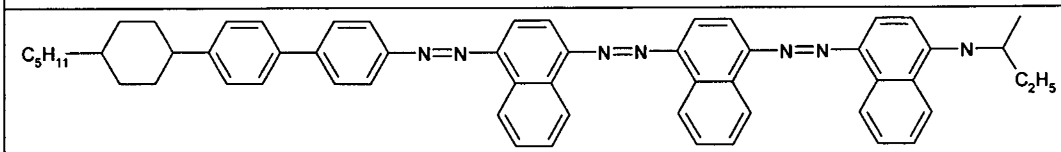

| |
|---|
| 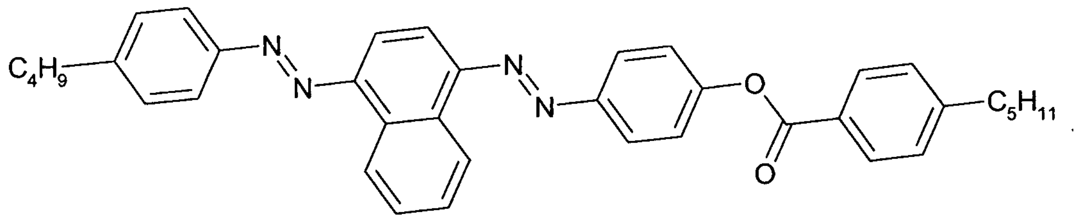 |
| |
| 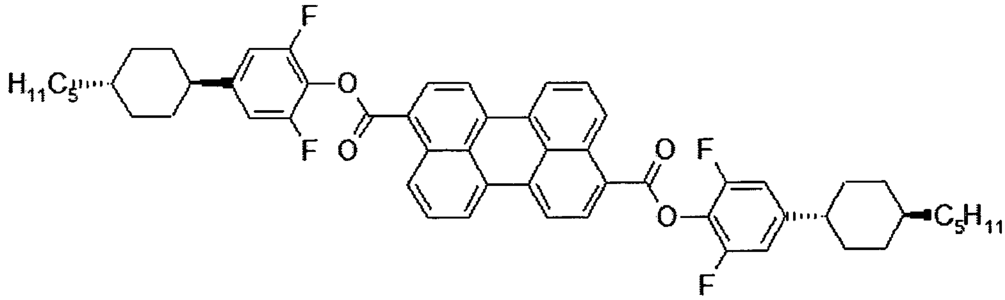 |
| |
| 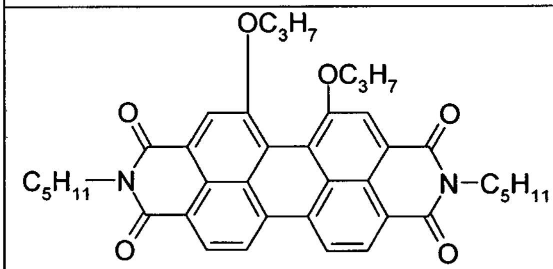 |
| |
| 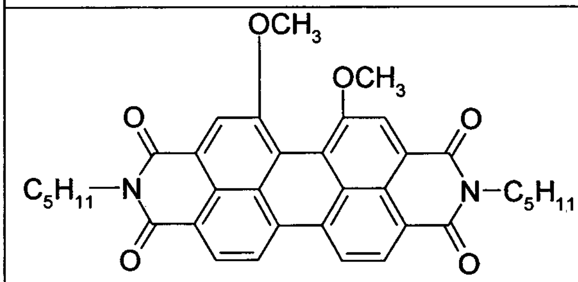 |
| |
| 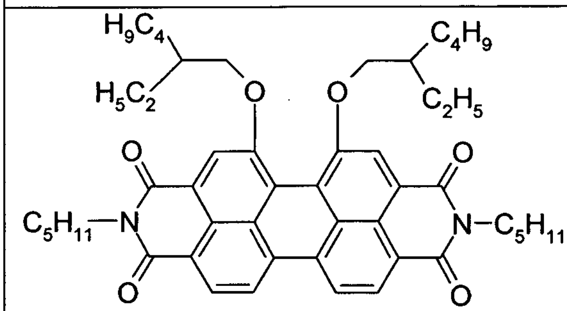 |
| |

| |
|---|
| 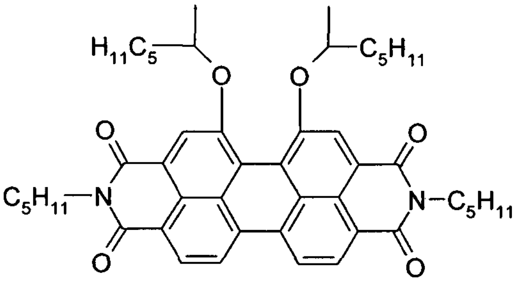 |
| |
| 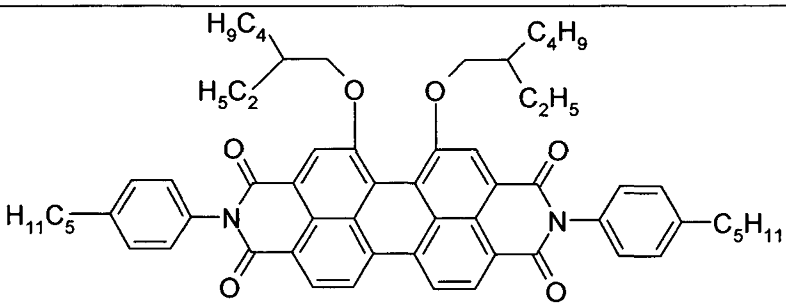 |
| |
| 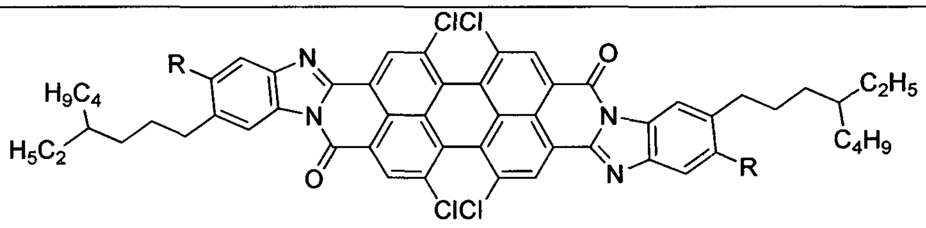 R = gleiche Alkylkette wie in der ortho-Position |
| |
| 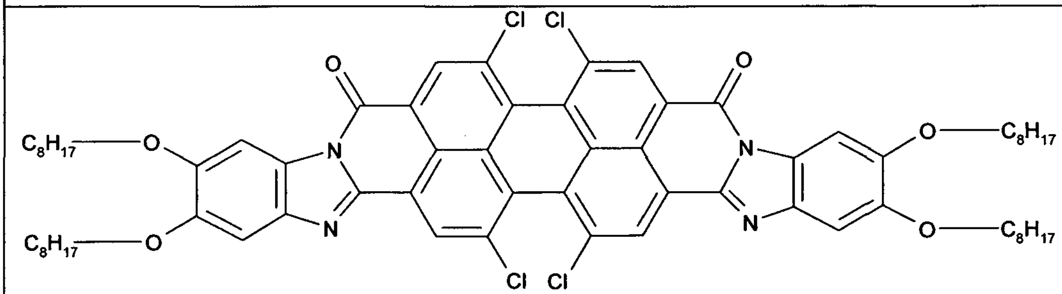 |
| |
| 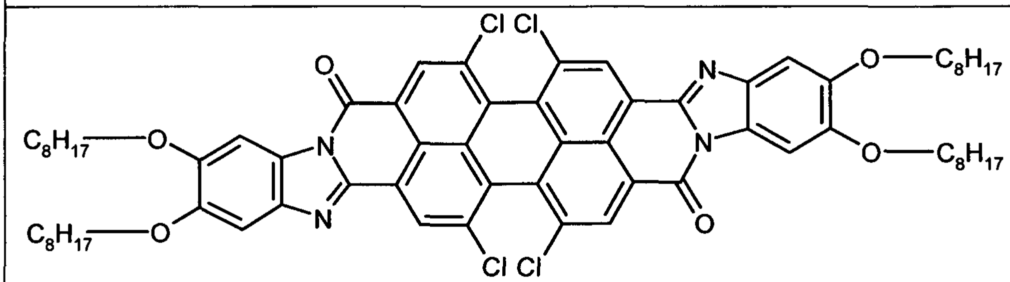 |
| |

| |
|---|
| 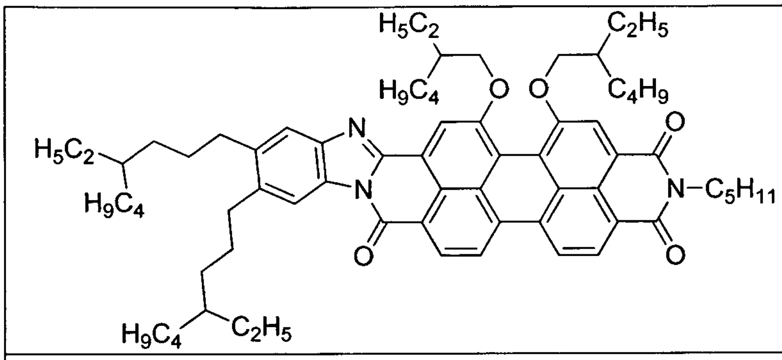 |
| |
| 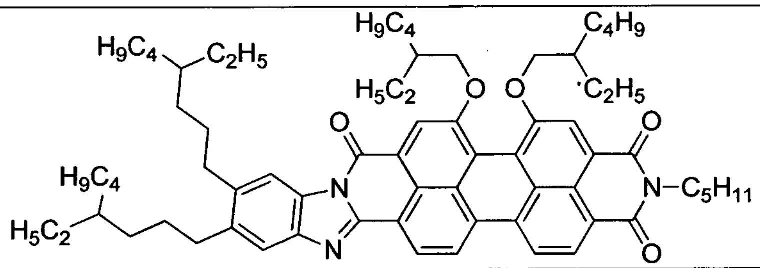 |
| |
| 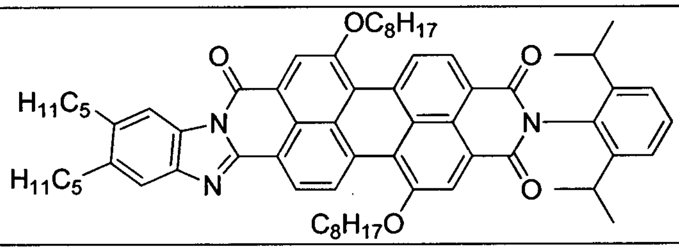 |
| |
| 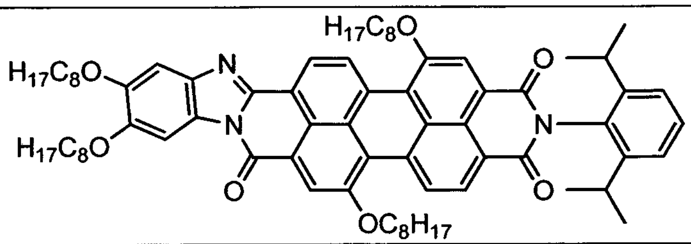 |
| |
| 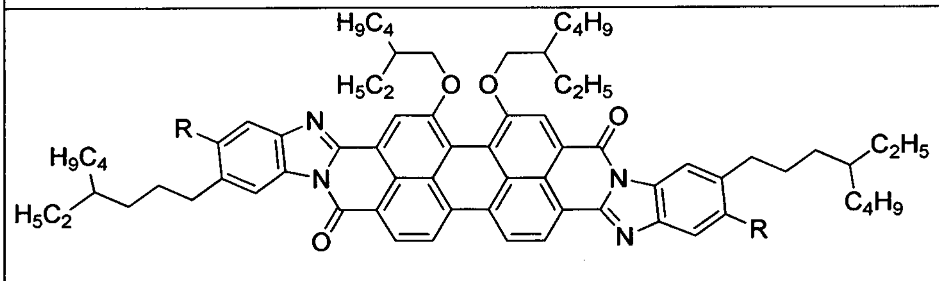<br>R = gleiche Alkylkette wie in der ortho-Position |
| |

| |
|---|
| 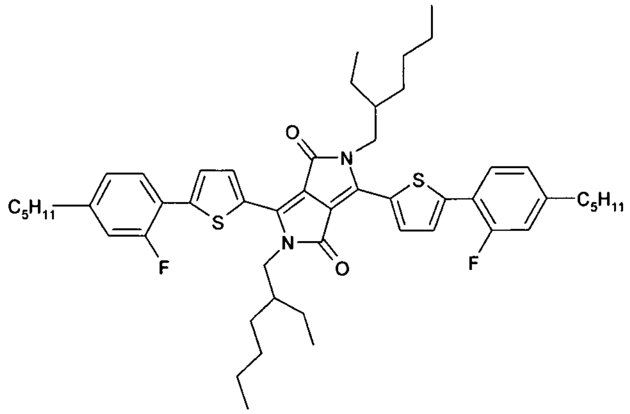 |
| |
| 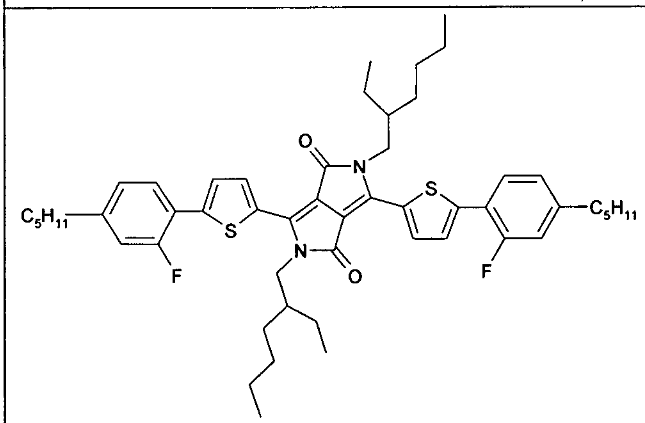 |
| |
| 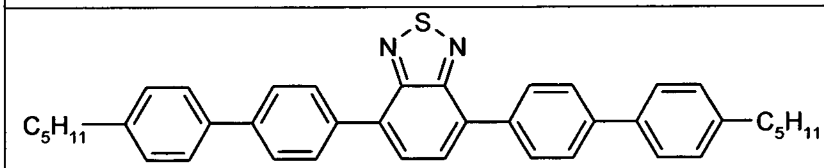 |
| |
| 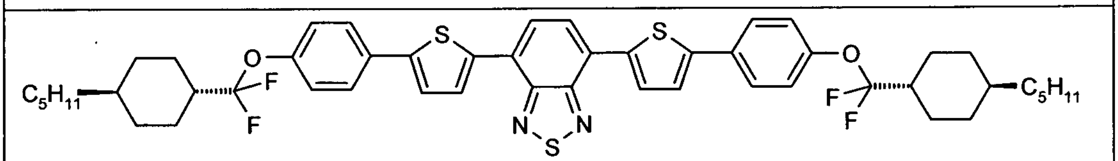 |
| |
| 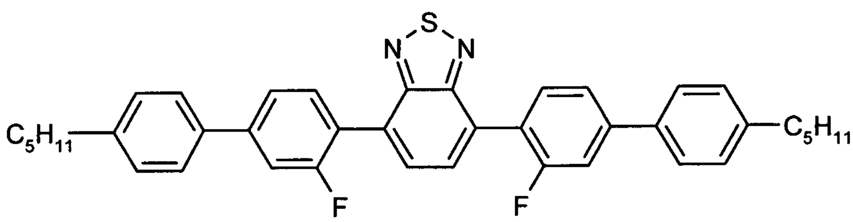 |
| |

| |
|---|
| 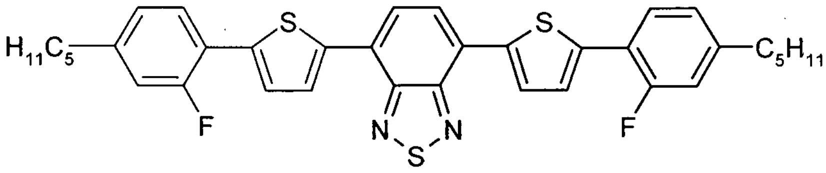 |
| |
| 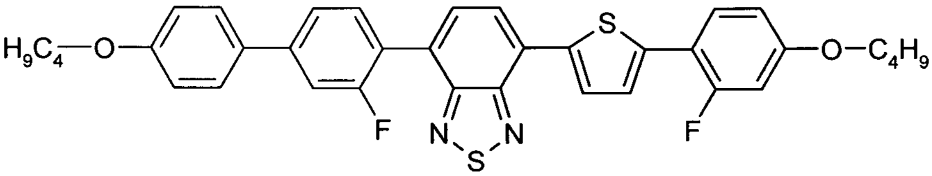 |
| |
| 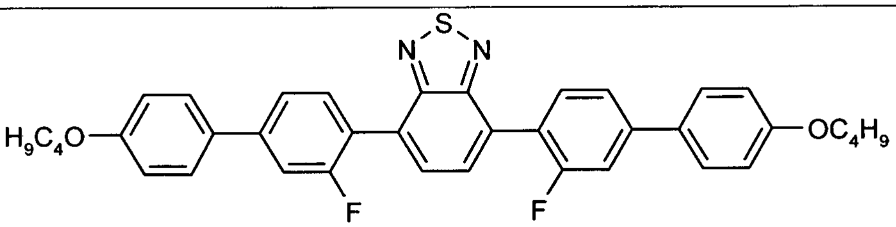 |
| 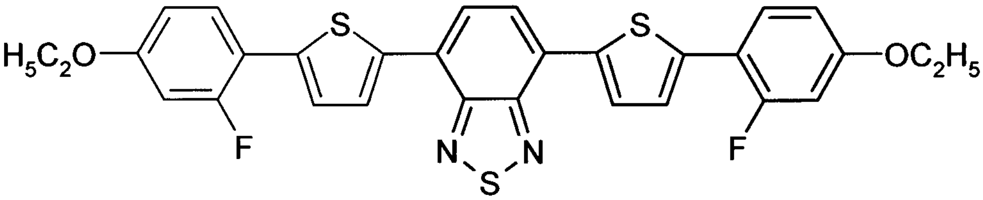 |
| |
| 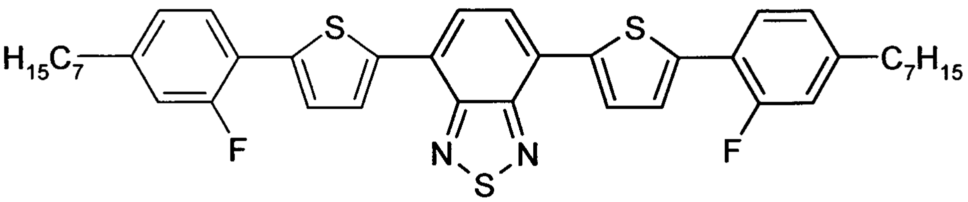 |
| |
| 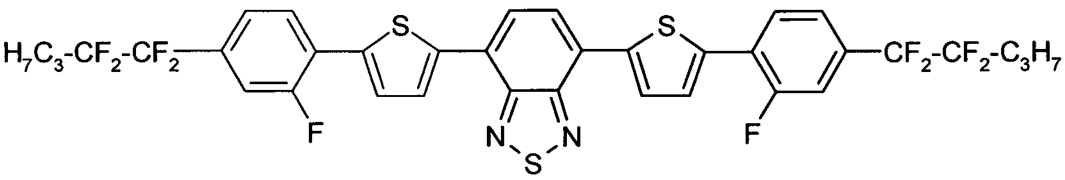 |
| |
| 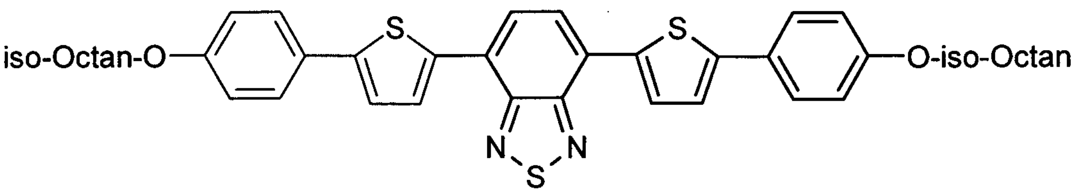 |
| |

| |
|---|
| 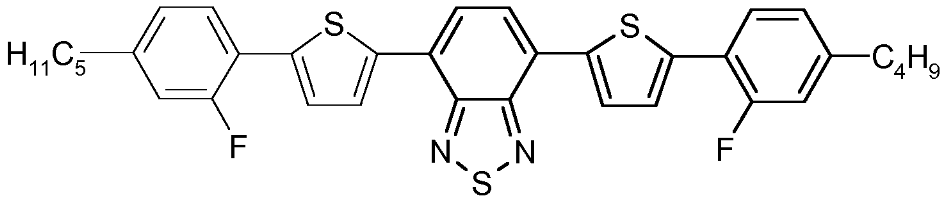 |
| |
| 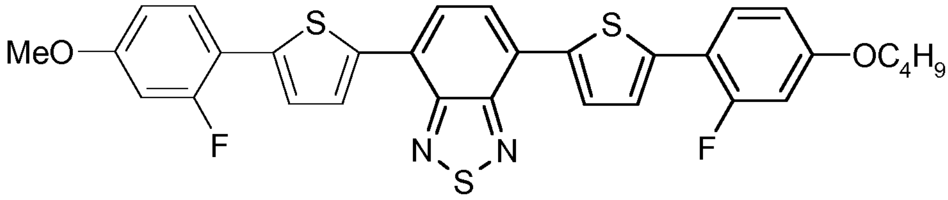 |
| |
| 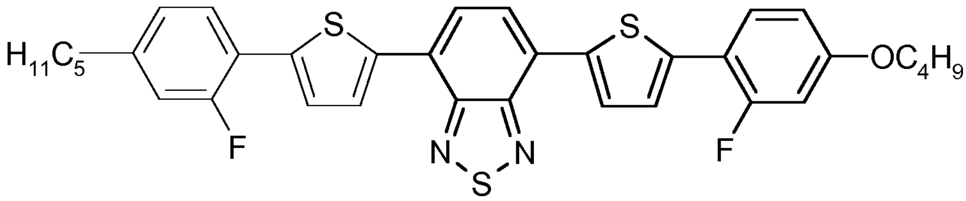 |
| |
| 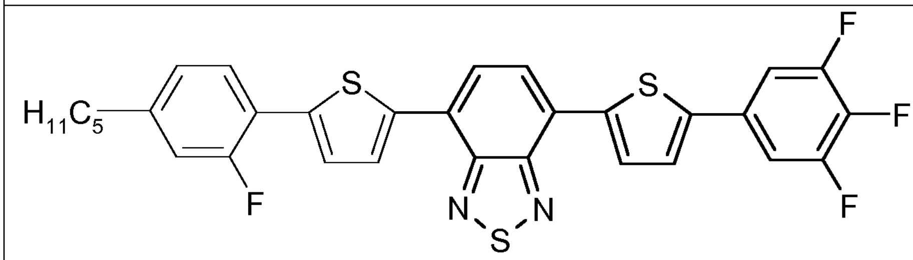 |
| |
| 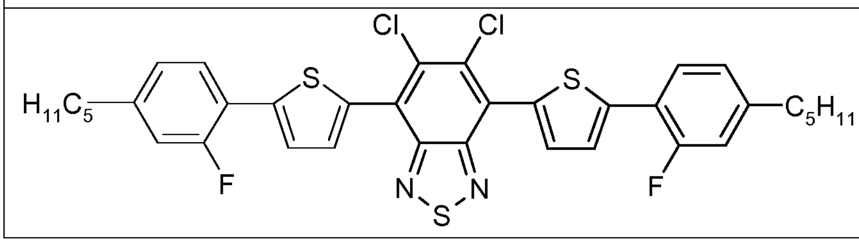 |

Weiterer Gegenstand der Beschreibung ist die Verwendung eines flüssigkristallinen Materials, enthaltend eine Farbstoffverbindung, wobei das flüssigkristalline Material einen Klärpunkt von mindestens 95°C hat und mindestens eine Verbindung V enthält, die mindestens eine Einheit gewählt aus Einheiten der Formeln (E-1),(E-2) und (E-3) umfasst, und ferner eine oder mehrere Verbindungen der Formel (F-1) umfasst, in einer Vorrichtung zur Regulierung des Lichtdurchtritts.

Es gelten dabei die bevorzugten Ausführungsformen der Verbindung V ebenfalls als bevorzugt, sowie die weiteren bevorzugten Ausführungsformen, die oben im Zusammenhang mit dem erfindungsgemäßen flüssigkristallinen Material angegeben sind.

Das flüssigkristalline Material liegt in der Vorrichtung in einer Schicht vor. Diese Schicht ist bevorzugt schaltbar, stellt also eine Schaltschicht dar.

Die erfindungsgemäße Vorrichtung ist bevorzugt zur Regulierung des Lichtdurchtritts in Form von Tageslicht von der Umgebung in einen Raum geeignet. Dabei erfolgt der zu regulierende Licht-Durchtritt von der Umwelt (dem Außenraum) in einen Raum hinein. Der Raum kann dabei ein beliebiger weitgehend von der Umgebung abgeschlossener

Raum sein, beispielsweise ein Gebäude, ein Fahrzeug, oder ein Container. Die Vorrichtung kann allgemein für beliebige Räume verwendet werden, besonders wenn diese nur begrenzten Luftaustausch mit der Umgebung aufweisen und lichtdurchlässige Begrenzungsflächen aufweisen, durch die Energie-Eintrag von außen in Form von Lichtenergie stattfinden kann. Besonders relevant ist die Verwendung der Vorrichtung für Räume, welche starker Sonneneinstrahlung durch lichtdurchlässige Flächen, beispielsweise durch Fensterflächen, ausgesetzt sind.

Die erfindungsgemäße Vorrichtung ist bevorzugt in einer Öffnung einer größeren flächigen Struktur angeordnet, wobei die flächige Struktur selbst nicht oder nur geringfügig Lichtdurchtritt zulässt, und wobei die Öffnung relativ gesehen lichtdurchlässiger ist. Bevorzugt ist die flächige Struktur eine Wand oder eine sonstige Begrenzung eines Raums nach außen. Bevorzugt ist die erfindungsgemäße Vorrichtung dadurch gekennzeichnet, dass sie eine Flächenausdehnung von mindestens 0.05 $m^2$ aufweist, bevorzugt mindestens 0.1 $m^2$, besonders bevorzugt mindestens 0.5 $m^2$ und ganz besonders bevorzugt mindestens 0.8 $m^2$.

Die erfindungsgemäße Vorrichtung ist schaltbar. Unter Schaltung wird dabei eine Änderung des Licht-Durchtritts durch die Vorrichtung verstanden. Die erfindungsgemäße Vorrichtung ist bevorzugt elektrisch schaltbar.

Ist die Vorrichtung elektrisch schaltbar, umfasst sie bevorzugt zwei oder mehr Elektroden, die zu beiden Seiten der Schaltschicht enthaltend das flüssigkristalline Material angebracht sind. Die Elektroden bestehen bevorzugt aus ITO oder aus einer dünnen, bevorzugt transparenten Metall- und/oder Metalloxidschicht, beispielsweise aus Silber oder FTO (Fluordotiertes Zinnoxid) oder einem alternativen, dem Fachmann für diese Verwendung bekannten Material. Die Elektroden sind bevorzugt mit elektrischen Anschlüssen versehen. Die Spannung wird bevorzugt durch eine Batterie, einen Akkumulator, oder durch externe Stromversorgung bereitgestellt.

Der Schaltvorgang erfolgt im Fall von elektrischer Schaltung durch eine Ausrichtung der Moleküle des flüssigkristallinen Materials durch das Anlegen von Spannung.

In einer bevorzugten Ausführungsform wird dabei die Vorrichtung durch Anlegen einer Spannung von einem Zustand mit hoher Absorption, d. h. geringer Lichtdurchlässigkeit, der ohne Spannung vorliegt, in einen Zustand mit geringerer Absorption, d. h. höherer Lichtdurchlässigkeit, überführt. Bevorzugt ist das flüssigkristalline Material in der Schicht in der Vorrichtung in beiden Zuständen nematisch. Der spannungslose Zustand ist bevorzugt dadurch gekennzeichnet, dass die Moleküle des flüssigkristallinen Materials, und damit die Moleküle der Farbstoffverbindung, parallel zur Ebene der Schaltschicht ausgerichtet vorliegen. Dies wird bevorzugt durch eine entsprechend gewählte Orientierungsschicht erreicht. Der Zustand unter Spannung ist bevorzugt dadurch gekennzeichnet, dass die Moleküle des flüssigkristallinen Materials, und damit die Moleküle der Farbstoffverbindung, senkrecht zur Ebene der Schaltschicht vorliegen.

In einer zur oben genannten Ausführungsform alternativen Ausführungsform wird die Vorrichtung durch Anlegen einer Spannung von einem Zustand mit geringer Absorption, d. h. hoher Lichtdurchlässigkeit, der ohne Spannung vorliegt, in einen Zustand mit höherer Absorption, d. h. geringerer Lichtdurchlässigkeit, überführt. Bevorzugt ist das flüssigkristalline Material in der Schicht in der Vorrichtung in beiden Zuständen nematisch. Der spannungslose Zustand ist bevorzugt dadurch gekennzeichnet, dass die Moleküle des flüssigkristallinen Materials, und damit die Moleküle der Farbstoffverbindung, senkrecht zur Ebene der Schaltschicht ausgerichtet vorliegen. Dies wird bevorzugt durch eine entsprechend gewählte Orientierungsschicht erreicht. Der Zustand unter Spannung ist bevorzugt dadurch gekennzeichnet, dass die Moleküle des flüssigkristallinen Materials, und damit die Moleküle der Farbstoffverbindung, parallel zur Ebene der Schaltschicht vorliegen.

Gemäß einer bevorzugten Ausführungsform der Erfindung kann die Vorrichtung ohne externe Stromversorgung betrieben werden, indem die nötige Energie durch eine Solarzelle oder eine sonstige Vorrichtung zur Umwandlung von Licht und/oder Wärmeenergie in elektrische Energie bereitgestellt wird, die mit der Vorrichtung verbunden ist. Die Bereitstellung der Energie durch die Solarzelle kann direkt oder indirekt, d. h. über eine dazwischengeschaltete Batterie oder Akkumulator oder sonstige Einheit zur Speicherung von Energie, erfolgen. Bevorzugt ist die Solarzelle außen an der Vorrichtung angebracht oder sie ist innerer Bestandteil der Vorrichtung, wie beispielsweise in WO 2009/141295 offenbart. Bevorzugt sind dabei insbesondere Solarzellen, welche bei diffusem Licht besonders effizient sind, sowie transparente Solarzellen.

Die erfindungsgemäße Vorrichtung weist bevorzugt die folgende Schichtenabfolge auf, wobei zusätzlich weitere Schichten vorhanden sein können. Bevorzugt grenzen die im Folgenden angegebenen Schichten in der Vorrichtung direkt aneinander.

- Substratschicht, bevorzugt aus Glas oder Polymer
- elektrisch leitfähige transparente Schicht, bevorzugt aus ITO
- Orientierungsschicht
- Schaltschicht, enthaltend das flüssigkristalline Material
- Orientierungsschicht
- elektrisch leitfähige transparente Schicht, bevorzugt aus ITO
- Substratschicht, bevorzugt aus Glas oder Polymer.

Die bevorzugten Ausführungsformen der einzelnen Schichten werden im Folgenden dargestellt.

Bevorzugt umfasst die erfindungsgemäße Vorrichtung eine oder mehrere, besonders bevorzugt zwei Orientierungsschichten. Die Orientierungsschichten liegen bevorzugt direkt angrenzend an die beiden Seiten der Schicht enthaltend das flüssigkristalline Material vor.

Als Orientierungsschichten der erfindungsgemäßen Vorrichtung können beliebige dem Fachmann hierzu bekannte Schichten verwendet werden. Bevorzugt sind Polyimid-Schichten, besonders bevorzugt Schichten aus geriebenem Polyimid. Auf bestimmte, dem Fachmann bekannte Art geriebenes Polyimid führt zu einer Ausrichtung der Moleküle des flüssigkristallinen Materials in Reiberichtung, wenn die Moleküle parallel zur Orientierungsschicht vorliegen (planare Ausrichtung). Dabei ist es bevorzugt, dass die Moleküle des flüssigkristallinen Materials nicht völlig planar auf der Orientierungsschicht vorliegen, sondern einen leichten Aufstellwinkel aufweisen (pretilt). Zum Erreichen von vertikaler Ausrichtung der Verbindungen des flüssigkristallinen Materials zur Oberfläche der Orientierungsschicht (homeotrope Ausrichtung) wird bevorzugt auf bestimmte Art behandeltes Polyimid als Material für die Orientierungsschicht eingesetzt (Polyimid für sehr hohe Pretiltwinkel). Weiterhin können Polymere, die durch einen Belichtungsvorgang mit polarisiertem Licht erhalten wurden, als Orientierungsschicht zum Erreichen einer Ausrichtung der Verbindungen des flüssigkristallinen Materials gemäß einer Orientierungsachse verwendet werden (photoalignment).

Weiterhin bevorzugt ist in der erfindungsgemäßen Vorrichtung die Schicht enthaltend das flüssigkristalline Material zwischen zwei Substratschichten angeordnet bzw. von diesen eingeschlossen. Die Substratschichten können beispielsweise aus Glas oder einem Polymer, bevorzugt einem lichtdurchlässigen Polymer, bestehen.

Bevorzugt ist die Vorrichtung dadurch gekennzeichnet, dass sie keinen Polarisator auf Polymerbasis, besonders bevorzugt keinen in fester Materiephase vorliegenden Polarisator und ganz besonders bevorzugt überhaupt keinen Polarisator umfasst.

Die Vorrichtung kann jedoch gemäß einer alternativen Ausführungsform auch einen oder mehrere Polarisatoren aufweisen. Bevorzugt sind die Polarisatoren in diesem Fall Linearpolarisatoren.

Wenn genau ein Polarisator vorhanden ist, so ist dessen Absorptionsrichtung bevorzugt senkrecht stehend zur Orientierungsachse der Verbindungen des flüssigkristallinen Materials der erfindungsgemäßen Vorrichtung auf derjenigen Seite der Schaltschicht, auf der sich der Polarisator befindet.

In der erfindungsgemäßen Vorrichtung können sowohl absorptive als auch reflektive Polarisatoren eingesetzt werden. Bevorzugt werden Polarisatoren verwendet, die als dünne optische Filme vorliegen. Beispiele für reflektive Polarisatoren, die in der erfindungsgemäßen Vorrichtung verwendet werden können, sind DRPF- (diffusive reflective polariser film, 3M), DBEF- (dual brightness enhanced film, 3M), DBR- (layered-polymer distributed Bragg reflectors, wie in US 7,038,745 und US 6,099,758 beschrieben) und APF-Filme (advanced polariser film, 3M, vgl. Technical Digest SID 2006, 45.1, US 2011/0043732 und US 7023602). Weiterhin können Polarisatoren basierend auf Drahtgittern (WGP, wire-gridpolarisers), welche Infrarotlicht reflektieren, eingesetzt werden. Beispiele für absorptive Polarisatoren, welche in den erfindungsgemäßen Vorrichtungen eingesetzt werden können, sind der Itos XP38-Polarisatorfilm und der Nitto Denko GU-1220DUN-Polarisatorfilm. Ein Beispiel für einen circularen Polarisator, welcher erfindungsgemäß verwendet werden kann, ist der Polarisator APNCP37-035-STD (American Polarizers). Ein weiteres Beispiel ist der Polarisator CP42 (ITOS).

Weiterhin bevorzugt enthält erfindungsgemäße Vorrichtung ein Lichtleitsystem, das Licht zu einer Solarzelle oder einer sonstigen Vorrichtung zur Umwandlung von Licht und/oder Wärmeenergie in elektrische Energie leitet, bevorzugt wie in WO 2009/141295 beschrieben. Das Lichtleitsystem sammelt und konzentriert Licht, das auf die Vorrichtung trifft. Bevorzugt sammelt und konzentriert es Licht, das von der Farbstoffverbindung emittiert wird. Das Lichtleitsystem steht mit einer Vorrichtung zur Umwandlung von Lichtenergie in elektrische Energie, bevorzugt einer Solarzelle, in Kontakt, so dass das gesammelte Licht konzentriert auf diese trifft. In einer bevorzugten Ausführungsform der Erfindung ist die Vorrichtung zur Umwandlung von Lichtenergie in elektrische Energie am Rand der Vorrichtung angebracht, in diese integriert und elektrisch mit Mitteln zur elektrischen Schaltung der erfindungsgemäßen Vorrichtung verbunden.

Die erfindungsgemäße Vorrichtung ist Bestandteil eines Fensters, bevorzugt eines Fensters enthaltend mindestens eine Glasfläche, besonders bevorzugt eines Fensters, welches Mehrscheiben-Isolierglas enthält.

Unter Fenster wird dabei insbesondere eine Struktur in einem Gebäude verstanden, welche einen Rahmen und mindestens eine von diesem Rahmen umfasste Glasscheibe enthält. Bevorzugt enthält sie einen wärmeisolierenden Rahmen und zwei oder mehr Glasscheiben (Mehrscheiben-Isolierglas) .

Gemäß einer bevorzugten Ausführungsform ist die erfindungsgemäße Vorrichtung direkt auf einer Glasfläche eines Fensters aufgebracht, besonders bevorzugt im Zwischenraum zwischen zwei Glasscheiben von Mehrscheiben-Isolierglas.

Ein Fenster enthaltend eine erfindungsgemäße Vorrichtung, bevorzugt mit den oben angegebenen bevorzugten Merkmalen, ist Gegenstand der Erfindung.

**Ausführungsbeispiele**

A) Herstellung von flüssigkristallinen Mischungen

Es werden die Vergleichsmischungen V1, V2, E1, E2 und E7 bis E10 hergestellt.

Die Zusammensetzung der Mischungen V1, V2 und E1 - E10 ist im Folgenden angegeben. Dabei werden die chemischen Strukturen der einzelnen Bestandteile der Mischungen durch Abkürzungen wiedergegeben (Akronyme). Diese Abkürzungen sind in WO 2012/052100 explizit vorgestellt und erklärt (S. 63 - 89), so dass zur Erläuterung auf die genannte Anmeldung verwiesen wird.

Die folgenden Abkürzungen entsprechen nicht der genannten Nomenklatur, so dass die entsprechenden chemischen Strukturen explizit genannt werden.

| |
|---|
| 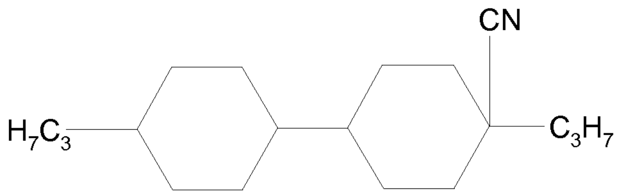 |
| CCN-33 |
| 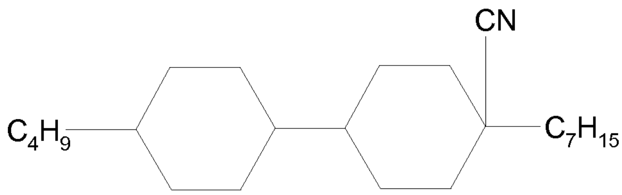 |
| CCN-47 |
| 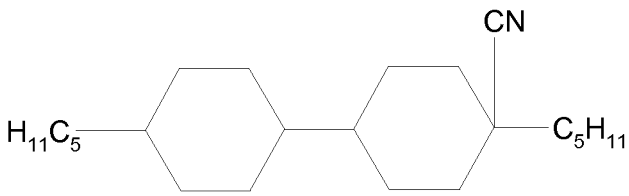 |
| CCN-55 |
| 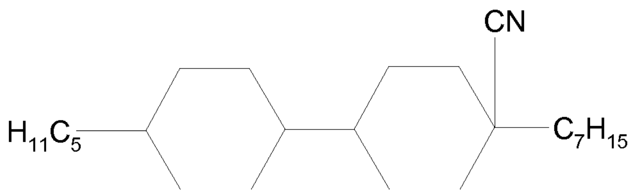 |
| CCN-57 |
| 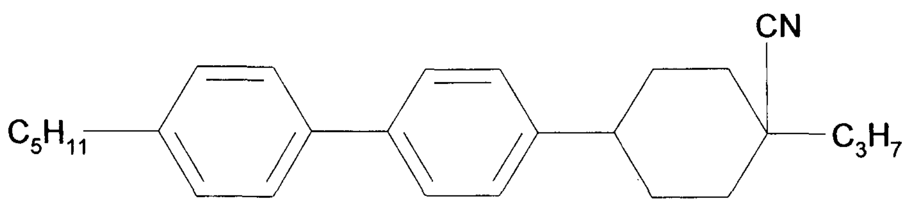 |
| NCB-53 |

(fortgesetzt)

| |
|---|
| 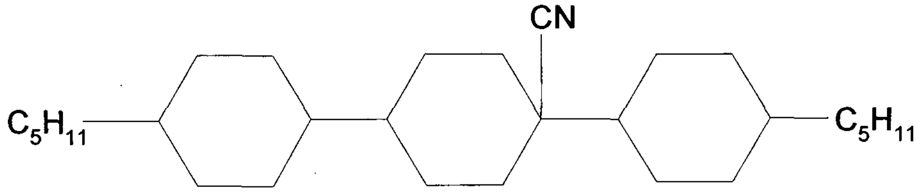 |
| BCN-55 |
| 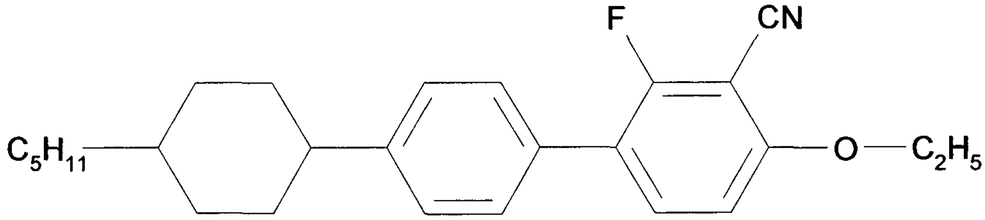 |
| BCH-502F.N |
| 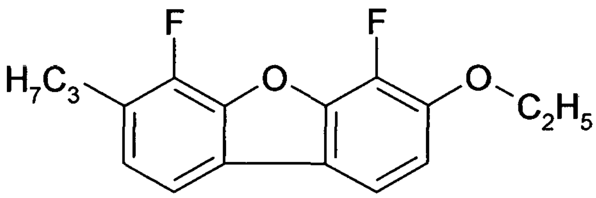 |
| B-3-O2 |
| 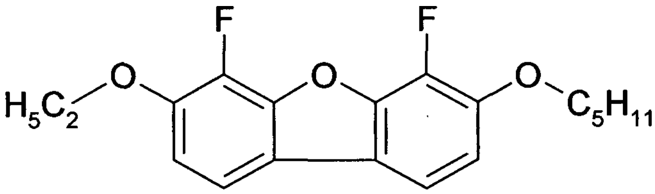 |
| B-2O-O5 |

Für die Mischungen sind der Klärpunkt in Grad Celsius, die optische Anisotropie Δn und die dielektrische Anisotropie Δε angegeben. Die physikalischen Eigenschaften werden nach "Merck Liquid Crystals, Physical Properties of Liquid Crystals", Status Nov. 1997, Merck KGaA, Deutschland bestimmt und gelten für eine Temperatur von 20°C. Der Wert von Δn wird bei 589 nm bestimmt und der Wert von Δε wird bei 1 kHz bestimmt.

Die Tieftemperaturstabilität wird in Flaschen und in ca. 6 Mikrometer dicken Testzellen jeweils bei Raumtemperatur (+20°C) und bei den Temperaturen -20°C, -30°C und -40°C ermittelt.

In Abständen von 24 h werden die Proben einer visuellen Inspektion auf Kristalle oder die Entstehung smektischer Phasen unterzogen. Solange bei keiner der genannten Temperaturen Kristalle oder smektische Phasen in Flasche oder Testzelle beobachtet werden, wird der Test fortgesetzt. Sobald auch in nur einer der Proben Kristalle oder smektische Phasen beobachtet werden, wird der Test beendet, und die erreichte Anzahl an Tagen wird als Tieftemperaturstabilität angegeben.

| Tabelle 1 | | |
|---|---|---|
| Mischung | **V1** | **V2** |
| Klärpunkt in °C | 91.5 | 79.5 |
| Δε | -3.7 | -3.1 |
| Δn | 0.078 | 0.100 |
| TieftemperaturStabilität | 8 Tage | 42 Tage |

(fortgesetzt)

| Zusammensetzung | | | | |
|---|---|---|---|---|
| | CY-3-02 | 12 | CY-3-02 | 12 |
| | CY-5-02 | 12 | CY-5-O2 | 13 |
| | CCY-3-O2 | 13 | CCY-3-O2 | 11 |
| | CCY-5-02 | 13 | CCY-5-O2 | 10 |
| | CCY-3-1 | 8 | CCY-2-1 | 9 |
| | CCZC-3-3 | 4 | CPP-3-2 | 6 |
| | CCZC-3-5 | 3 | CPP-5-2 | 4 |
| | CCZC-4-3 | 3 | CGP-3-2 | 6 |
| | CC-3-4 | 6 | CC-3-4 | 6 |
| | CC-3-5 | 6 | CC-3-5 | 6 |
| | CC-3-03 | 8 | CP-3-O2 | 17 |
| | CC-5-01 | 4 | | |
| | CC-5-O2 | 4 | | |
| | CP-3-O2 | 4 | | |

| Tabelle 2 | | | | |
|---|---|---|---|---|
| Mischung | **E1 (Vergleichsmischung)** | | **E2** | |
| Klärpunkt in °C | 100.5 | | 106 | |
| Δε | -4.8 | | -6 | |
| Δn | 0.044 | | 0.118 | |
| Tieftempe-ratur-Stabilität | > 42 Tage | | > 73 Tage | |
| Zusammensetzung | | | | |
| | CCN-47 | 20 | CCN-33 | 10 |
| | CCN-55 | 21 | CCN-47 | 10 |
| | CC-3-O1 | 11 | CCN-57 | 10 |
| | CC-5-O1 | 5 | CY-3-O2 | 5 |
| | CC-5-O2 | 5 | NCB-53 | 13 |
| | CCZC-3-3 | 4 | CCY-3-O2 | 5 |
| | CCZC-3-5 | 4 | CCY-3-O3 | 5 |
| | CCZC-4-3 | 4 | CCY-4-O2 | 6 |
| | CCZC-4-5 | 4 | CPY-2-O2 | 9 |
| | BCN-55 | 22 | CPY-3-O2 | 8 |
| | | | PYP-2-3 | 7 |
| | | | PYP-2-4 | 6 |
| | | | CGPC-3-3 | 2 |
| | | | CGPC-5-3 | 2 |
| | | | CGPC-5-5 | 2 |

| Tabelle 3 | | | | |
|---|---|---|---|---|
| Mischung | **E3** | | **E4** | |
| Klärpunkt in °C | 113.5 | | 107.5 | |
| Δε | -6.0 | | -4.9 | |
| Δn | 0.127 | | 0.103 | |
| Tieftemperatur-Stabilität | > 100 Tage | | > 83 Tage | |
| Zusammensetzung | | | | |
| | CCN-33 | 8 | CCN-33 | 13 |
| | CCN-47 | 8 | CCN-47 | 15 |
| | CCN-55 | 9 | CCN-55 | 12 |
| | CY-3-O2 | 5 | NCB-53 | 10 |
| | NCB-53 | 12 | CPY-2-O2 | 5 |
| | CCY-3-O2 | 5 | CPY-3-02 | 5 |
| | CCY-3-O3 | 5 | CCY-4-02 | 5 |
| | CCY-4-O2 | 6 | PYP-2-3 | 10 |
| | CPY-2-O2 | 9 | CP-3-01 | 8 |
| | CPY-3-O2 | 8 | CGPC-3-3 | 4 |
| | PYP-2-3 | 7 | CGPC-5-3 | 3 |
| | PYP-2-4 | 6 | CGPC-5-5 | 3 |
| | CGPC-3-3 | 2 | CCZPC-3-3 | 3 |
| | CGPC-5-3 | 2 | CCZPC-3-4 | 2 |
| | CGPC-55 | 2 | CCZPC-3-5 | 2 |
| | CPP-3-2 | 3 | | |
| | CPP-5-2 | 3 | | |

| Tabelle 4 | | | | |
|---|---|---|---|---|
| Mischung | **E5** | | **E6** | |
| Klärpunkt in °C | 111.5 | | 107.5 | |
| Δε | -4.7 | | 5.5 | |
| Δn | 0.124 | | 0.129 | |
| Tieftemperatur-Stabilität | > 73 Tage | | > 73 Tage | |
| Zusammensetzung | | | | |
| | CCN-47 | 10 | CCN-33 | 8 |
| | CCN-55 | 10 | CCN-47 | 10 |
| | CY-3-O2 | 6 | CCN-55 | 10 |
| | CP-3-O1 | 10 | CY-3-O2 | 10 |
| | NCB-53 | 10 | BCH-502F.N | 10 |
| | CPY-2-O2 | 7 | CPY-2-O2 | 6 |

(fortgesetzt)

| | | | | |
|---|---|---|---|---|
| Zusammensetzung | | | | |
| | CPY-3-O2 | 7 | CPY-3-O2 | 9 |
| | CCY-3-O2 | 6 | CCY-4-O2 | 5 |
| | CCY-5-O2 | 7 | PYP-2-3 | 10 |
| | PYP-2-3 | 10 | PYP-2-4 | 10 |
| | CGP-3-2 | 6 | CGPC-3-3 | 3 |
| | CGPC-3-3 | 3 | CGPC-5-3 | 3 |
| | CGPC-5-3 | 3 | CGPC-5-5 | 3 |
| | CGPC-5-5 | 2 | CCZPC-3-3 | 3 |
| | CCZPC-3-3 | 3 | | |

| Tabelle 5 | | | | |
|---|---|---|---|---|
| Mischung | **E7** | | **E8 (Vergleichsmischung)** | |
| Klärpunkt in °C | 110.5 | | 74 | |
| $\Delta\varepsilon$ | -4.9 | | -3.5 | |
| $\Delta n$ | 0.132 | | 0.101 | |
| TieftemperaturStabilität | > 76 Tage | | 13 Tage | |
| Zusammensetzung | | | | |
| | CY-3-O2 | 9 | CC-3-V | 41.5 |
| | CY-3-O4 | 9 | CCY-3-O1 | 5 |
| | CY-5-O2 | 12 | CCY-3-O2 | 11 |
| | CY-5-O4 | 8 | CCY-4-O2 | 6 |
| | CCY-3-O2 | 5 | CPY-2-O2 | 5 |
| | CCY-3-O3 | 5 | CPY-3-O2 | 11 |
| | CCY-4-O2 | 5 | CY-3-O2 | 3.5 |
| | CPY-2-O2 | 7 | PY-3-O2 | 12 |
| | CPY-3-O2 | 6 | B-3-O2 | 5 |
| | PYP-2-3 | 12 | | |
| | CCP-V-1 | 6 | | |
| | CCZPC-3-3 | 3 | | |
| | CCZPC-3-4 | 3 | | |
| | CGPC-3-3 | 5 | | |
| | CGPC-5-3 | 5 | | |

| Tabelle 6 | | |
|---|---|---|
| Mischung | **E9 (Vergleichsmischung)** | **E10 (Vergleichsmischung)** |
| Klärpunkt in °C | 74 | 87 |
| $\Delta\varepsilon$ | -3.6 | -4.8 |

(fortgesetzt)

| Tabelle 6 | | | | |
|---|---|---|---|---|
| Mischung | **E9 (Vergleichsmischung)** | | **E10 (Vergleichsmischung)** | |
| Δn | 0.101 | | 0.103 | |
| TieftemperaturStabilität | 15 Tage | | n. best. | |
| Zusammensetzung | | | | |
| | CC-3-V | 40.5 | CY-3-O2 | 12.5 |
| | CCY-3-O1 | 5 | CCY-3-O1 | 9 |
| | CCY-3-O2 | 11 | CCY-3-O2 | 11 |
| | CCY-4-O2 | 6 | CCY-4-O2 | 7 |
| | CPY-2-O2 | 5.5 | CPY-3-O2 | 3 |
| | CPY-3-O2 | 11 | CC-3-V | 31 |
| | CY-3-O2 | 5 | B-2O-O5 | 4 |
| | PY-3-O2 | 12 | PY-V2-O2 | 5.5 |
| | B-3-O2 | 4 | CPY-V-O2 | 6 |
| | | | CPY-V-O4 | 5 |
| | | | CCY-V-O2 | 6 |

B) Herstellung von flüssigkristallinen Mischungen enthaltend Farbstoffe und Bestimmung ihrer physikalischen Eigenschaften

Von allen unter A) aufgeführten Mischungen E1-E10 werden Mischungen enthaltend einen oder mehrere Farbstoffe hergestellt. Eine repräsentative Auswahl der Ergebnisse ist im Folgenden dargestellt.

B-1) Herstellung von Mischungen enthaltend den Farbstoff F1 und Bestimmung von Anisotropiegrad und Löslichkeit

Es werden Mischungen enthaltend den Farbstoff F1 in einer der flüssigkristallinen Mischungen V1, E1, E2, E3 und E7 hergestellt (Zusammensetzung s. Tabelle unten)

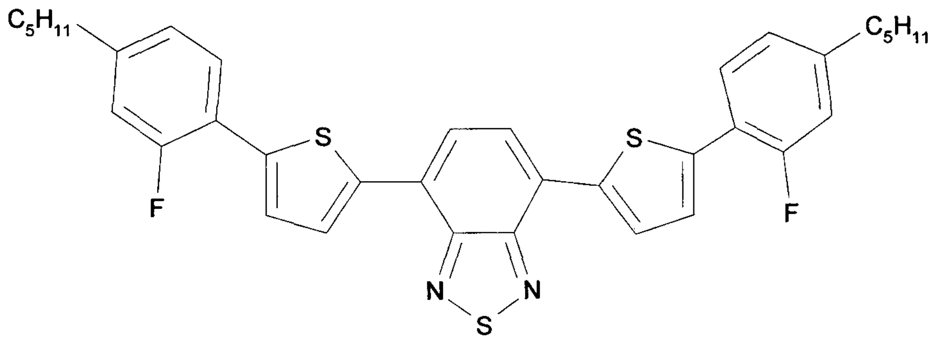

Farbstoff F1

Der Anisotropiegrad R wird ermittelt aus dem Wert für den Extinktionskoeffizienten E(p) (Extinktionskoeffizient der Mischung bei paralleler Ausrichtung der Moleküle zur Polarisationsrichtung des Lichts) und dem Wert für den Extinktionskoeffizienten der Mischung E(s) (Extinktionskoeffizient der Mischung bei senkrechter Ausrichtung der Moleküle zur Polarisationsrichtung des Lichts), jeweils bei der Wellenlänge des Maximums der Absorptionsbande des betreffenden Farbstoffs. Hat der Farbstoff mehrere Absorptionsbanden, so wird die langwelligste Absorptionsbande ausgewählt. Die Ausrichtung der Moleküle der Mischung wird durch eine Orientierungsschicht erreicht, wie sie dem Fachmann auf dem Gebiet der LC-Vorrichtungen bekannt ist. Zur Eliminierung von Einflüssen durch flüssigkristallines Medium, sonstigen

Absorptionen und/oder Reflexionen wird jeweils gegen eine identisch vorliegende Mischung, die keinen Farbstoff enthält, gemessen und der erhaltene Wert subtrahiert.

Die Messung erfolgt mit linear polarisiertem Licht, dessen Schwingungsrichtung entweder parallel zur Orientierungsrichtung ist (Bestimmung von E(p)) oder senkrecht zur Orientierungsrichtung ist (Bestimmung von E(s)). Dies kann durch einen Linearpolarisator erreicht werden, wobei der Polarisator gegen die Vorrichtung gedreht wird, um die beiden unterschiedlichen Schwingungsrichtungen zu realisieren. Die Messung von E(p) und E(s) erfolgt also über die Drehung der Schwingungsrichtung des eingestrahlten polarisierten Lichts. Alternativ kann auch die Probe gedreht werden gegen eine räumlich feststehende Polarisationsrichtung des eingestrahlen polarisierten Lichts.

Der Anisotropiegrad R wird aus den erhaltenen Werten für E(s) und E(p) nach der Formel

$$R=[E(p)-E(s)] / [E(p) + 2*E(s)]$$

berechnet, wie unter anderem in "Polarized Light in Optics and Spectroscopy", D. S. Kliger et al., Academic Press, 1990, angegeben. Eine detallierte Beschreibung des Verfahrens zur Bestimmung des Anisotropiegrads von flüssigkristallinen Medien enthaltend einen dichroitischen Farbstoff findet sich in B. Bahadur, Liquid Crystals - Applications and Uses, Vol. 3, 1992, World Scientific Publishing, Abschnitt 11.4.2.

Das genannte Verfahren wird identisch in allen folgenden Beispielen eingesetzt.

| Flüssigkristalline Mischung | Farbstoff | Konzentr. des Farbstoffs | Wellenlänge der maximalen Absorption | Anisotropiegrad |
|---|---|---|---|---|
| V1 (Vgl.) | F1 | 0.25 Gew.-% | 504 nm | 0.73 |
| E1 (Vgl.) | F1 | 0.25 Gew.-% | 507 nm | 0.74 |
| E2 | F1 | 0.25 Gew.-% | 507 nm | 0.75 |
| E3 | F1 | 0.25 Gew.-% | 506 nm | 0.75 |
| E7 | F1 | 0.25 Gew.-% | 505 nm | 0.77 |

Die Ergebnisse zeigen, dass der Anisotropiegrad in den Mischungen höher ist als in den Vergleichsmischungen.

Weiterhin wird die Löslichkeit des Farbstoffs F1 in den verschiedenen flüssigkristallinen Mischungen bei +20°C und -20°C untersucht.

| Flüssigkristalline Mischung | Farbstoff | Temperatur | Maximale Löslichkeit (Beobachtung nach 1 Woche) |
|---|---|---|---|
| V1 (Vgl) | F1 | +20°C | 1.4 Gew.-% |
| V1 (Vgl) | F1 | -20°C | 0.9 Gew.-% |
| E1 (Vgl) | F1 | +20°C | 1.4 Gew.-% |
| E1 (Vgl) | F1 | -20°C | 3.3 Gew.-% |
| E2 | F1 | +20°C | 4 Gew.-% |
| E2 | F1 | -20°C | 4 Gew.-% |
| E7 | F1 | +20°C | 1.3 Gew.-% |
| E7 | F1 | -20°C | 3.3 Gew.-% |

Dabei wird gefunden, dass die Löslichkeit in den Mischungen deutlich höher ist als in der Vergleichsmischung V1.

B-2) Herstellung von Mischungen enthaltend den Farbstoff F2 und Bestimmung von Anisotropiegrad und Löslichkeit

Es wird wie in B-1) angegeben vorgegangen.

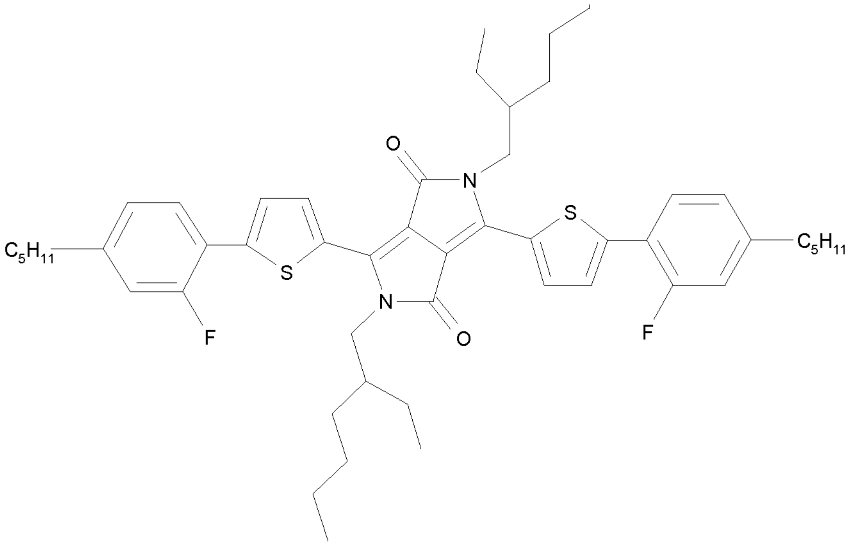

Farbstoff F2

| Flüssigkristalline Mischung | Farbstoff | Konzentr. des Farbstoffs | Wellenlänge der maximalen Absorption | Anisotropie grad |
|---|---|---|---|---|
| V1 (Vgl) | F2 | 0.25 Gew.-% | 615 nm | 0.81 |
| E2 | F2 | 0.25 Gew.-% | 615 nm | 0.80 |
| E3 | F2 | 0.25 Gew.-% | 617 nm | 0.81 |
| E7 | F2 | 0.25 Gew.-% | 617 nm | 0.81 |

| Flüssigkristalline Mischung | Farbstoff | Temperatur | Maximale Löslichkeit (Beobachtung nach Woche) |
|---|---|---|---|
| V1 (Vgl) | F2 | +20°C | 2.0 Gew.-% (1) |
| V1 (Vgl) | F2 | -20°C | 1.8 Gew.-% (1) |
| E2 | F2 | +20°C | 2.6 Gew.-% (1) |
| E2 | F2 | -20°C | 2.0 Gew.-% (1) |
| E3 | F2 | +20°C | 1.2 Gew.-% (4) |
| E3 | F2 | -20°C | 1.8 Gew.-% (4) |
| E7 | F2 | +20°C | 1.4 Gew.-% (12) |
| E7 | F2 | -20°C | 1.8 Gew.-% (12) |

Die Ergebnisse zeigen, dass mit den flüssigkristallinen Mischungen verbesserte Löslichkeiten bei vergleichbaren Anisotropiegraden erreicht werden.

B-3) Herstellung von Mischungen enthaltend den Farbstoff F3 und Bestimmung von Anisotropiegrad und Löslichkeit

Es wird wie in B-1) angegeben vorgegangen.

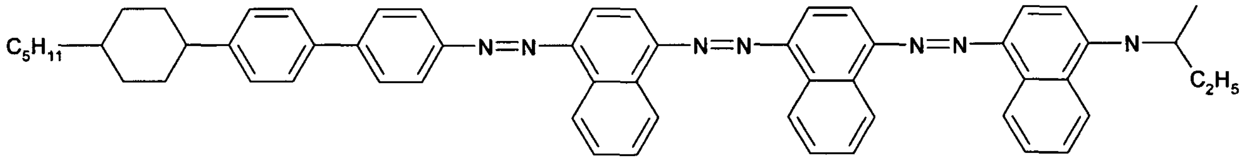

Farbstoff F3

| Flüssigkristalline Mischung | Farbstoff | Konzentr. des Farbstoffs | Wellenlänge der maximalen Absorption | Anisotropiegrad |
|---|---|---|---|---|
| V1 (Vgl) | F3 | 0.25Gew.-% | 613 nm | 0.81 |
| E2 | F3 | 0.25Gew.-% | 630 nm | 0.78 |
| E7 | F3 | 0.25Gew.-% | 617nm | 0.84 |

| Flüssigkristalline Mischung | Farbstoff | Temperatur | Maximale Löslichkeit (Beobachtung nach 1 Woche) |
|---|---|---|---|
| V1 (Vgl.) | F3 | +20°C | 0.8 Gew.-% |
| V1 (Vgl.) | F3 | -20°C | 2.3 Gew.-% |
| E1 (Vgl.) | F3 | +20°C | 3.9 Gew.-% |
| E1 (Vgl.) | F3 | -20°C | 4.0 Gew.-% |
| E2 | F3 | +20°C | 4.5 Gew.-% |
| E2 | F3 | -20°C | 4.6 Gew.-% |
| E7 | F3 | +20°C | 4.1 Gew.-% |
| E7 | F3 | -20°C | 4.1 Gew.-% |

Die Ergebnisse zeigen, dass mit den flüssigkristallinen Mischungen verbesserte Löslichkeiten bei vergleichbaren Anisotropiegraden erreicht werden.

B-4) Herstellung von Mischungen enthaltend den Farbstoff F4 und Bestimmung von Anisotropiegrad und Löslichkeit

Es wird wie in B-1) angegeben vorgegangen.

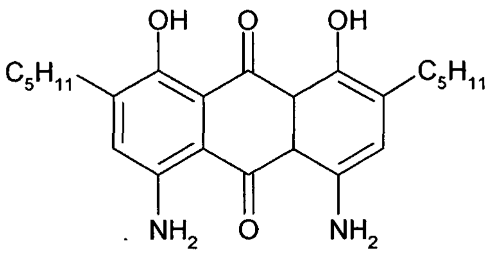

Farbstoff F4

| Flüssigkristalline Mischung | Farbstoff | Konzentr. des Farbstoffs | Wellenlänge der maximalen Absorption | Anisotropiegrad |
|---|---|---|---|---|
| V1 (Vgl) | F4 | 0.25 Gew.-% | 630 nm | 0.68 |
| E3 | F4 | 0.25 Gew.-% | 633 nm | 0.68 |

(fortgesetzt)

| Flüssigkristalline Mischung | Farbstoff | Konzentr. des Farbstoffs | Wellenlänge der maximalen Absorption | Anisotropiegrad |
|---|---|---|---|---|
| E7 | F4 | 0.25 Gew.-% | 631 nm | 0.71 |

Die Ergebnisse zeigen, dass mit den flüssigkristallinen Mischungen vergleichbare oder bessere Anisotropiegrade erreicht werden als mit der Vergleichsmischung V1.

B-5) Herstellung von Mischungen enthaltend den Farbstoff F5 und Bestimmung von Anisotropiegrad und Löslichkeit

Es wird wie in B-1) angegeben vorgegangen.

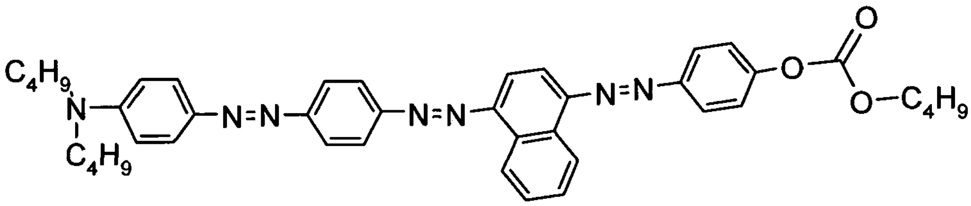

Farbstoff F5

| Flüssigkristalline Mischung | Farbstoff | Konzentr. des Farbstoffs | Wellenlänge der maximalen Absorption | Anisotropiegrad |
|---|---|---|---|---|
| V1 (Vgl) | F5 | 0.25 Gew.-% | 539 nm | 0.80 |
| E3 | F5 | 0.25 Gew.-% | 545 nm | 0.80 |
| E7 | F5 | 0.25 Gew.-% | 543 nm | 0.81 |

Die Mischungen zeigen gleich gute oder bessere Anisotropiegrade wie die Vergleichsmischung V1 für den Farbstoff F5.

B-6) Herstellung von Mischungen enthaltend den Farbstoff F6 und Bestimmung von Anisotropiegrad und Löslichkeit

Es wird wie in B-1) angegeben vorgegangen.

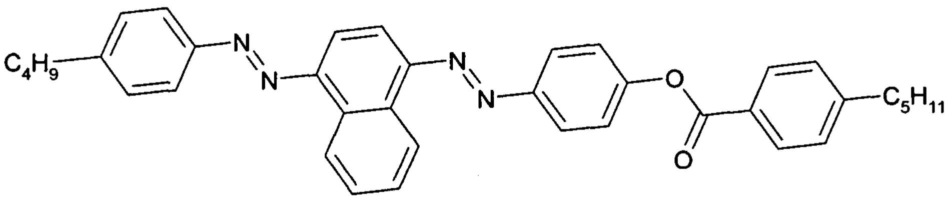

Farbstoff F6

| Flüssigkristalline Mischung | Farbstoff | Konzentr. des Farbstoffs | Wellenlänge der maximalen Absorption | Anisotropiegrad |
|---|---|---|---|---|
| V1 (Vgl) | F6 | 0.25 Gew.-% | 447 nm | 0.81 |
| E3 | F6 | 0.25 Gew.-% | 453 nm | 0.81 |
| E7 | F6 | 0.25 Gew.-% | 451 nm | 0.81 |

Das Beispiel zeigt, dass die Mischungen für den Farbstoff F6 ähnliche Anisotropiegrade wie die Vergleichsmischung V1 aufweisen.

Mit der Vergleichsmischung V2 werden ähnliche Werte für Anisotropiegrad und Löslichkeit der Farbstoffe erhalten wie für die Vergleichsmischung V1.

Die obenstehenden Beispiele zeigen, dass mit den erfindungsgemäßen Verbindungen flüssigkristalline Mischungen mit verschiedensten Farbstoffen hergestellt werden können. Die erhaltenen Mischungen zeichnen sich durch hohe Anisotropiegrade und hohe Löslichkeit der Farbstoffverbindungen bei hoher Lösungsstabilität aus und sind damit hervorragend zur Verwendung in Vorrichtungen zur Regulierung des Lichtdurchtritts geeignet.

C) Verwendung der erfindungsgemäßen Mischung E7 in einer Vorrichtung zur Regulierung des Lichtdurchtritts

C-1) Es wird eine Mischung aus der flüssigkristallinen Mischung E7 und den Farbstoffen F1 (0.10 Gew.-%), F2 (0.23 Gew.-%), F7 (0.09 Gew.-%) und F8 (0.33 Gew.-%) hergestellt.

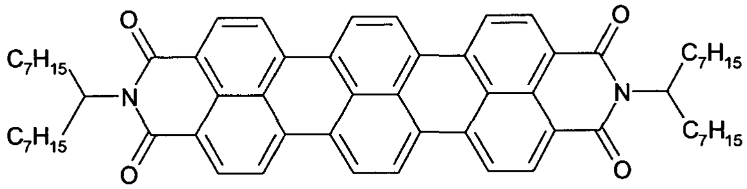

Farbstoff F7

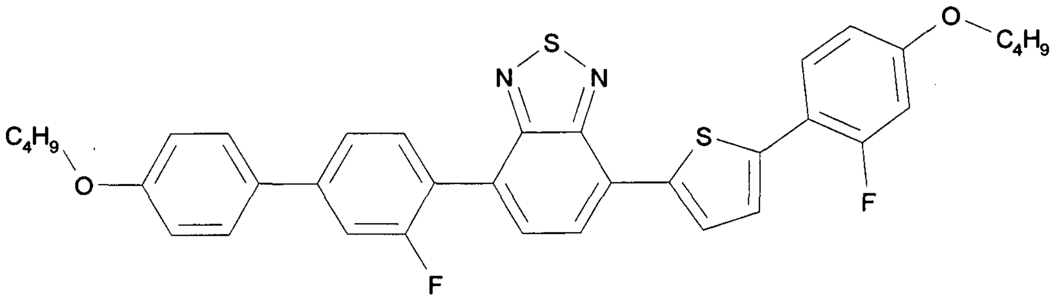

Farbstoff F8

Für die Mischung wird nach oben angegebenem Verfahren der Anisotropiegrad bestimmt. Dieser beträgt 0.8 über einen weiten Bereich von 430nm bis 630nm Wellenlänge des Lichts.

Das flüssigkristalline Material enthaltend die Farbstoffe wird in eine Vorrichtung zur Regulierung des Lichtdurchtritts gefüllt. Diese weist die folgende Schichtenfolge auf:

- Substratschicht aus Glas
- elektrisch leitfähige transparente Schicht aus ITO, 200 Angström
- Orientierungsschicht aus Polyimid, antiparallel gerieben
- Schaltschicht enthaltend das flüssigkristalline Material, 24.4 μm
- Orientierungsschicht aus Polyimid
- elektrisch leitfähige transparente Schicht aus ITO
- Substratschicht aus Glas

Das flüssigkristalline Material ist in dieser Anordnung planar mit antiparallelem Pretiltwinkel orientiert. Diese Orientierung wird durch antiparallel zueinander geriebene Polyimidschichten erreicht. Die Dicke der Flüssigkristallschicht wird durch Spacer kontrolliert. Die ITO-Schicht wird elektrisch kontaktiert, so dass eine elektrische Spannung über die Schaltschicht enthaltend das flüssigkristalline Material angelegt werden kann.

Durch Anlegen von Spannung kann farbneutrales Schalten der Vorrichtung zwischen Dunkel (keine Spannung) und Hell (Spannung) erreicht werden. Der Farbeindruck ist dabei grau.

Es werden für die Vorrichtung in den beiden Schaltzuständen die folgenden Werte für den Lichttransmissionsgrad $\tau_V$ erhalten:

$$\tau_{v\ hell} = 84\ \%$$

$$\tau_{v\ dunkel} = 49\ \%.$$

Die Berechnung der Lichttransmissionsgrade $\tau_{v\ hell}$ und $\tau_{v\ dunkel}$ erfolgt gemäß der Europäischen Norm EN410, Gleichung (1) (Bestimmung der lichttechnischen und strahlungsphysikalischen Kenngrößen von Verglasungen). Die Lichttransmissionsgrade $\tau_v$ gemäß dieser Norm berücksichtigen die relative spektrale Verteilung der Normlichtart und den spektralen Hellempfindlichkeitsgrad des Normalbeobachters.

Es wird eine weitere erfindungsgemäße Vorrichtung hergestellt, welche zwei Schaltschichten umfasst, wie in den Ausführungsbeispielen der noch nicht offengelegten Anmeldung EP13002445.8 offenbart. Die Vorrichtung hat die folgende Schichtenanordnung:

- Glasschicht
- ITO-Schicht, 200 Angström
- Orientierungsschicht aus Polyimid, antiparallel gerieben
- Schaltschicht enthaltend das flüssigkristalline Material, 24.4 µm
- Orientierungsschicht aus Polyimid, antiparallel gerieben
- ITO-Schicht, 200 Angström
- Glasschicht
- Schichtenabfolge wie oben genannte 7 Schichten, um 90° gedreht gegen diese um eine Achse senkrecht durch die Schichten.

Es werden für die Vorrichtung in den beiden Schaltzuständen die folgenden Werte für den Lichttransmissionsgrad $\tau_v$ erhalten:

$$\tau_{v\ hell} = 71\ \%$$

$$\tau_{v\ dunkel} = 11\ \%.$$

C-2) Es wird eine Mischung aus der flüssigkristallinen Mischung E7 und den Farbstoffen F1 (0.103 Gew.-%), F8 (0.287 Gew.-%), F9 (0.101 Gew.-%) und F10 (0.518 Gew.-%) hergestellt.

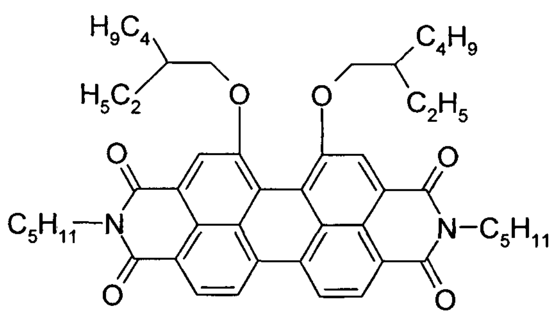

Farbstoff F9

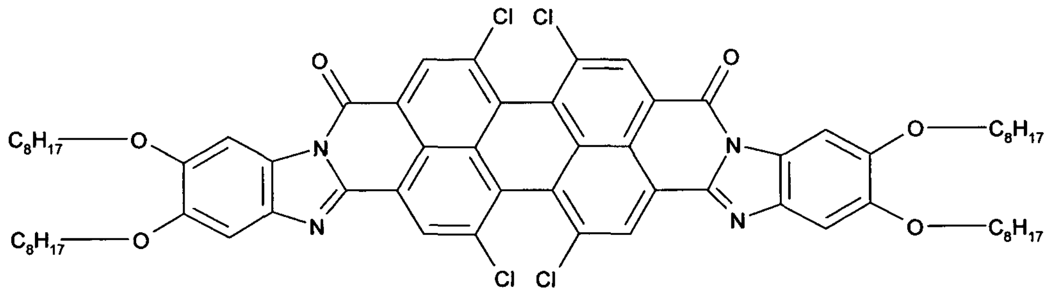

Farbstoff F10

Mit dieser Mischung wird, wie oben unter 1) angegeben, eine Vorrichtung zur Regulierung des Lichtdurchtritts mit einzelner Schaltschicht hergestellt.

Es werden für die Vorrichtung in den beiden Schaltzuständen die folgenden Werte für den Lichttransmissionsgrad $\tau_V$ erhalten:

$$\tau_{V\ hell} = 81\ \%$$

$$\tau_{V\ dunkel} = 47\ \%.$$

Zusätzlich wird mit dieser Mischung, wie ebenfalls oben unter 1) angegeben, eine Vorrichtung zur Regulierung des Lichtdurchtritts mit doppelter Schaltschicht hergestellt.

Es werden für die Vorrichtung in den beiden Schaltzuständen die folgenden Werte für den Lichttransmissionsgrad $\tau_V$ erhalten:

$$\tau_{V\ hell} = 66\ \%$$

$$\tau_{V\ dunkel} = 10\ \%.$$

C-3) Es wird eine Mischung aus der flüssigkristallinen Mischung E7 und den Farbstoffen F1 (0.048 Gew.-%), F8 (0.223 Gew.-%), F9 (0.116 Gew.-%) und F11 (0.679 Gew.-%) hergestellt.

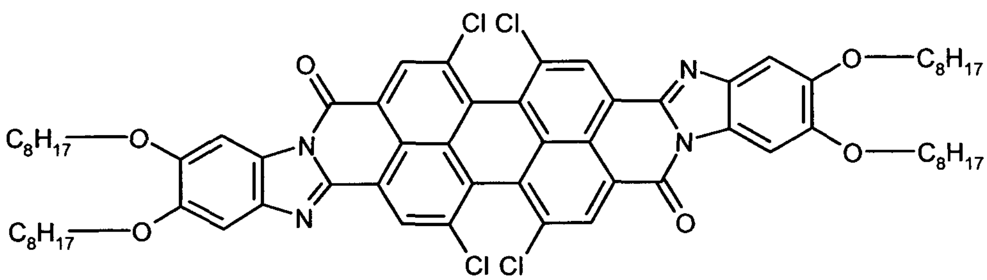

Farbstoff F11

Mit dieser Mischung wird wie oben unter 1) angegeben eine Vorrichtung zur Regulierung des Lichtdurchtritts mit einzelner Schaltschicht hergestellt.

Es werden für die Vorrichtung in den beiden Schaltzuständen die folgenden Werte für den Lichttransmissionsgrad $\tau_V$ erhalten:

$$\tau_{V\ hell} = 82\ \%$$

$$\tau_{v\ dunkel} = 48\ \%.$$

Zusätzlich wird mit dieser Mischung, wie ebenfalls oben unter 1) angegeben, eine Vorrichtung zur Regulierung des Lichtdurchtritts mit doppelter Schaltschicht hergestellt.

Es werden für die Vorrichtung in den beiden Schaltzuständen die folgenden Werte für den Lichttransmissionsgrad $\tau_V$ erhalten:

$$\tau_{v\ hell} = 68\ \%$$

$$\tau_{v\ dunkel} = 12\ \%.$$

## Patentansprüche

1. Fenster, enthaltend eine Vorrichtung zur Regulierung des Lichtdurchtritts, wobei die Vorrichtung eine Schicht enthaltend ein flüssigkristallines Material enthaltend mindestens drei verschiedene Farbstoffverbindungen aufweist, wobei das flüssigkristalline Material einen Klärpunkt von mindestens 95°C hat, mindestens eine Verbindung V enthält, die mindestens eine Einheit gewählt aus Einheiten der Formeln (E-1), (E-2) und (E-3) umfasst

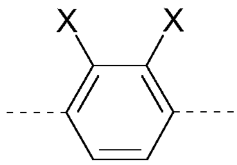

Formel (E-1)

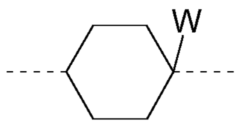

Formel (E-2)

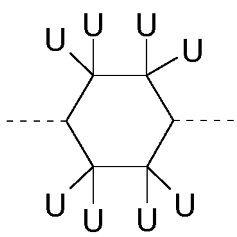

Formel (E-3),

wobei

X bei jedem Auftreten gleich oder verschieden gewählt ist aus F, Cl, Br, I, -CN, -NCO, -NCS, -SCN, -OCN, -NC, -CNO, -CNS und $N_3$;
W bei jedem Auftreten gleich oder verschieden gewählt ist aus F, Cl, Br, I, -CN, -NCO, -NCS, -SCN, -OCN, -NC, -CNO, -CNS und $N_3$;
U bei jedem Auftreten gleich oder verschieden gewählt ist aus H, F, Cl, Br, I, CN, -NCO, -NCS, -SCN, -OCN, -NC, -CNO, -CNS, $N_3$, und Alkyl-, Alkoxy- oder Alkylthiogruppen mit 1 bis 10 C-Atomen, wobei ein oder mehrere

Wasserstoffatome in den Alkyl-, Alkoxy- oder Alkylthiogruppen durch F oder Cl ersetzt sein können, und wobei eine oder mehrere $CH_2$-Gruppen in den Alkyl-, Alkoxy- oder Alkylthiogruppen durch O oder S ersetzt sein können;

gestrichelte Linien Bindungen an den Rest der Verbindung symbolisieren,
und mindestens eine Gruppe U je Einheit der Formel (E-3) gewählt ist aus F, Cl, Br, I, CN, -NCO, -NCS, -SCN, -OCN, -NC, -CNO, -CNS und $N_3$,
und eine oder mehrere Verbindungen umfasst, die der Formel (F-1) entsprechen

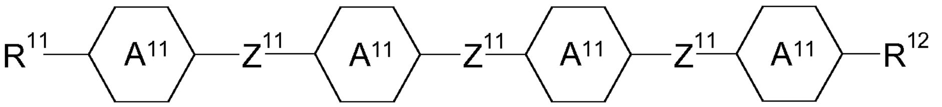 (F-1)

wobei

$R^{11}$, $R^{12}$ bei jedem Auftreten gleich oder verschieden F, Cl, -CN, -NCS, -SCN, $R^3$-O-CO- , $R^3$-CO-O- oder eine Alkyl- oder Alkoxygruppe mit 1 bis 10 C-Atomen oder eine Alkenyl- oder Alkenyloxygruppe mit 2 bis 10 C-Atomen darstellt, wobei ein oder mehrere Wasserstoffatome in den oben genannten Gruppen durch F oder Cl ersetzt sein können, und eine oder mehrere $CH_2$-Gruppen durch O oder S ersetzt sein können; und
$R^3$ bei jedem Auftreten gleich oder verschieden eine Alkylgruppe mit 1 bis 10 C-Atomen darstellt, bei der ein oder mehrere Wasserstoffatome durch F oder Cl ersetzt sein können, und bei der eine oder mehrere $CH_2$-Gruppen durch O oder S ersetzt sein können;
$Z^{11}$ bei jedem Auftreten gleich oder verschieden ausgewählt ist aus -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$, $-CH_2O-$, und einer Einfachbindung; und
$A^{11}$ bei jedem Auftreten gleich oder verschieden ausgewählt ist aus den folgenden Gruppen

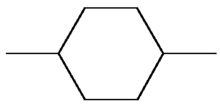 , 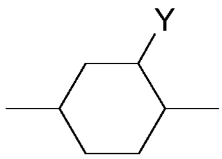 , 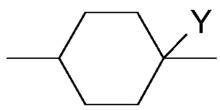 ,

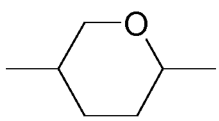 , 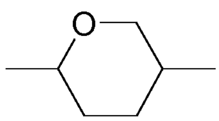 , 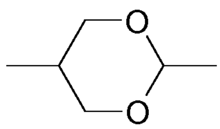 ,

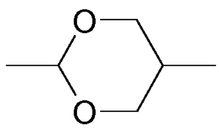 , 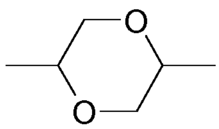 , 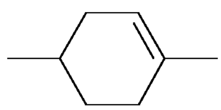 ,

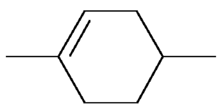 , 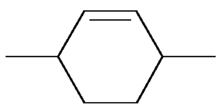 , 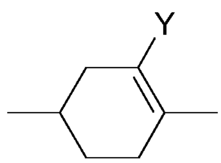 ,

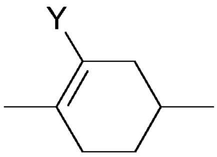 , 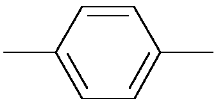 , 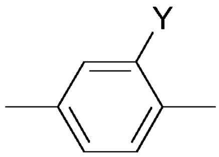 ,

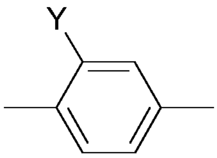 , 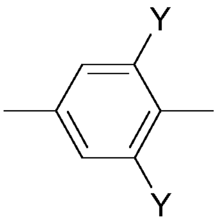 , 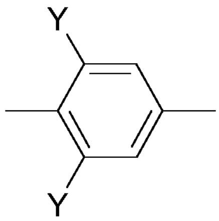 ,

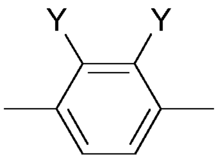 , 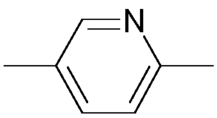 , 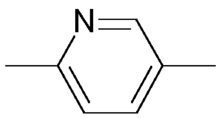 ,

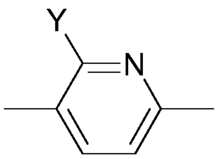 , 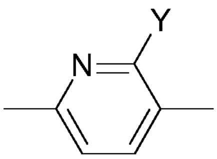 , 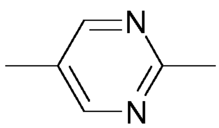 ,

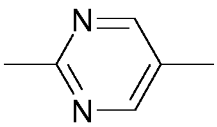 . 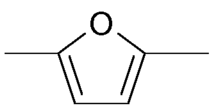 . 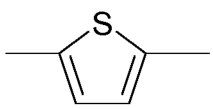 .

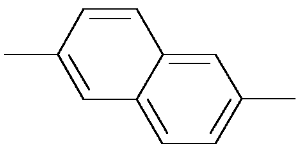 , 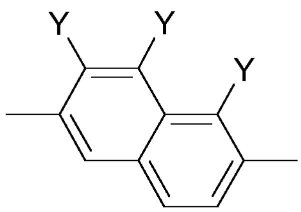 ,

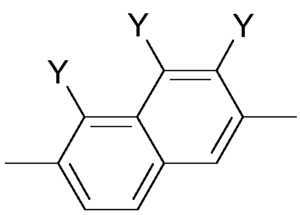 , 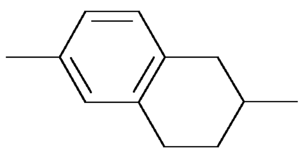 ,

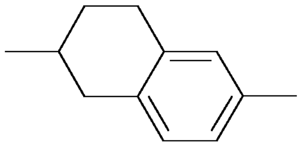,
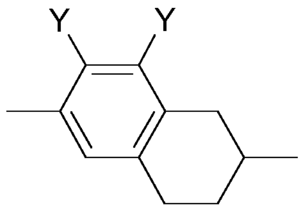,

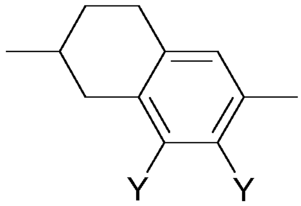,
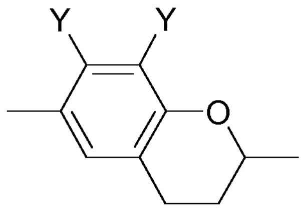,

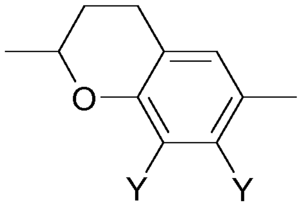,
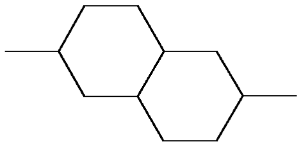,
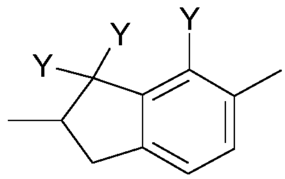,

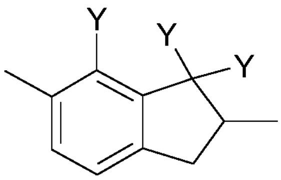,
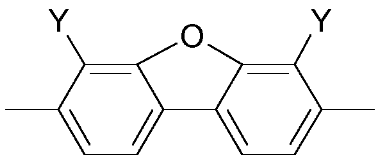,

und

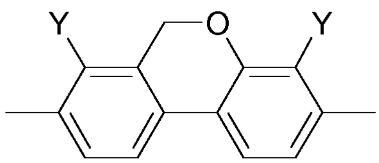,

wobei

Y bei jedem Auftreten gleich oder verschieden gewählt ist aus F, Cl, CN, und Alkyl-, Alkoxy- oder Alkylthiogruppen mit 1 bis 10 C-Atomen, wobei ein oder mehrere Wasserstoffatome in den Alkyl-, Alkoxy- oder Alkylthiogruppen durch F oder Cl ersetzt sein können, und wobei eine oder mehrere $CH_2$-Gruppen in den Alkyl-, Alkoxy- oder Alkylthiogruppen durch O oder S ersetzt sein können.

2. Fenster nach Anspruch 1, **dadurch gekennzeichnet, dass** die Verbindung V genau eine Einheit gewählt aus Einheiten der Formel (E-1), (E-2) und (E-3) enthält.

3. Fenster nach Anspruch 1 oder 2, **dadurch gekennzeichnet, dass** die Verbindung V eine Struktur gemäß der folgenden Formel aufweist

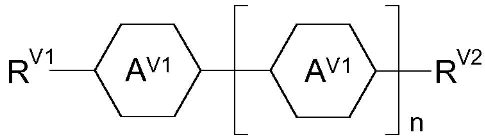

Formel (V),

wobei

$R^{V1}$,$R^{V2}$ bei jedem Auftreten gleich oder verschieden eine Alkyl- oder Alkoxygruppe mit 1 bis 10 C-Atomen oder eine Alkenyl- oder Alkenyloxygruppe mit 2 bis 10 C-Atomen darstellt, wobei ein oder mehrere Wasserstoffatome in den oben genannten Gruppen durch F oder Cl ersetzt sein können, und eine oder mehrere $CH_2$-Gruppen durch O oder S ersetzt sein können;

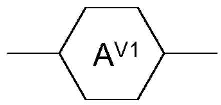

bei jedem Auftreten gleich oder verschieden ausgewählt ist aus den folgenden Gruppen

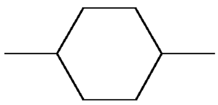 , 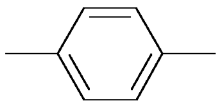 , 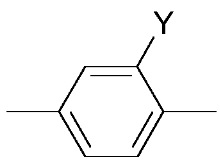 ,

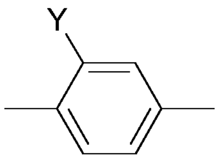 , 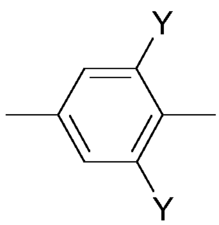 ,

oder Einheiten der Formel (E-1), (E-2) oder (E-3);
Y bei jedem Auftreten gleich oder verschieden gewählt ist aus F, Cl, CN, und Alkyl-, Alkoxy- oder Alkylthiogruppen mit 1 bis 10 C-Atomen, wobei ein oder mehrere Wasserstoffatome in den Alkyl-, Alkoxy- oder Alkylthiogruppen durch F oder Cl ersetzt sein können, und wobei eine oder mehrere $CH_2$-Gruppen in den Alkyl-, Alkoxy- oder Alkylthiogruppen durch O oder S ersetzt sein können;
n gleich 1, 2 oder 3 ist; und wobei mindestens eine der Gruppen

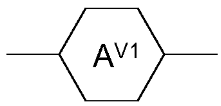

gewählt ist aus Einheiten der Formel (E-1), (E-2) oder (E-3).

4. Fenster nach Anspruch 3, **dadurch gekennzeichnet, dass** in Formel (V) $A^{V1}$ bei jedem Auftreten gleich oder verschieden gewählt ist aus

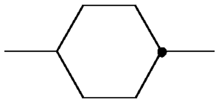 , 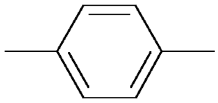 ,

und Einheiten der Formel (E-1-1a), (E-1-2a), (E-1-3a), (E-2-1) und (E-3-1).

5. Fenster nach einem oder mehreren der Ansprüche 1 bis 4, **dadurch gekennzeichnet, dass** das flüssigkristalline Material einen Klärpunkt von mindestens 100°C hat.

6. Fenster nach einem oder mehreren der Ansprüche 1 bis 5, **dadurch gekennzeichnet, dass** das flüssigkristalline Material eine dielektrische Anisotropie $\Delta\varepsilon$ von -2 bis -10 aufweist.

7. Fenster nach einem oder mehreren der Ansprüche 1 bis 6, **dadurch gekennzeichnet, dass** das flüssigkristalline Material einen Gesamtanteil von Verbindungen V von mindestens 40 Gew.-% aufweist.

8. Fenster nach einem oder mehreren der Ansprüche 1 bis 7, **dadurch gekennzeichnet, dass** das flüssigkristalline Material in einem Gesamtanteil von mindestens 10 Gew.-% Verbindungen enthält, die gewählt sind aus Verbindung(en) V, welche mindestens eine Einheit der Formel (E-2) umfassen, und Verbindung(en) der Formel (F-1).

9. Fenster nach einem oder mehreren der Ansprüche 1 bis 8, **dadurch gekennzeichnet, dass** das flüssigkristalline Material eine oder mehrere Verbindungen umfasst, die der Formel (F-2) entsprechen

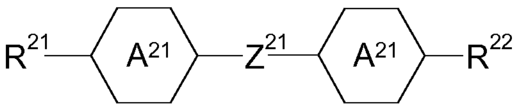

(F-2)

wobei

$R^{21}$ definiert ist wie $R^{11}$ in Anspruch 1;
$R^{22}$ definiert ist wie $R^{12}$ in Anspruch 1;
$Z^{21}$ definiert ist wie $Z^{11}$ in Anspruch 1; und
$A^{21}$ definiert ist wie $A^{11}$ in Anspruch 1.

10. Fenster nach einem oder mehreren der Ansprüche 1 bis 9, **dadurch gekennzeichnet, dass** der Anisotropiegrad R der Farbstoffverbindungen größer als 0,4 ist.

11. Fenster nach einem oder mehreren der Ansprüche 1 bis 10, **dadurch gekennzeichnet, dass** die Farbstoffverbindungen gewählt sind aus Azoverbindungen, Anthrachinonen, Methinverbindungen, Azomethinverbindungen, Merocyaninverbindungen, Naphthochinonen, Tetrazinen, Perylenen, Terrylenen, Quaterrylenen, höheren Rylenen, Benzothiadiazolen, Pyrromethenen und Diketopyrrolopyrrolen.

12. Fenster nach einem oder mehreren der Ansprüche 1 bis 11, wobei die Vorrichtung die folgende Schichtenabfolge aufweist, wobei zusätzlich weitere Schichten vorhanden sein können:

- Substratschicht
- elektrisch leitfähige transparente Schicht
- Orientierungsschicht
- Schaltschicht, enthaltend das flüssigkristalline Material
- Orientierungsschicht
- elektrisch leitfähige transparente Schicht
- Substratschicht.

## Claims

1. Window containing a device for regulating the passage of light, where the device comprises a layer comprising a

liquid-crystalline material comprising at least three different dye compounds,
where the liquid-crystalline material has a clearing point of at least 95°C, comprises at least one compound V which contains at least one unit selected from units of the formulae (E-1), (E-2) and (E-3)

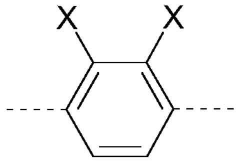

formula (E-1)

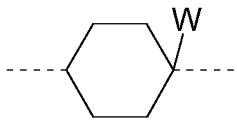

formula (E-2)

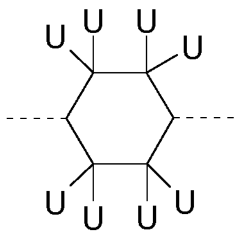

formula (E-3),

where

X is selected on each occurrence, identically or differently, from F, Cl, Br, I, -CN, -NCO, -NCS, -SCN, -OCN, -NC, -CNO, -CNS and $N_3$;
W is selected on each occurrence, identically or differently, from F, Cl, Br, I, -CN, -NCO, -NCS, -SCN, -OCN, -NC, -CNO, -CNS and $N_3$;
U is selected on each occurrence, identically or differently, from H, F, Cl, Br, I, CN, -NCO, -NCS, -SCN, -OCN, -NC, -CNO, -CNS, $N_3$, and alkyl, alkoxy or alkylthio groups having 1 to 10 C atoms, where one or more hydrogen atoms in the alkyl, alkoxy or alkylthio groups may be replaced by F or Cl, and where one or more $CH_2$ groups in the alkyl, alkoxy or alkylthio groups may be replaced by O or S;

dashed lines symbolise bonds to the remainder of the compound,
and at least one group U per unit of the formula (E-3) is selected from F, Cl, Br, I, CN, -NCO, -NCS, -SCN, -OCN, -NC, -CNO, -CNS and $N_3$,
and one or more compounds which conform to the formula (F-1)

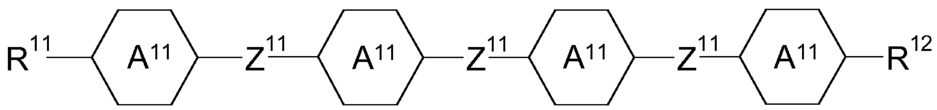
(F-1)

where

$R^{11}$, $R^{12}$ on each occurrence, identically or differently, represent F, Cl, -CN, -NCS, -SCN, $R^3$-O-CO-, $R^3$-CO-O- or an alkyl or alkoxy group having 1 to 10 C atoms or an alkenyl or alkenyloxy group having 2 to 10 C atoms, where one or more hydrogen atoms in the above-mentioned groups may be replaced by F or Cl, and one or more $CH_2$ groups may be replaced by O or S; and

$R^3$ on each occurrence, identically or differently, represents an alkyl group having 1 to 10 C atoms, in which one or more hydrogen atoms may be replaced by F or Cl, and in which one or more $CH_2$ groups may be replaced by O or S;

$Z^{11}$ is selected on each occurrence, identically or differently, from -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$, $-CH_2O-$ and a single bond; and

$A^{11}$ is selected on each occurrence, identically or differently, from the following groups

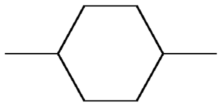 , 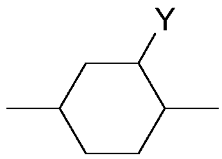 , 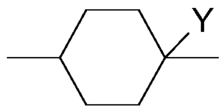 ,

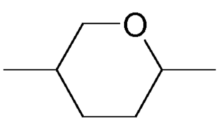 , 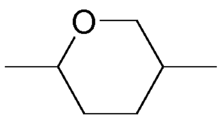 , 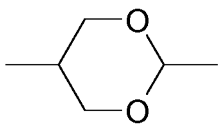 ,

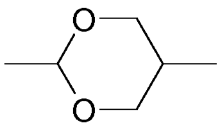 , 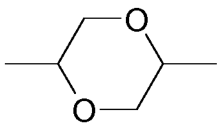 , 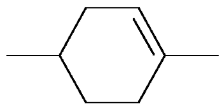 ,

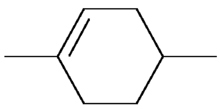 , 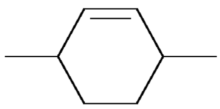 , 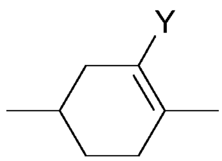 ,

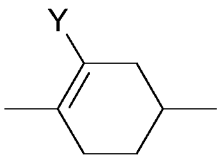 , 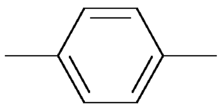 , 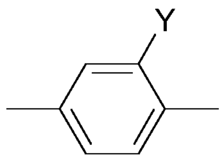 ,

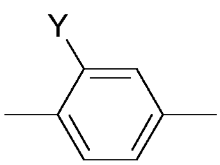 , 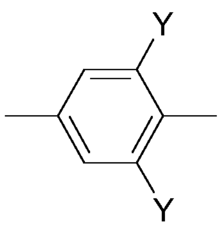 , 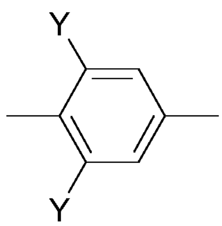 ,

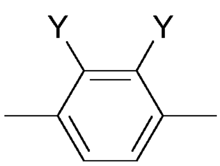 , 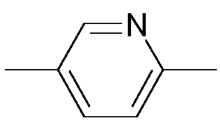 , 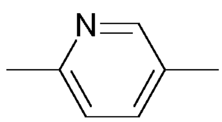 ,

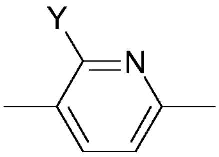, 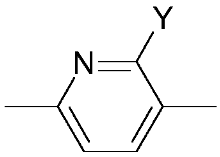, 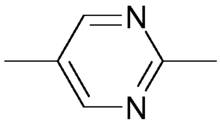,

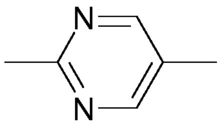, 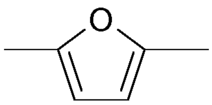, 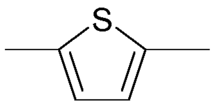,

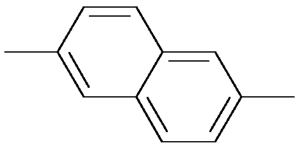, 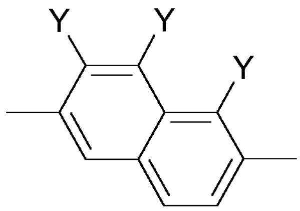,

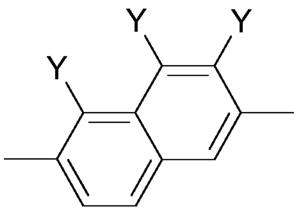, 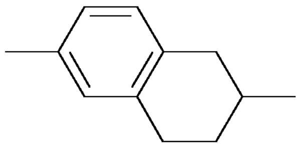,

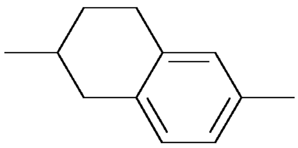, 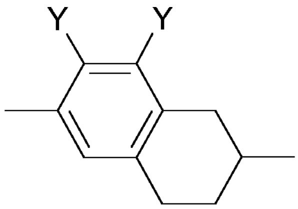,

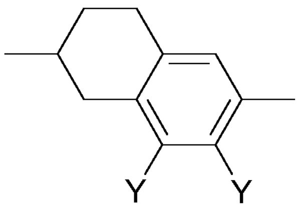, 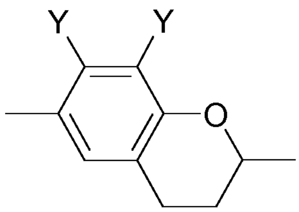,

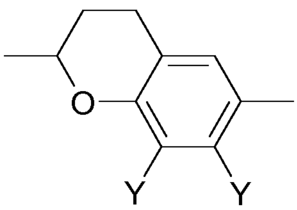, 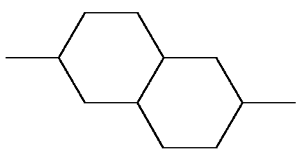, 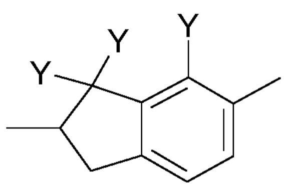,

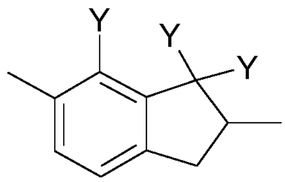, 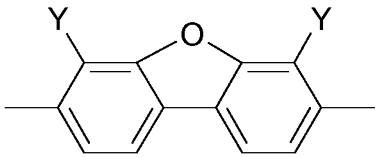,

and

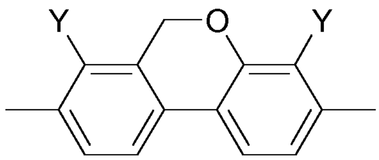,

where

Y is selected on each occurrence, identically or differently, from F, Cl, CN, and alkyl, alkoxy or alkylthio groups having 1 to 10 C atoms, where one or more hydrogen atoms in the alkyl, alkoxy or alkylthio groups may be replaced by F or Cl, and where one or more $CH_2$ groups in the alkyl, alkoxy or alkylthio groups may be replaced by O or S.

**2.** Window according to Claim 1, **characterised in that** the compound V contains precisely one unit selected from units of the formulae (E-1), (E-2) and (E-3).

**3.** Window according to Claim 1 or 2, **characterised in that** the compound V has a structure of the following formula

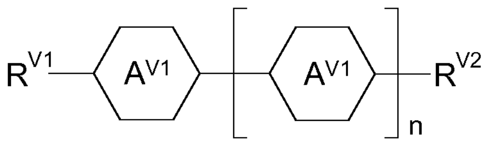

formula (V),

where

$R^{V1}$,$R^{V2}$ on each occurrence, identically or differently, represent an alkyl or alkoxy group having 1 to 10 C atoms or an alkenyl or alkenyloxy group having 2 to 10 C atoms, where one or more hydrogen atoms in the above-mentioned groups may be replaced by F or Cl, and one or more $CH_2$ groups may be replaced by O or S;

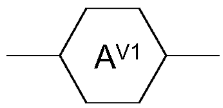

is selected on each occurrence, identically or differently, from the following groups

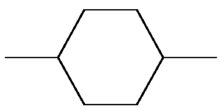, 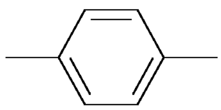, 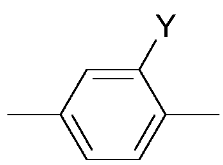,

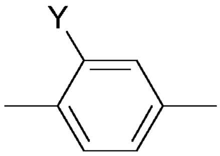 , 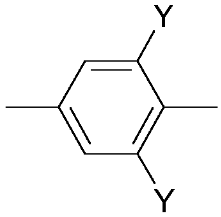 ,

or units of the formula (E-1), (E-2) or (E-3);
Y is selected on each occurrence, identically or differently, from F, Cl, CN, and alkyl, alkoxy or alkylthio groups having 1 to 10 C atoms, where one or more hydrogen atoms in the alkyl, alkoxy or alkylthio groups may be replaced by F or Cl, and where one or more $CH_2$ groups in the alkyl, alkoxy or alkylthio groups may be replaced by O or S;
n is equal to 1, 2 or 3; and

where at least one of the groups

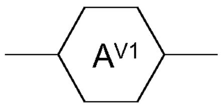

is selected from units of the formula (E-1), (E-2) or (E-3).

**4.** Window according to Claim 3, **characterised in that** $A^{V1}$ in formula (V) is selected on each occurrence, identically or differently, from

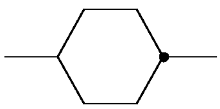 , 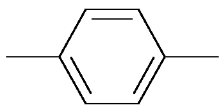

and units of the formulae (E-1-1a), (E-1-2a), (E-1-3a), (E-2-1) and (E-3-1).

**5.** Window according to one or more of Claims 1 to 4, **characterised in that** the liquid-crystalline material has a clearing point of at least 100°C.

**6.** Window according to one or more of Claims 1 to 5, **characterised in that** the liquid-crystalline material has a dielectric anisotropy $\Delta\varepsilon$ of -2 to -10.

**7.** Window according to one or more of Claims 1 to 6, **characterised in that** the liquid-crystalline material has a total proportion of compounds V of at least 40% by weight.

**8.** Window according to one or more of Claims 1 to 7, **characterised in that** the liquid-crystalline material comprises compounds selected from compound(s) V which contain at least one unit of the formula (E-2), and compound(s) of the formula (F-1) in a total proportion of at least 10% by weight.

**9.** Window according to one or more of Claims 1 to 8, **characterised in that** the liquid-crystalline material comprises one or more compounds which conform to the formula (F-2),

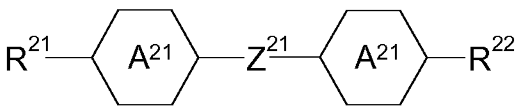 (F-2)

where

$R^{21}$ is defined like $R^{11}$ in Claim 1;
$R^{22}$ is defined like $R^{12}$ in Claim 1;
$Z^{21}$ is defined like $Z^{11}$ in Claim 1; and
$A^{21}$ is defined like $A^{11}$ in Claim 1.

**10.** Window according to one or more of Claims 1 to 9, **characterised in that** the degree of anisotropy R of the dye compounds is greater than 0.4.

**11.** Window according to one or more of Claims 1 to 10, **characterised in that** the dye compounds are selected from azo compounds, anthraquinones, methine compounds, azomethine compounds, merocyanine compounds, naphthoquinones, tetrazines, perylenes, terrylenes, quaterrylenes, higher rylenes, benzothiadiazoles, pyrromethenes and diketopyrrolopyrroles.

**12.** Window according to one or more of Claims 1 to 11, where the device has the following layer sequence, where further layers may additionally be present:

- substrate layer
- electrically conductive transparent layer
- alignment layer
- switching layer comprising the liquid-crystalline material
- alignment layer
- electrically conductive transparent layer
- substrate layer.

**Revendications**

**1.** Fenêtre contenant un dispositif pour réguler le passage de la lumière, dans laquelle le dispositif comprend une couche qui comprend un matériau cristallin liquide qui comprend au moins trois composés de colorant différents ; dans laquelle le matériau cristallin liquide présente un point de clarification d'au moins 95°C, comprend au moins un composé V qui contient au moins une unité qui est sélectionnée parmi les unités des formules (E-1), (E-2) et (E-3)

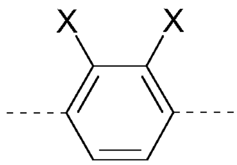

formule (E-1)

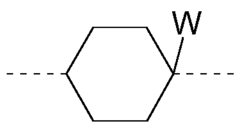

formule (E-2)

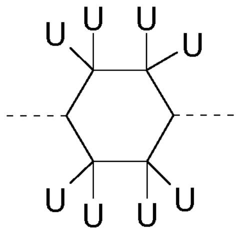

formule (E-3) ;

dans lesquelles

X est sélectionné pour chaque occurrence, de manière identique ou différente, parmi F, Cl, Br, I, -CN, -NCO, -NCS, -SCN, -OCN, -NC, -CNO, -CNS et $N_3$;
W est sélectionné pour chaque occurrence, de manière identique ou différente, parmi F, Cl, Br, I, -CN, -NCO, -NCS, -SCN, -OCN, -NC, -CNO, -CNS et $N_3$;
U est sélectionné pour chaque occurrence, de manière identique ou différente, parmi H, F, Cl, Br, I, CN, -NCO, -NCS, -SCN, -OCN, -NC, -CNO, -CNS, $N_3$, et les groupes alkyle, alcoxy ou alkylthio qui comportent de 1 à 10 atome(s) de C, où un ou plusieurs atome(s) d'hydrogène dans les groupes alkyle, alcoxy ou alkylthio peut/peuvent être remplacé(s) par F ou par Cl, et où un ou plusieurs groupe(s) $CH_2$ dans les groupes alkyle, alcoxy ou alkylthio peut/peuvent être remplacé(s) par O ou par S ;

les lignes en pointillés symbolisent les liaisons sur le reste du composé,
et au moins un groupe U par unité de la formula (E-3) est sélectionné parmi F, Cl, Br, I, CN, -NCO, -NCS, -SCN, -OCN, -NC, -CNO, -CNS et $N_3$,
et un ou plusieurs composé(s) qui est/sont conforme(s) à la formule (F-1)

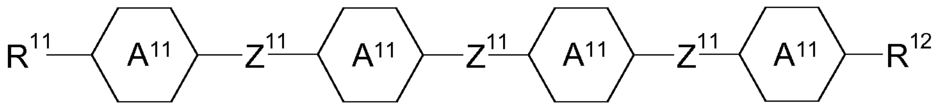 (F-1)

dans laquelle

$R^{11}$, $R^{12}$ représentent pour chaque occurrence, de manière identique ou différente, F, Cl, -CN, -NCS, -SCN, $R^3$-O-CO-, $R^3$-CO-O- ou un groupe alkyle ou alcoxy qui comporte de 1 à 10 atome(s) de C ou un groupe alkényle ou alkényloxy qui comporte de 2 à 10 atomes de C, où un ou plusieurs atome(s) d'hydrogène dans les groupes qui ont été mentionnés ci-avant peut/peuvent être remplacé(s) par F ou par Cl, et un ou plusieurs groupe(s) $CH_2$ peut/peuvent être remplacé(s) par O ou par S ; et
$R^3$ représente pour chaque occurrence, de manière identique ou différente, un groupe alkyle qui comporte de 1 à 10 atome(s) de C, dans lequel un ou plusieurs atome(s) d'hydrogène peut/peuvent être remplacé(s) par F ou par Cl, et dans lequel un ou plusieurs groupe(s) $CH_2$ peut/peuvent être remplacé(s) par O ou par S ;
$Z^{11}$ est sélectionné pour chaque occurrence, de manière identique ou différente, parmi -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$, $-CH_2O-$ et une liaison simple ; et
$A^{11}$ est sélectionné pour chaque occurrence, de manière identique ou différente, parmi les groupes qui suivent

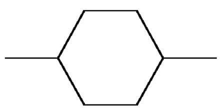 , 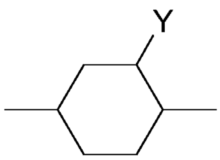 , 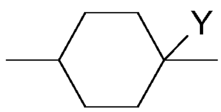 ,

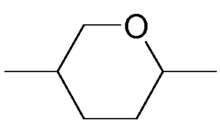 , 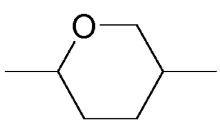 , 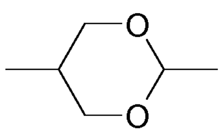 ,

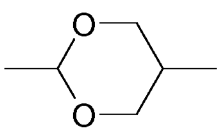 , 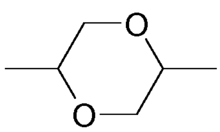 , 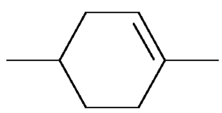 ,

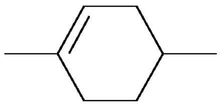 , 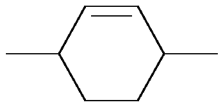 , 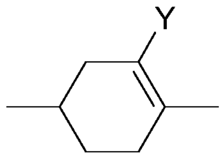 ,

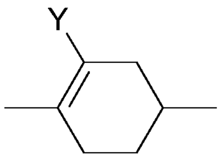 , 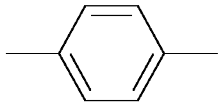 , 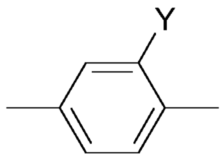 ,

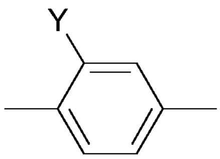 , 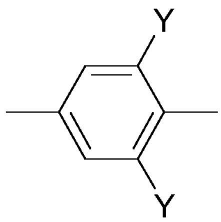 , 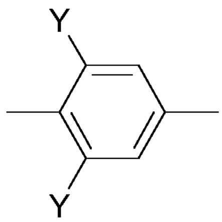 ,

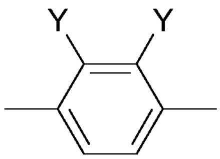 , 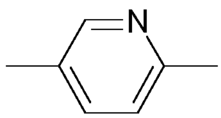 , 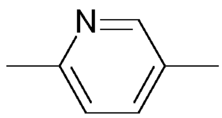 ,

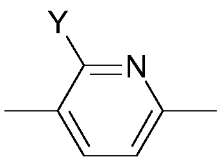 , 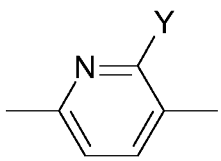 , 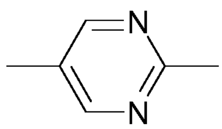 ,

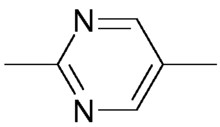 , 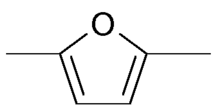 , 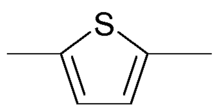 ,

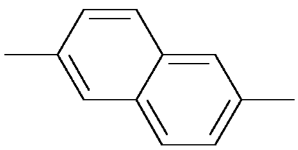 , 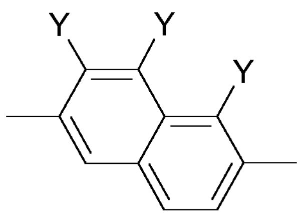 ,

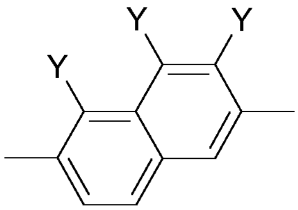
,
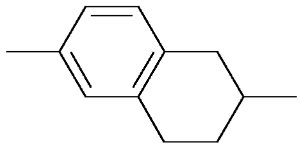
,

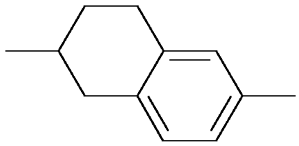
,
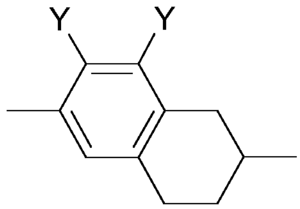
,

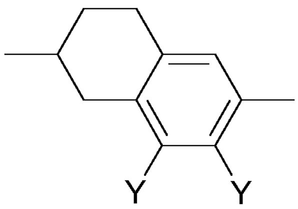
,
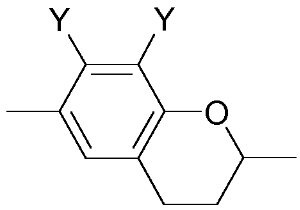
,

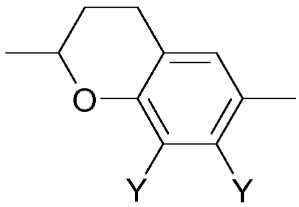
,
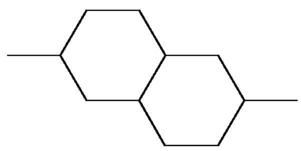
,
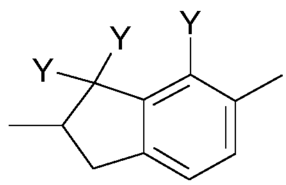
,

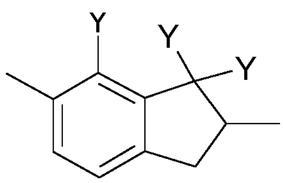
,
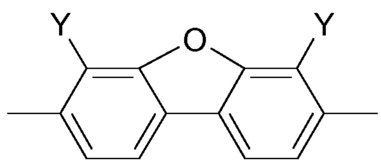
,

et

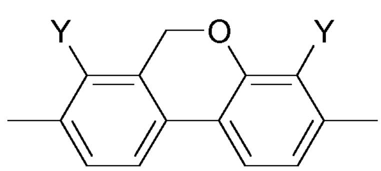
,

dans lesquels

Y est sélectionné pour chaque occurrence, de manière identique ou différente, parmi F, Cl, CN, et les groupes alkyle, alcoxy ou alkylthio qui comportent de 1 à 10 atome(s) de C, dans lesquels un ou plusieurs atome(s) d’hydrogène dans les groupes alkyle, alcoxy ou alkylthio peut/peuvent être remplacé(s) par F ou par Cl, et dans

lesquels un ou plusieurs groupe(s) $CH_2$ dans les groupes alkyle, alcoxy ou alkylthio peut/peuvent être remplacé(s) par O ou par S.

**2.** Fenêtre selon la revendication 1, **caractérisée en ce que** le composé V contient de façon précise une seule unité qui est sélectionnée parmi les unités des formules (E-1), (E-2) et (E-3).

**3.** Fenêtre selon la revendication 1 ou 2, **caractérisée en ce que** le composé V présente une structure de la formule qui suit

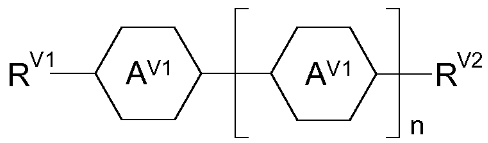

formule (V) ;

dans laquelle

$R^{V1}$, $R^{V2}$ représentent pour chaque occurrence, de manière identique ou différente, un groupe alkyle ou alcoxy qui comporte de 1 à 10 atome(s) de C ou un groupe alkényle ou alkényloxy qui comporte de 2 à 10 atomes de C, où un ou plusieurs atome(s) d'hydrogène dans les groupes qui ont été mentionnés ci-avant peut/peuvent être remplacé(s) par F ou par Cl, et un ou plusieurs groupe(s) $CH_2$ peut/peuvent être remplacé(s) par O ou par S ;

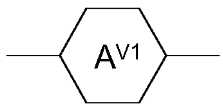

est sélectionné pour chaque occurrence, de manière identique ou différente, parmi les groupes qui suivent :

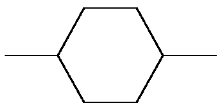 , 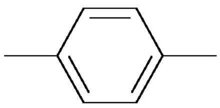 , 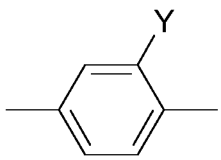 ,

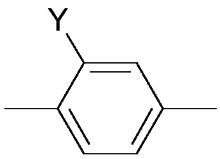 , 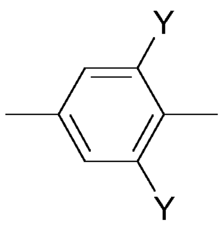 ,

ou les unités de la formule (E-1), (E-2) ou (E-3) ;

Y est sélectionné pour chaque occurrence, de manière identique ou différente, parmi F, Cl, CN, et les groupes alkyle, alcoxy ou alkylthio qui comportent de 1 à 10 atome(s) de C, dans lesquels un ou plusieurs atome(s) d'hydrogène dans les groupes alkyle, alcoxy ou alkylthio peut/peuvent être remplacé(s) par F ou par Cl, et dans lesquels un ou plusieurs groupe(s) $CH_2$ dans les groupes alkyle, alcoxy ou alkylthio peut/peuvent être remplacé(s) par O ou par S ;

n est égal à 1, 2 ou 3 ; et

où au moins l'un des groupes

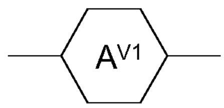

est sélectionné parmi les unités de la formule (E-1), (E-2) ou (E-3).

**4.** Fenêtre selon la revendication 3, **caractérisée en ce que** $A^{V1}$ dans la formule (V) est sélectionné pour chaque occurrence, de manière identique ou différente, parmi

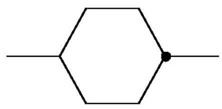

,

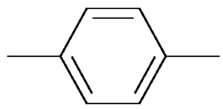

et les unités des formules (E-1-1a), (E-1-2a), (E-1-3a), (E-2-1) et (E-3-1).

**5.** Fenêtre selon une ou plusieurs des revendications 1 à 4, **caractérisée en ce que** le matériau cristallin liquide présente un point de clarté d'au moins 100°C.

**6.** Fenêtre selon une ou plusieurs des revendications 1 à 5, **caractérisée en ce que** le matériau cristallin liquide présente une anisotropie diélectrique $\Delta\varepsilon$ de -2 à -10.

**7.** Fenêtre selon une ou plusieurs des revendications 1 à 6, **caractérisée en ce que** le matériau cristallin liquide présente une proportion totale de composés V d'au moins 40 % en poids.

**8.** Fenêtre selon une ou plusieurs des revendications 1 à 7, **caractérisée en ce que** le matériau cristallin liquide comprend des composés qui sont sélectionnés parmi le/les composé(s) V, lesquels contiennent au moins une unité de la formule (E-2), et parmi le/les composé(s) de la formule (F-1) selon une proportion totale d'au moins 10 % en poids.

**9.** Fenêtre selon une ou plusieurs des revendications 1 à 8, **caractérisée en ce que** le matériau cristallin liquide comprend un ou plusieurs composé(s) qui est/sont conforme(s) à la formule (F-2)

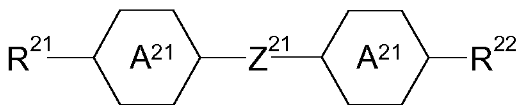

(F-2)

dans laquelle

$R^{21}$ est défini de façon similaire à $R^{11}$ selon la revendication 1 ;
$R^{22}$ est défini de façon similaire à $R^{12}$ selon la revendication 1 ;
$Z^{21}$ est défini de façon similaire à $Z^{11}$ selon la revendication 1 ; et
$A^{21}$ est défini de façon similaire à $A^{11}$ selon la revendication 1.

**10.** Fenêtre selon une ou plusieurs des revendications 1 à 9, **caractérisée en ce que** le degré d'anisotropie R des composés de colorant est supérieur à 0,4.

**11.** Fenêtre selon une ou plusieurs des revendications 1 à 10, **caractérisée en ce que** les composés de colorant sont sélectionnés parmi les composés azo, les anthraquinones, les composés de méthine, les composés d'azométhine, les composés de mérocyanine, les naphtoquinones, les tétrazines, les pérylènes, les terrylènes, les quaterrylènes, les rylènes d'ordre plus élevé, les benzothiadiazoles, les pyrrométhènes et les dicétopyrrolopyrroles.

**12.** Fenêtre selon une ou plusieurs des revendications 1 à 11, dans laquelle le dispositif présente la séquence de couches qui suit, dans laquelle d'autres couches peuvent de façon additionnelle être présentes :

- couche de substrat
- couche transparente électriquement conductrice
- couche d'alignement
- couche de commutation comprenant le matériau cristallin liquide
- couche d'alignement
- couche transparente électriquement conductrice
- couche de substrat.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6033598 A
- CN 101698802
- WO 2009141295 A
- WO 2014090367 A
- WO 2014090373 A
- EP 34832 A
- EP 44893 A
- EP 48583 A
- EP 54217 A
- EP 56492 A
- EP 59036 A
- GB 2065158 A
- GB 2065695 A
- GB 2081736 A
- GB 2082196 A
- GB 2094822 A
- GB 2094825 A
- JP OS55123673 A
- DE 3017877
- DE 3040102
- DE 3115147
- DE 3115762
- DE 3150803
- DE 3201120
- DE 3126108
- DE 3202761
- EP 43904 A
- DE 3123519
- WO 822054 A
- GB 2079770 A
- JP OS5657850 A
- JP OS56104984 B
- US 4308161 A
- US 4308162 A
- US 4340973 A
- EP 60895 A
- EP 68427 A
- WO 821191 A
- DE 3307238
- EP 2166040 A
- US 20110042651 A
- EP 47027 A
- DE 3110960
- EP 698649 A
- EP 13002711 A
- US 7038745 B
- US 6099758 A
- US 20110043732 A
- US 7023602 B
- WO 2012052100 A
- EP 13002445 A


### In der Beschreibung aufgeführte Nicht-Patentliteratur


- **B. BAHADUR.** Liquid Crystals - Applications and Uses. World Scientific Publishing, 1992, vol. 3
- **T. UCHIDA ; C. SHISHIDO ; H. SEKI ; M. WADA.** *Mol. Cryst. Liq. Cryst.,* 1977, vol. 39, 39-52
- **H. SEKI ; C. SHISHIDO ; S. YASUI ; T. UCHIDA.** *Jpn. J. Appl. Phys.,* 1982, vol. 21, 191-192
- Physical Properties of Liquid Crystals. Merck Liquid Crystals. Merck KGaA, November 1997
- **D. S. KLIGER et al.** Polarized Light in Optics and Spectroscopy. Academic Press, 1990